# EUROPEAN PATENT APPLICATION

(11) **EP 4 011 205 A1**
(43) Date of publication of application: **15.06.2022**
(21) Application number: 20212393.1
(22) Date of filing: 08.12.2020
(51) Int. Cl.: A01N 25/10, A01N 25/12, A01P 13/02, A01N 43/84

(54) **MICROPARTICLE COMPOSITIONS COMPRISING TRIFLUDIMOXAZIN**

(71) Applicant: BASF SE, 67056 Ludwigshafen am Rhein (DE)
(72) Inventor: Mertoglu, Murat, 67117 Limburgerhof (DE); Bowe, Steven Joseph, Research Triangle Park, North Carolina 27709 (US); Findley, Douglas, Research Triangle Park, North Carolina 27709 (US); Oschmann, Bernd Dieter, 67056 Ludwigshafen (DE)
(74) Representative: BASF IP Association

(57) **Abstract**

A microparticle composition comprising trifludimoxazin, wherein trifludimoxazin is present in the form of microparticles, which comprise solid trifludimoxazin, which is surrounded or embedded by an aminoplast polymer, which is a polycondensation product of one or more amino compounds and one or more aldehydes.

## Description

The present invention relates to microparticle compositions comprising trifludimoxazin, to a method of their preparation and to the use of these microparticle compositions for controlling undesired vegetation.

### Background of Invention

Trifludimoxazin is the INN common name of the herbicidally active compound 1,5-dimethyl-6-thioxo-3-[2,2,7-trifluoro-3-oxo-4-(prop-2-yn-1-yl)-3,4-dihydro-2H-1,4-benzoxazin-6-yl]-1,3,5-triazinane-2,4-dione.

Trifludimoxazin has been described for the first time in WO 2010/145992. Trifludimoxazin is only sparingly soluble in water.

Trifludimoxazin is a highly active herbicide which efficiently inhibits growth of undesirable vegetation at low application rates, while showing low phytotoxicity for desirable crops.

Herbicides, such as trifludimoxazin, are normally applied in the form of dilute aqueous spray liquors, which are prepared by diluting a concentrate formulation of the herbicide with water. For this purpose, pesticide compounds may be formulated in solid forms, such as wettable powders (WP) and water-dispersible granules (WG), as well as in liquid forms, such as emulsions, emulsifiable concentrates (EC), suspoemulsions (SE) or suspension concentrates (SC). For efficient encapsulation, it is of importance that the formulations can be easily diluted with water and that the dilution remains stable for a certain time without separation of the active ingredient, as this may cause clogging of the spraying nozzles. For ecological reasons it is preferred that the formulation does not contain large amounts of organic solvents, which principally favors solid formulations and aqueous SC formulations.

Despite the aforementioned advantages associated with the usage of SCs, there are a number of problems known to the skilled person which are sometimes encountered with SCs as a result of settling during prolonged storage or storage at elevated temperatures, the resistance of settled particles to re-suspension and the formation of crystalline material upon storage. As a consequence, the formulations may be difficult to handle and the bioefficacy may be inconsistent.

When trying to formulate trifludimoxazin one faces several problems. Trifludimoxazin is capable of existing in different crystalline and non-crystalline modifications, namely amorphous forms, which may undergo conversion into another crystalline form. This conversion may lead to coarsening of the trifludimoxazin particles, in particular when formulated as suspension concentrate. These factors might result in a reduced physical stability of the formulations, an effect that is particularly pronounced when the formulations are stored over prolonged periods of time and/or at elevated temperatures. Said factors may also lead to poor dilution properties as the coarse trifludimoxazin particles are prone to separate from the diluted formulation.
Amorphous and crystalline forms of trifludimoxazin are known inter alia from WO 2015/71087, p. 8, In 1 to p. 12, In 15 where three crystalline firms A, B and C are described.

Although, such formulations are stable, there is a need for higher crop selectivity and increased residual activity. At low application rates, the residual activity of trifludimoxazin may not be sufficient to completely prevent additional undesirable weeds from germinating shortly after it has been applied. At higher application rates, trifludimoxazin provides residual control of broadleaf weeds, however, at high rates sometimes certain crop responses such as stunting, necrotic spotting of the leaves or reduced stand count may be observed.

It is principally known to provide pesticidally active compounds in the form of microcapsule formulations.
Microencapsulation can be principally achieved by coacervation techniques, spray drying, fluidized-bed coating, electrostatic microencapsulation or in-situ polymerization.
These techniques provide active compound particles, wherein the active compound is surrounded by a polymeric wall material.

The most common method for microencapsulation of agrochemical materials is the interfacial polymerization. In this process, a first reactant, e.g. a polyfunctional isocyanate or acid chloride, is dissolved in the liquid active ingredient or a solution thereof, which is then dispersed in water and subjected to polymerization by addition of a polyfunctional compound having a complementary reactivity with regard to the first reactant, e.g. an diamine or diol (see e.g. US 4,107,292, US 5,705,174, US 5,910,314, WO 0027519, EP 8207, US 2004/115280). The polymerization occurring at the interface between the active substance and the aqueous phase completely encloses the fine droplets of active substance in a thin membrane of polyurea or polyamide. However, this method is not suitable for trifludimoxazin due to its low solubility.

A further in-situ polymerization technique includes microencapsulation of liquids by using aminoplasts, such as melamine formaldehyde resins (MF resins) or urea formaldehyde resins (UF resins) or melamine formaldehyde urea resins (MUF resins).
The aminoplast resins are used in the form of their prepolymers or pre-condensates, which are added to an aqueous emulsion of the material to be encapsulated and cured by heating and/or altering the pH of the reaction mixture to effect polymerization of the prepolymers. Thereby, an aqueous suspension of the microcapsules is obtained, where the particles of the encapsulated material are surrounded by or embedded in an aminoplast polymer. A survey of this method is given in Acta Polymerica 40, (1989) No. 5, pp. 325-331 and C.A. Finch, R. Bodmeier, Microencapsulation, Ullmann's Encyclopedia of Industrial Chemistry, 6th Edition, 2001 Electronic Release). Microencapsulation of pesticides using in-situ polymerization of aminoplasts precondensates have been described several times. For example, US 4,557,755 describes the microencapsulation of water-insoluble pesticides by polymerizing an aminoplast pre-condensate, such as a melamine formaldehyde or melamine urea formaldehyde resin in an aqueous suspension of the pesticide compound in the presence of a cationic urea resin. The method is suggested for certain insecticides and fungicides.

US 5,462,915 describes an improved process for microencapsulation of water insoluble pesticides, which comprises adding to a suspension of the pesticide a liquid aminoplast prepolymer and curing the prepolymer at temperatures of above 100°C.
The method was applied for microencapsulation of water-insoluble salts of dicamba. A similar process is known from WO 00/27519, which was applied for microencapsulation of carbofuran. WO 96/03041 describes a microcapsule composition of pesticides, wherein the microcapsules have an outer aminoplast layer and an inner wax coating deposited around pesticide compound.

Modern techniques of microencapsulation include the radical suspension polymerization of water-insoluble acrylate monomers with (meth)acrylic acid and optionally polyfunctional monomers in the presence of an o/w-emulsion of the pesticide compound (see e.g. WO 2012/101070) or the radical emulsion polymerization of an aqueous monomer emulsions, wherein the pesticide is dissolved or suspended in the monomer droplets (see e.g. WO 2005/102044, WO2006/094792, WO 2006/094978). However, considerable amounts of polymer are required, which may exceed the amount of pesticide.

Although microencapsulation may improve the acute toxicity of a pesticide or reduce degradation, it is often difficult to achieve. In particular, aggregation of the pesticide particles during or after encapsulation is the main problem, if one encapsulation method, which may work for a particular pesticide compound, does not necessarily work for another pesticide compound. When trying to encapsulate a solid material in an aqueous suspension of the solid material by an in-situ-polymerization technique, the solid material tends to agglomerate thereby forming large particles of active ingredient particles, which are embedded in the polymer matrix. A thus obtained suspension is usually no longer suitable for agricultural use. It remains a challenge to efficiently encapsulate solid pesticide particles by using small amounts of an encapsulating polymer.

### Summary of Invention

It is an object of the present invention to provide a formulation of trifludimoxazin that is compatible with a broad range of other pesticides, can be applied with a high flexibility with respect to the timing of the application and that shows both high physical and chemical stability over prolonged storage periods while maintaining its biological efficacy. Upon dilution with water, the formulation should give a stable aqueous composition of trifludimoxazin without forming coarse material or a supernatant liquid.
It was surprisingly found that microparticle compositions of solid trifludimoxazin, wherein solid trifludimoxazin is surrounded or embedded by an aminoplast polymer provide for an improved residual activity of trifludimoxazin. Moreover, these microparticle compositions can be simply prepared starting from an aqueous suspension of solid trifludimoxazin.

Surprisingly, the amounts of aminoplast polymer required for efficient encapsulation of trifludimoxazin are quite small and normally significantly lower than the amount of trifludimoxazin, which is encapsulated. Therefore, a first aspect of the invention relates to microparticle compositions, comprising trifludimoxazin, wherein trifludimoxazin is present in the form of microparticles, which comprise solid trifludimoxazin, which is surrounded or embedded by an aminoplast polymer. Like non-encapsulated trifludimoxazin, the microparticle compositions of the present invention provide for high herbicidal activity. Moreover, the microparticle compositions of the present invention provide for improved residual activity of trifludimoxazin. Apart from that, the microparticle compositions of the present invention may provide for better crop-safety.

The microparticle compositions of the present invention provide for both high physical and chemical stability over prolonged storage periods, while maintaining the biological efficacy of trifludimoxazin. Moreover, microparticle compositions of the present invention can be easily formulated. Furthermore, microparticle compositions of the present invention in the form of aqueous suspensions provide for improved tank-mix compatibility, and thus can be readily tank mixed with other formulations of pesticides and do not negatively interact with other formulations regarding their dilution stability.

It was also surprisingly found that solid trifludimoxazin can be efficiently microencapsulated by using aminoplast pre-condensates and performing the process described hereinafter. Therefore, a second aspect of the present invention relates to a process for preparing the microparticle compositions as described herein, which process comprises the following steps:
i) providing an aqueous suspension of solid trifludimoxazin particles;
ii) adding an aminoplast pre-condensate to the aqueous suspension of the trifludimoxazin particles;
iii) effecting the polycondensation of the aminoplast pre-condensate, e.g. by heating the aqueous suspension of step ii) at a pH, where the polycondensation of the aminoplast pre-condensate will occur at the reaction temperature.

This process results in a stable aqueous suspension, wherein trifludimoxazin is present in the form of microparticles, which comprise solid trifludimoxazin, which is surrounded or embedded by an aminoplast polymer. From this, the microparticles can be isolated, if necessary. Surprisingly, this process does not result in significant agglomeration of the trifludimoxazin particles, as was observed for other in-situ polymerization techniques.

### Detailed Description of Invention

In the microparticle composition of the invention trifludimoxazin is present in the form of microparticles, which comprise solid trifludimoxazin as a core material.

In one embodiment, microparticles and compositions of the invention comprise trifludimoxazin in amorphous form.

In one embodiment, microparticles and compositions of the invention comprise trifludimoxazin in crystalline form A that is orthorhombic and has a melting point from 170° to 180 °C (melting points meaning the onset of the melting peak, differential scanning calorimetry: DSC, aluminum closed and vented cup, nitrogen flow 150 ml/min, heating rate 5 K/min). When reference is made herein to crystalline forms of trifludimoxazin, this shall mean the forms as identified in WO 2015/71087, p. 8, In 1 to p. 12, In 15.

The form A of trifludimoxazin can be identified by X-ray powder diffractometry on the basis of its diffraction diagram. Thus an X-ray powder diffraction diagram of form A recorded using Cu-Ka radiation (1.54178 Å) at 25 °C shows at least 3, often at least 5, in particular at least 7, and especially all of the reflections quoted in the following table as 2θ values or as interplanar spacings d:

| 2θ values | d [Å] |
|---|---|
| 8,6±0,2° | 10,28 |
| 10,9±0,2° | 8,16 |
| 12,9±0,2° | 6,86 |
| 13,4±0,2° | 6,63 |
| 14,0±0,2° | 6,33 |
| 14,4±0,2° | 6,14 |
| 15,5±0,2° | 5,72 |
| 16,9±0,2° | 5,25 |
| 18,2±0,2° | 4,88 |
| 20,5±0,2° | 4,33 |

In one embodiment, microparticles and compositions of the invention comprise trifludimoxazin in crystalline form B that has a melting point of 200°C to 210 °C.
The form B can be identified by X-ray powder diffractometry on the basis of its diffraction diagram. Thus an X-ray powder diffraction diagram of form B recorded using Cu-Ka radiation (1.54178 Å) at 25 °C shows at least 3, often at least 5, in particular at least 7, and especially all of the reflections quoted in the following table as 2θ values or as interplanar spacings d:

| 2θ values | d [Å] |
|---|---|
| 9,0±0,2° | 9,85 |
| 10,9±0,2° | 8,10 |
| 11,5±0,2° | 7,69 |
| 12,9±0,2° | 6,87 |
| 13,5±0,2° | 6,56 |
| 14,9±0,2° | 5,96 |

| 2θ values | d [Å] |
|---|---|
| 16,4±0,2° | 5,42 |
| 16,5±0,2° | 5,36 |
| 17,5±0,2° | 5,06 |
| 20,3±0,2° | 4,39 |

In one embodiment, microparticles and compositions of the invention comprise trifludimoxazin in crystalline form C. Form C could not be obtained in pure form. In the mixture of forms A, B and C, form C can be identified by X-ray powder diffractometry on the basis of its diffraction diagram. Thus an X-ray powder diffraction diagram recorded using Cu-Ka radiation (1.54178 Å) at 25°C shows at least 3, often at least 5, and especially all of the reflections quoted in the following table as 2θ values or as interplanar spacings d:

| 2θ values | d [Å] |
|---|---|
| 7,6±0,2° | 11,64 |
| 9,6±0,2° | 9,17 |
| 11,8±0,2° | 7,48 |
| 12,4±0,2° | 7,11 |
| 15,2±0,2° | 5,81 |
| 15,9±0,2° | 5,57 |
| 16,1±0,2° | 5,52 |
| 19,1±0,2° | 4,64 |

In one embodiment, microparticles and compositions of the invention comprise mixtures of trifludimoxazin in crystalline form A, B and/or C.
In one embodiment, microparticles and compositions of the invention comprise mixtures of trifludimoxazin in crystalline form A, B and C.

In the microparticles solid trifludimoxazin forms the core material which is surrounded or embedded by at least one aminoplast polymer. In this context, it has to be understood that the aminoplast polymers may form a regular or irregular shell which surrounds or embeds the core material. The microparticles may have a single solid core formed by the trifludimoxazin and a shell or matrix formed by the aminoplast polymer. It may, of course, also be possible that the microparticles have a "domain structure" which comprises a certain number of solid trifludimoxazin particles, e.g. 3 to 1000 or 10 to 500 particles, of amorphous or crystalline trifludimoxazin, which are embedded by the aminoplast polymer.

It is not necessary that the aminoplast polymer forms a completely closed shell.
Frequently, however, the shell will completely surround the core material like a membrane, thereby forming a barrier between the core material and the surrounding material.

Aminoplast polymers, which are also termed amino resins, amino condensation resins or amido resins are polycondensation products of one or more aldehydes, such as formaldehyde, acetaldehyde, propanal, glyoxal or glutaraldehyde, with one or more amino compounds having usually at least two primary amino groups, such as urea, thiourea, melamine, which may be wholly or partially etherified, cyanoguanamine (= dicyandiamide) and benzoguanamine. Examples of aminoplast polymers are polycondensates of melamine and formaldehyde (melamine-formaldehyde resins or MF resins), including resins derived from wholly or partially etherified melamine formaldehyde condensates, urea-formaldehyde resins (UF resins), thiourea formaldehyde resins (TUF resins), polycondensates of melamine, urea and formaldehyde (MUF resins), including resins derived from wholly or partially etherified melamine-urea-formaldehyde condensates, polycondensates of melamine, thiourea and formaldehyde (MTUF resins, including resins derived from wholly or partially etherified melamine-thiourea-formaldehyde condensates, urea-glutaraldehyde resins, benzoguanamine-formaldehyde polycondensates, dicyandiamide formaldehyde polycondensates and urea-glyoxal polycondensates. Suitable aminoplast polymers for microencapsulation are known and can be found, inter alia, in Kirk-Othmer, Encyclopedia of Chemical Technology, 3rd edition, Vol. 2, pp. 440-469, the prior art cited in the introductory part, US 4,918,317, EP 26914, EP 218887, EP 319337, EP 383,337, EP 415273, DE 19833347, DE 19835114 and WO 01/51197. In UF and TUF resins, the molar ratios of urea or thiourea to formaldehyde are generally in the range from 1:0.8 to 1:4, in particular from 1:1.5 to 1:4, especially from 1:2 to 1:3.5. If glutaraldehyde is used instead of formaldehyde, the molar ratios of urea or thiourea to glutaraldehyde may in particular be in the range from 1:1.2 to 1:3, especially in the range from 1:1.5 to 1:2.5.

In MF and MUF resins, the molar ratios of melamine to formaldehyde are generally in the range from 1:1.5 to 1:10, in particular from 1:3 to 1:8 preferably 1:4 to 1:6.
In MUF and MTUF resins, the molar ratios of melamine + urea or thiourea to formaldehyde are generally in the range from 1:0.8 to 1:9, in particular from 1:2 to 1:8; preferably 1:3 to 1:6. The molar ratio of urea or thiourea to melamine may be in the range from 50:1 to 1:100 and in particular from 30:1 to 1:30.
In the preparation of the aforementioned aminoplast resins, the pre-condensates may be used in the form of etherified pre-condensates of amino compound and aldehyde. In these etherified pre-condensates the methylol groups formed by the reaction of the amino groups with formaldehyde with an alkanol or an alkandiol, in particular with a C1-C4-alkanol, such as methanol, ethanol, n-propanol or n-butanol, in particular methanol, or a C2-C4-alkandiol, such as ethylene glycol. The degree of etherification of these resins can be adjusted by the molar ratio of amino groups to alkanol which is typically in the range from 10:1 to 1:10, preferably in the range from 2:1 to 1:5.

It was surprisingly found that the crop selectivity and/or the phytoxicity profile of formulations of the invention is improved when the amount of aminoplast polymer material in the formulation is 10 wt% of higher, based on the total amount of trifludimoxazin and aminoplast polymers present in the formulation. Thus, in one preferred embodiment, the amount of aminoplast polymer material in the formulation ins from 10 to 40 wt%, more preferably 12 to 38, or 12 to 30 wt%, in each case based on the total amount of trifludimoxazin and aminoplast polymers present in the formulation.
The aminoplast polymer material, which surrounds or embeds the solid trifludimoxazin, is most preferably selected from the group consisting of melamine-formaldehyde resins, including melamine-formaldehyde resins derived from wholly or partially etherified melamine-formaldehyde condensates, and urea-formaldehyde resins and mixtures thereof. Especially, the aminoplast polymer material, which surrounds or embeds the solid trifludimoxazin, is a melamine-formaldehyde resin, in particular a melamine formaldehyde resin, which is derived from wholly or partially etherified melamine formaldehyde condensates, which may contain small amount, e.g. 1 to 20 mol.-%, based on melamine, of urea.

In the microparticle compositions of the invention, the amount of aminoplast polymer material, which surround or embed the solid trifludimoxazin, will generally not exceed the amount of trifludimoxazin contained in the composition and is preferably at most 40 % by weight, in particular at most 35 % by weight and especially at most 30 % by weight or at most 25 % by weight, based on the total amount of trifludimoxazin and aminoplast polymers. The amount of aminoplast polymer material, which surround or embed the solid trifludimoxazin, is preferably from 0.5 to 40% by weight, in particular from 1 to 35% by weight and especially from 5 to 25% by weight, based on the total capsule weight, i.e. based on the total amount of trifludimoxazin and aminoplast polymers. The polymer material of the microparticle composition of the invention, which surrounds or embeds the solid trifludimoxazin, may comprise further water-insoluble polymers. However, the amount of such polymers will generally not exceed 20% of the total amount of encapsulating polymer material and will preferably not exceed 10% by weight of the total amount of polymer material, which surrounds or embeds the solid trifludimoxazin.

The solid trifludimoxazin, which is surrounded or embedded by at least one aminoplast polymer, may be any known form of solid trifludimoxazin, including amorphous trifludimoxazin and in particular crystalline trifludimoxazin, e.g. the crystalline anhydrate of trifludimoxazin as described in WO 08/043835 or a crystalline hydrate of trifludimoxazin as described in WO 08/043836.

In addition to the solid trifludimoxazin, the core material of the microparticles may contain an oil, e.g. a hydrocarbon solvent, such an aromatic, paraffinic or isoparaffinic hydrocarbon, having preferably a boiling point above 100°C, a vegetable oil, such as corn oil, rapeseed oil, or a fatty acid ester, such as C1-C10-alkylester of a C10-C22-fatty acid, in particular methyl or ethyl esters of vegetable oils. such as rapeseed oil methyl ester or corn oil methyl ester. In a particular embodiment, the core material does not contain an oil as defined herein or less than 10% by weight, based on the weight of the core material, of an oil. In particular, the core does not contain an oil.

In addition to the solid trifludimoxazin, the core material of the microparticles may further contain a further pesticide compound, in particular a herbicide compound or a safener, having preferably a reduced water solubility, which generally does not exceed 10 g/l, in particular 5 g/l or even 1 g/l at 25°C (deionized water). In particular, solid trifludimoxazin makes up at least 80%, in particular at least 90% of the pesticides contained in the microparticles.

The microparticles of the present invention are discrete particles having usually a particle size of less than 50 µm. Preferably, the particle size of the microparticles, i.e. their diameter, will in general not exceed 40 µm, preferably not exceed 35 µm and in particular not exceed 30 µm. The particle size given is the so called d90-value, which has to be understood as the value that is not exceeded by the diameters of at least 90% by weight of the microparticles. The microparticles have an average particle diameter, herein also termed d50-value, ranging from 1 to 25 µm, in particular from 1.5 to 20 µm, especially from 2 to 10 µm. The d50-value is defined as the value that is above the diameters of 50% by weight of the particles and below the diameters of 50% by weight of the particles. The d90 value as well as the d50 value can be calculated from the particle size distribution of the microparticles. Generally, the d10-value of the particles, i.e. the value of diameters which at least 10% by weight of the microparticles exceed, will be at least 0.5 µm and may e.g. be in the range from 0.5 µm 10 µm, in particular from 1 to 5 µm. The particle size distribution of the microparticles (i.e. the diameters) can be determined by conventional methods such as dynamic or static light scattering of an aqueous dispersion of the microparticle composition, e.g. at 25°C and a concentration in the range of 0.1 to 1% by weight.

In a preferred embodiment of the invention, the microparticle compositions according to the invention contains at least one anionic polymeric surface-active substance A (also referred to as anionic surfactant A or surfactant A), hereinafter also referred to as anionic polymeric surfactant A, which contains a plurality of anionic groups per molecule, such as carboxylate groups, sulfonate groups, phosphonate groups, sulfate groups and/or phosphate groups.

Preferably, the anionic groups are selected from sulfonate groups. Examples for polymeric surfactants A include the surfactants of the following groups A.1 to A.3, including the salts thereof:
A.1 lignin based sulfonic acids, such as lignosulfonic acid, ethoxylated lignosulfonic acid or oxidized lignins;
A.2 arylsulfonic acid formaldehyde condensates and arylsulfonic acid formaldehyde urea condensates, such as naphthalene sulfonic acid formaldehyde condensates, phenol sulfonic acid formaldehyde condensates, cresol sulfonic acid formaldehyde condensates etc.;
A.3 and homo- or copolymers of monoethylenically unsaturated monomers M1 having a sulfonic acid group optionally with one or more comonomers M2 different from monomers M1.

The anionic groups in these anionic polymeric surfactants may be partially or fully neutralized. Suitable counter ions are alkali metal ions, such as sodium, potassium, earth alkaline ions such as magnesium or calcium, and ammonium. In case of anionic polymeric surfactants having a sulfonate group, the anionic groups are preferably at least partly neutralized.

The polymeric surfactants are in one embodiment selected from groups A.2 and A.3, especially from group A.3.
In one embodiment, the polymeric surfactant A.3 is selected from homo- and copolymers made of
i) at least one monoethylenically unsaturated monomer M1 having a sulfonic acid group, such as vinylsulfonic acid, allylsulfonic acid, styrene sulfonic acid, vinyltoluene sulfonic acid, (meth)acrylate monomers having a sulfonic acid group, such as 2-acryloxyethylsulfonic acid, 2-acryloxypropylsulfonic or 4-acryloxybutylsulfonic acid, and (meth)acrylamide monomer having a sulfonic acid group, such as 2-acrylamidoethylsulfonic acid, 2-acrylamidopropylsulfonic acid or 2-acrylamido-2-methylpropane sulfonic acid
ii) and optionally one or more monoethylenically unsaturated comonomers M2 different from monomers M1, such as styrene, C1-C4-alkylacrylates, C1-C4-alkylmethacrylates, acrylamide, methacrylamide, acrylic acid, methacrylic acid, C1-C4-alkylacrylates, C1-C4-alkylmethacrylates.

In particular, groups of embodiments, the polymeric surfactant A comprises or is selected from homo- and copolymers of group A.3, in particular from homo- and copolymers made of
i) monomers M1, which are selected from (meth)acrylate monomers having a sulfonic acid group, such as 2-acryloxyethylsulfonic acid, 2-acryloxypropylsulfonic or 4-acryloxybutylsulfonic acid, and (meth)acrylamide monomer having a sulfonic acid group, such as 2-acrylamidoethylsulfonic acid, 2-acrylamidopropylsulfonic acid or 2-acrylamido-2-methylpropane sulfonic acid,
ii) and optionally one or more monoethylenically unsaturated comonomers M2 different from monomers M1, such as styrene, C1-C4-alkylacrylates, C1-C4- alkylmethacrylates, acrylamide, methacrylamide, acrylic acid, methacrylic acid, C1-C4-alkylacrylates, C1-C4-alkylmethacrylates.
Especially, the polymeric surfactant A.3 comprises or is selected from homo- and copolymers of
i) monomers M1, which is 2-acrylamido-2-methylpropane sulfonic acid,
ii) and optionally one or more monoethylenically unsaturated comonomers M2 different from monomers M1, such as styrene, C1-C4-alkylacrylates, C1-C4-alkylmethacrylates, acrylamide, methacrylamide, acrylic acid, methacrylic acid, C1-C4-alkylacrylates, C1-C4-alkylmethacrylates.

In these preferred, particular preferred or especially preferred polymeric surfactants A.3, the amount of monomers M1 is preferably at least 50% by weight, based on the total amount of monomers forming the polymeric surfactant. Even more preferred are polymeric surfactants A, which are homo- or copolymers of monomers M1, wherein the amount of monomers M1 is at least 90% by weight, based on the total amount of monomers forming the polymeric surfactant.

These polymers are known, e.g. from commercially available under the tradenames Lupasol S and Lupasol PA 140.

In another group of embodiments, the polymeric surfactant A comprises or is selected from surfactants of group A.2, i.e. arylsulfonic acid formaldehyde condensates and arylsulfonic acid formaldehyde urea condensates, in particular from naphthalene sulfonic acid formaldehyde condensates.

In one preferred embodiment, said at least one anionic polymeric surface-active substance A is from group A,1 and is a lignin based sulfonic acid, wherein said lignosulfonic acid has an average molar weight MW of at least 10,000 Da and has a degree of sulfonation from 1.0 to 2.5 mol per kilogram of said lignosulfonic acid.

The average molar weight MW of said lignin based sulfonic acid as applied herein is determined by gel permeation chromatography according to DIN 55672-3.

The degree of sulfonation said lignin based sulfonic acid as applied herein is calculated from the sulfur content of said lignin based sulfonic acid as determined by atomic emission spectroscopy, from which the content of sulfate (determined according to DIN 38405-D5-2) is being subtracted.

Preferred lignin based sulfonic acids, are lignosulfonic acid, ethoxylated lignosulfonic acid or oxidized lignins,

In one embodiment, the microparticle compositions according to the invention contain at least one anionic polymeric surface-active substance A.1 in combination with at least one anionic polymeric surface-active substance A.3.
In one embodiment the microparticle compositions according to the invention contains at least one anionic polymeric surface-active substance A.1 in combination with at least one anionic polymeric surface-active substance A.2.

The amount of the anionic polymeric surfactant A in the composition is preferably from 0.1 to 50% by weight, in particular from 2 to 40% by weight and most preferred from 3 to 30% by weight, based on the total amount of trifludimoxazin and aminoplast polymer.

It was found beneficial, if the polymeric surfactant A is combined with one or more further anionic surfactants B different therefrom, which provide for the stabilization of an aqueous formulation comprising the microparticles.
Suitable anionic surface-active compounds B are surfactants having one anionic group, which is selected from phosphate or phosphonate groups and sulfate or sulfonate groups, the latter compounds being preferred. These surfactants B will usually be included into the microparticle composition in the form of their salts, in particular the sodium, potassium or ammonium salts. Examples of anionic surfactants B include the salts of alkyl sulfonates, alkyl sulfates, alkyl phosphates, semi-esters of alkoxylated alkanols with sulfuric acid or phosphoric acid, alkylarylsulfonates, alkylaryl phosphates, semi-esters of alkoxylated alkylphenols with sulfuric acid or phosphoric acid and semi-esters of alkoxylated mono-, di- or tristyrylphenols with sulfuric acid or phosphoric acid. Amongst these anionic surfactants B, those of the formula (I) are preferred:

R-(O-A)m-O-X (I)

wherein
R is a hydrocarbon radical having from 8 to 40 carbon atoms and preferably from 12 to 30 carbon atoms and optionally one oxygen atom;
A is independently from one another 1,2-ethylene, 1,2-propylene or 1,3-propylene, especially 1,2-ethylene;
m is from 0 to 50, preferably from 0 to 30 and especially preferred from 0 to 20; and
X is SO₃M or PO₃M₂ with M being selected from H, alkaline metal ions, such as K and Na, alkaline earth metal ions, such as ½ Ca and ½ Mg and ammonium.
Preferably, M is an alkaline metal ion and especially sodium.

Examples of suitable hydrocarbon radicals R having from 8 to 40 carbon atoms are alkyl having from 8 to 40 and preferably from 12 to 30 carbon atoms, phenyl, which may be substituted with one or two alkyl radicals having from 4 to 20 carbon atoms, phenyl, which is substituted with a phenoxy radical, wherein phenyl and/or phenoxy may contain an alkyl radical having from 4 to 20 carbon atoms, tristyrylphenyl radical etc. In a preferred embodiment of the present invention the radical R in formula I is a tristyrylphenyl radical.
Preference is given to anionic surfactants B which are of the formula (I), wherein R, m and X have the following meanings:
R is alkyl having from 8 to 30, in particular from 10 to 20 carbon atoms,
m is 0,
X is SO₃M with m being selected from alkaline metal ions, such as K and Na, alkaline earth metal ions, such as ½ Ca and ½ Mg and ammonium. Preferably, M is an alkaline metal and especially sodium.

If present, the amount of anionic surfactant B, in particular the surface-active compound of the formula (I), is preferably from 0.1 to 10% by weight, in particular from 0.3 to 7% by weight and most preferred from 0.5 to 5% by weight, based on the total amount of trifludimoxazin and aminoplast polymer. If present, the amount of anionic surfactant B, in particular the surface-active compound of the formula (I), is preferably chosen such that the weight ratio of anionic polymeric surfactant A to anionic surfactant B is from 1:1 to 20:1 in particular from 2:1 to 10:1.

The compositions according to the invention may also contain a nonionic surface-active compound (nonionic surfactant). Preferred nonionic surfactants include the neutral surface-active compounds of the formula (II),

R'-(O-B)ₙ-OH (II)

wherein
R' is a hydrocarbon radical having from 8 to 40 and more preferably from 12 to 30 carbon atoms and optionally one oxygen atom,
B is C₂-C₄-alkane-1,2-diyl, such as 1,2-ethylene, 1,2-propylene or 1,2-butylene or a combination thereof and more preferred 1,2-ethylene or a combination thereof with 1,2-propylene, and
n is from 3 to 100, preferably from 4 to 50 and more preferred from 5 to 40.

Preferred nonionic surfactants include block copolymers of ethylene oxide (EO) and propylene oxide (PO). Such block copolymers can for example have the structure R-(EO)x-(PO)y-(EO)z, with R being H or a C₄ to C₃₀ alkyl rest and x, y, z independently being numbers from 2 to 100.

Examples of suitable hydrocarbon radials R' include the radicals mentioned for R. In a preferred embodiment of the invention the radical R' is a phenyl radical being substituted with one C4-C18-alkyl group.
If present, the amount of nonionic surfactant, in particular the surface-active compound of the formula (II), is preferably from 1 to 150 g/L, in particular from 2 to 60 g/L in the final formulation. In one particular embodiment of the invention, the composition does not contain nonionic surfactant or less than 1% by weight of nonionic surfactant, in particular less than 0.5% by weight of nonionic surfactant, based on the total amount of trifludimoxazin and aminoplast polymer.
In particular groups of embodiments, the microparticle composition is in the form of an aqueous suspension. Such a suspension contains the microparticles of solid trifludimoxazin as a disperse phase, and an aqueous medium as the continuous phase.
The aqueous suspension may be obtained by the process for preparing the microparticle composition as described herein. It may also be obtained by re-dispersing a solid microparticle composition as described herein in an aqueous medium.

The term "aqueous medium" stands for the liquid phase of the composition and comprises an aqueous solvent and optionally compounds dissolved therein, e.g. surfactants as mentioned above, and if present, conventional one or more conventional formulation additives, such as thickeners or biocides. The aqueous solvent of the aqueous suspension is either water or a mixture thereof with a water-miscible organic solvent, such as C1-C4-alkanols, e.g. methanol, ethanol, n-propanol, isopropanol, n-butanol, 2-butanol, isobutanol, or tert. butanol, C2-C5-alkanediols and C3-C8- alkanetriols, preferably from the group consisting of ethylene glycol, 1,2-propanediol, 1,3-propanediol, glycerol and 1,4-butanediol. Generally, the amount of water in the aqueous solvent is at least 50% by weight, in particular at least 80% by weight or at least 90 % by weight, based on the aqueous solvent. The aqueous solvent may consist mainly of water, i.e. water makes up at least 95% by weight of the total amount of solvent present in the suspension. The aqueous solvent may also be a mixture of the aforementioned water-miscible organic solvent and water. In the latter case, the weight ratio of water to water-miscible organic solvent in the aqueous solvent preferably is in the range of from 99:1 to 1:1; more preferably in the range of from 50:1 to 3:1; and most preferably in the range of from 20:1 to 4:1. Expressed differently the amount of organic solvent may be from 1 to 50% by weight, more preferably from 2 to 25% by weight, and most preferably from 5 to 20% by weight, based on the total weight of the aqueous solvent.

The aqueous suspension will usually contain the microparticles in an amount of at least 5% by weight and the amount may be as high as 50% by weight or even higher, in each case based on the total weight of the aqueous suspension and calculated as the total amount of aminoplast-polymer and trifludimoxazin. Frequently, the aqueous suspension will contain the microparticles in an amount from 10 to 45% by weight, in particular from 20 to 40% by weight, in each case based on the total weight of the aqueous suspension and calculated as the total amount of aminoplast-polymer and trifludimoxazin. The concentration of trifludimoxazin in the aqueous suspension will frequently be in the range from 5 to 40% by weight, in particular from 15 to 30% by weight, based on the total weight of the aqueous suspension.

If present, the concentration of the polymeric anionic surfactant A in the aqueous suspension will frequently be in the range from 0.1 to 15% by weight, in particular from 0.2 to 6% by weight, based on the total weight of the aqueous suspension of the microparticles.

If present, the concentration of the anionic surfactant B in the aqueous suspension will frequently be in the range from 0.1 to 15% by weight, in particular from 0.2 to 6% by weight, based on the total weight of the aqueous suspension of the microparticles.

The aqueous compositions according to the invention may also comprise customary formulation auxiliaries, such as viscosity-modifying additives (thickeners), antifoam agents, preservatives, buffers, inorganic dispersants, etc., which are usually employed in aqueous formulations of herbicides. Such auxiliaries may be incorporated into the aqueous suspension after step iii) of the preparation process described herein has been carried out. The amount of additives will generally not exceed 10% by weight, in particular 5% by weight of the total weight of the aqueous suspension. Suitable inorganic dispersants, also termed anticaking agents, for preventing agglutination of the microparticles, are silica (such as, for example Sipernat^{®} 22 from Degussa), alumina, calcium carbonate and the like. In the context of the present invention silica is a preferred inorganic dispersant. The concentration of inorganic dispersants in the final suspension will generally not exceed 2% by weight, based on the total weight of the final suspension, and, if present, it is preferably in the range from 0.01 to 2% by weight, in particular from 0.02 to 1.5% by weight and especially from 0.1 to 1% by weight, based on the total weight of the final formulation.

Suitable thickeners are compounds which affect the flow behavior of the suspension concentrate and may assist in stabilizing the aqueous suspension of the microparticles against caking. Mention may be made, in this connection, for example, of commercial thickeners based on polysaccharides, such as methylcellulose, carboxymethylcellulose, hydroxypropyl cellulose (Klucel^{®} grades), Xanthan Gum (commercially available e.g. as Kelzan^{®} grades from Kelco or Rhodopol^{®} grades from Rhodia), synthetic polymers, such as acrylic acid polymers (Carbopol^{®} grades), polyvinyl alcohol (e.g. Mowiol^{®} and Poval^{®} grades from Kuraray) or polyvinyl pyrrolones, silicic acid or phyllosilicates, such as montmorillonite and bentonites, which may be hydrophobized, (commercially available as Attaclay^{®} grades and Attaflow^{®} grades from BASF SE; or as Veegum^{®} grades and Van Gel^{®} grades from R.T. Vanderbilt). In the context of the present invention, Xanthan Gum is a preferred thickener. The concentration of thickeners in the aqueous suspension will generally not exceed 2% by weight, based on the total weight of the aqueous suspension, and is preferably in the range from 0.01 to 2% by weight, in particular from 0.02 to 1.5% by weight and especially from 0.1 to 1% by weight, based on the total weight of the aqueous suspension or the final formulation, respectively.

Antifoam agents suitable for the compositions according to the invention are, for example, silicone emulsions (such as, for example, Silicone SRE-PFL from Wacker or Rhodorsil^{®} from Bluestar Silicones), polysiloxanes and modified polysiloxanes including polysiloxane blockpolymers such as FoamStar^{®} SI and FoamStar^{®} ST products of BASF SE, long-chain alcohols, fatty acids, organofluorine compounds and mixtures thereof.

Suitable preservatives to prevent microbial spoiling of the compositions of the invention include formaldehyde, alkyl esters of p-hydroxybenzoic acid, sodium benzoate, 2-bromo-2-nitropropane-1,3-diol, o-phenylphenol, thiazolinones, such as benzisothiazolinone, 5-chloro-2-methyl-4-isothiazolinone, pentachlorophenol, 2,4-dichlorobenzyl alcohol and mixtures thereof. Commercially available preservatives that are based on isothiazolinones are for example marketed under the trademarks Proxel^{®} (Arch Chemical), Acticide^{®} MBS (Thor Chemie) and Kathon^{®} MK (Rohm & Haas).
If appropriate, the compositions according to the invention, in particular the aqueous suspensions, may comprise buffers to regulate the pH. Examples of buffers are alkali metal salts of weak inorganic or organic acids such as, for example, phosphoric acid, boric acid, acetic acid, propionic acid, citric acid, fumaric acid, tartaric acid, oxalic acid and succinic acid.

In addition, the compositions according to the invention, in particular the aqueous suspensions, can be formulated with conventional binders, for example aqueous polymer dispersions, water-soluble resins, for example water-soluble alkyd resins, or waxes.

The compositions of the invention may also contain one or more adjuvants. Suitable adjuvants are known to skilled persons and include surfactants, crop oil concentrates, spreader-stickers, wetting agents, and penetrants. In other particular groups of embodiments, the microparticle composition is in the form of solid composition. Such a solid composition contains the microparticles of solid trifludimoxazin, optionally one or more surfactants, in particular the polymeric surfactant A and optionally the anionic surfactant B, and optionally an inert solid carrier material. The solid compositions may e.g. be redispersible powders, water-dispersible granules wettable powders and the like.

Solid carriers include e.g. mineral earths, such as silicas, silica gels, silicates, talc, kaolin, lime stone, lime, chalk, bole, loess, clay, dolomite, diatomaceous earth, calcium sulfate, magnesium sulfate, magnesium oxide, ground synthetic materials, fertilizers such as ammonium sulfate, ammonium phosphate, ammonium nitrate, ureas, and products of vegetable origin, such as cereal meal, tree bark meal, wood meal and nutshell meal, cellulose powders, or other solid carriers.
The solid compositions according to the invention may also comprise customary formulation auxiliaries, such as antifoam agents, preservatives, buffers, inorganic dispersants, etc., which are usually employed in solid formulations of herbicides. Such auxiliaries may be incorporated into the solid formulation at any conventional stage of their preparation process. The amount of additives will generally not exceed 10% by weight, in particular 5% by weight of the total weight of the solid composition.

Another embodiment of the invention is a method for producing the composition of containing trifludimoxazin containing microparticles as described above which comprises the following steps:
i) providing an aqueous suspension or dispersion of solid trifludimoxazin particles;
ii) adding an aminoplast pre-condensate to the aqueous suspension;
iii) effecting the polycondensation of the aminoplast pre-condensate.

Preferably, the trifludimoxazin particles in the aqueous suspension dispersion have a weight average particle diameter d50 in the range from 0.5 to 25 µm, preferably 0.5 to 10 µm, as determined by dynamic light scattering.

The solid composition may be obtained from an aqueous suspension which is primarily formed in the process for preparing the microparticle composition as described herein by removing the aqueous phase from the aqueous suspension. Removal of the aqueous phase can be achieved by either separating the aqueous phase from the solid microparticles, e.g. by centrifugation or filtration. Preferably, the aqueous phase is removed by an evaporation process, such as spray drying or freeze drying.

As outlined above, the process for producing the composition comprises a first step, where an aqueous suspension of trifludimoxazin particles is provided. For this, solid trifludimoxazin is suspended in an aqueous solvent, in particular in water. The aqueous solvent may contain one or more surfactants, in particular at least one polymeric surfactant A, which is assumed to act as a protective colloid, and optionally one or more anionic surfactants B.

Typically, to provide the aqueous suspension of trifludimoxazin particles having the desired particle size, an aqueous suspension of trifludimoxazin is milled in the presence of one or more surfactants. This mixture of trifludimoxazin particles suspended in water in the presence of suitable surfactants is referred to as the "millbase". The choice of the surfactants present in the trifludimoxazin millbase plays is important for obtaining a homogenous and processable aqueous trifludimoxazin suspension.

Preferably, the millbase comprises at least one anionic surfactant B as defined above. Especially preferred anionic surfactants B present in the millbase include alkyl sulfates like sodium dodecyl sulfate.

In one embodiment of the invention, the millbase comprises contains no anionic polymeric surface-active substance A, as defined above.

Preferably, the particle size of the trifludimoxazin particles in the aqueous suspension prior to encapsulation is less than 45 µm, in particular it will not exceed 40 µm, preferably not exceed 30 µm and in particular not exceed 25 µm or 15 µm or 10 µm. The particle size given is the so called d90-value. Preferably the active substance particles have an average particle diameter, herein also termed d50-value, ranging from 0.5 to 25 µm, in particular from 1 to 20 µm, especially from 1.5 to 15 µm. The d50-value is defined as the value that is above the diameters of 50% by weight of the particles and below the diameters of 50% by weight of the particles. The d10-value is preferably at least 0.5 µm and may e.g. be in the range from 0.5 µm 10 µm, in particular from 1 to 5 µm. The d90 value as well as the d50 value can be calculated from the particle size distribution of the trifludimoxazin particles which can be determined by conventional methods such as dynamic or static light-scattering at 25°C and a concentration in the range of 0.1 to 1% by weight.

It has been found beneficial, if the polycondensation is initiated or effected in the presence of at least one anionic polymeric surfactant A, in particular an anionic polymeric surfactant A which comprises or is selected from the polymeric surfactants of group A.3 and/or A.1. If present, the concentration of the polymeric anionic surfactant A, which is in particular selected from the surfactants of group A.3 and/or A1, in the aqueous suspension of step i) will frequently be in the range from 0.1 to 10% by weight, in particular from 1 to 6% by weight, based on the total weight of the aqueous suspension.

Typically, polymeric anionic Surfactant A will be added in to the suspension concentrate of trifludimoxazin after milling to a size used for encapsulation. In other words, polymeric anionic Surfactant A is typically not mixed with trifludimoxazin before or during the milling of trifludimoxazin.
It has been found beneficial, if the aqueous suspension of step i) also contains at least one anionic surfactant B, in particular an anionic surfactant which comprises or is selected from the surfactants of the formula (I). If present, the concentration of the anionic surfactant B in the aqueous suspension of step i) will frequently be in the range from 0.01 to 2% by weight, in particular from 0.1 to 1% by weight, based on the total weight of the aqueous suspension.

In one embodiment, step i) comprises a step i.a) and a step i.b). In step i.a) solid trifludimoxazin, in particular a crystalline form of trifludimoxazin, such as trifludimoxazin crystalline forms A, B or C, especially form A, and the aqueous solvent and optionally at least a part of the surfactant are mixed in any conventional mixing device which is capable of providing sufficient shear to form the desired suspension. Suitable mixing devices include in particular high shear mixers, such as Ultra-Turrax apparatus, static mixers, e.g. systems having mixing nozzles, agitator bead mills, colloid mills, cone mills and other homogenizers. In general, the sequence in which the individual components are combined is not critical. It may be advantageous to carry step i.a) out by firstly mixing the aqueous solvent and at least a part of the surfactant, e.g. the surfactant of group A
and optionally the surfactant B, until a homogenous mixture is obtained, and then adding the solid trifludimoxazin with shear to said homogenous mixture. The mixture obtained from step i.a) (the "millbase" with preferred components as described above), i.e. a coarse suspension of trifludimoxazin in the aqueous solvent, is then subjected in step i.b) to suitable means for reducing the particle size of the trifludimoxazin particles present in the mixture typically to below 40 µm, preferably to below 30 µm and in particular to below 20 µm or below 15 µm or 10 µm (d90-value), e.g. to a particle size (d90) in the range from 0.5 to 15 µm. Step i.b) may be carried out by any physical attrition method, such as grinding, crushing or milling, in particular by wet grinding or wet milling, including e.g. bead milling, hammer milling, jet milling, air classifying milling, pin milling, cryogenic grinding processes and the like. Steps i.a) and i.b) are usually performed subsequently. However, it is also possible to perform these steps together.

In another embodiment of the invention, step i) comprises providing trifludimoxazin in the form of a powder, wherein the d90 value of the powder particles is below 40 µm and in particular at most 30 µm or at most 20 µm, e.g. the particle size (d90) is in the range from 1 to < 40 µm, in particular 1 to 30 µm or 1 to 20 µm. The powder is usually prepared by comminuting the solid trifludimoxazin, e.g. the anhydrate or the crystalline hydrate, by a conventional dry milling technique, such as air milling, to a powder having the desired particle size. The thus obtained powder is then be suspended in the aqueous solvent or in an aqueous solution of the surfactant of group A and optionally the surfactant B.

It may be beneficial to add the polymeric surfactant A to the suspension of the trifludimoxazin provided in step i) before starting or initiating or effecting the polycondensation, in particular before adding the aminoplast pre-condensate thereto. In particular, it may be beneficial to keep the aqueous suspension of trifludimoxazin, which contains the polymeric surfactant A, for some time, e.g. for 10 to 180 minutes, before starting the polycondensation. It may be beneficial to add the polymeric surfactant A to the suspension after having performed step i).

In one embodiment, polymeric surfactants A (such as A1, A,2 and/or A.3) are at least partly added to the suspension of the trifludimoxazin provided in step i) before starting or initiating or effecting the polycondensation, in particular before adding the aminoplast pre-condensate thereto.
In one embodiment, polymeric surfactants A (such as A1, A,2 and/or A.3) are at least partly added to the suspension of the trifludimoxazin provided in step i) after starting or initiating or effecting the polycondensation, in particular before adding the aminoplast pre-condensate thereto.

In step ii), an aminoplast pre-condensate is added to the aqueous suspension of step i), which, upon curing in step iii), forms the solid, water-insoluble aminoplast polymer, which embeds or surrounds the solid trifludimoxazin particles, because the polycondensation preferentially occurs on the surface of the solid trifludimoxazin particles.

In one embodiment, polymeric surfactants A (such as A1, A,2 and/or A.3) are at least partly added to the suspension of the trifludimoxazin provided in step ii) after the polycondensation.

In one embodiment, polymeric surfactants A.3 are at least partly added to the suspension of the trifludimoxazin provided in step i) after milling and before step iii) and polymeric surfactants A.3 are added after the polycondensation.

The amount of aminoplast pre-condensate added in step ii) is chosen such that the desired amount of aminoplast polymer in the final microparticle composition is achieved. In fact, the amount added corresponds to the amount of aminoplast resin in the microparticles, taking into account that the mass is reduced by the amount of water which is formed during the polycondensation, and is usually in the range 0.5 to 40% by weight, in particular from 1 to 35% by weight and especially from 10 to 25% by weight, based on trifludimoxazin and calculated as organic matter.

It was surprisingly found that the crop selectivity and/or the phytotoxicity of formulations of the invention is improved when the amount of aminoplast polymer material in the formulation is 10 wt% of higher, based on the total amount of trifludimoxazin and aminoplast polymers present in the formulation. Thus, in one preferred embodiment, the amount of aminoplast polymer material in the formulation ins from 10 to 40 wt%, more preferably 12 to 38, in each case based on the total amount of trifludimoxazin and aminoplast polymers present in the formulation.

Suitable pre-condensates, which can be added in step ii) include pre-condensates of melamine and formaldehyde, including wholly or partially etherified melamine formaldehyde pre-condensates, urea-formaldehyde pre-condensates, thiourea formaldehyde pre-condensates, pre-condensates of melamine, urea and formaldehyde (MUF resins), including mixtures of wholly or partially etherified melamine formaldehyde pre-condensates and urea-formaldehyde pre-condensates, precondensates of urea and glutaraldehyde, pre-condensates of benzoguanamine and formaldehyde, mixtures of dicyandiamide and formaldehyde and urea-glyoxal polycondensates. Suitable aminoplast pre-condensates for microencapsulation are known and can be found, inter alia, in Kirk-Othmer, Encyclopedia of Chemical Technology, 3rd edition, Vol. 2, pp. 440-469, the prior art cited in the introductory part, US 4,918,317, EP 26914, EP 218887, EP 319337, EP 383,337, EP 415273, DE 19833347, DE 19835114 and WO 01/51197. Suitable pre-condensates are commercially available, e. g. Cymel types, such as but not limited to Cymel^{®} 303, 327, 328 or 385 (etherified melamine formaldehyde resins of Cytec), Maprenal^{®} types, such as but not limited to Maprenal^{®} MF 900w/95, MF 915/75IB, MF 920/75WA, MF 921w/85WA, (etherified melamine formaldehyde resins of Ineos), Kauramin^{®} types of BASF SE, such as but not limited to Kauramin^{®} 783, Kauramin^{®} 792 or Kauramin^{®} 753 (melamine formaldehyde resins), Kauramin^{®} 620 or Kauramin^{®} 621 (melamine urea formaldehyde resins), Kaurit^{®} types of BASF SE, such as but not limited to Kaurit^{®} 210, 216, 217 or 220 (urea formaldehyde resins), Luracoll^{®} types such as Luracoll^{®} SD (etherified melamine formaldehyde resins), Luwipal^{®} types such as but not limited to Luwipal^{®} 063, Luwipal^{®} 069 (etherified melamine formaldehyde resins), or Plastopal^{®} types such as but not limited to Plastopal^{®} BTM, Plastopal^{®} BTW (etherified urea formaldehyde resins).

In suitable urea-formaldehyde or thiourea-formaldehyde pre-condensates, the molar ratios of urea or thiourea to formaldehyde are generally in the range from 1:0.8 to 1:4, in particular from 1:1.5 to 1:4, especially from 1:2 to 1:3.5.

In suitable melamine-formaldehyde or melamine-(thio)urea-formaldehyde pre condensates, the molar ratios of melamine to formaldehyde are generally in the range from 1:1.5 to 1:10, in particular from 1:3 to 1:8 preferably 1:4 to 1:6.

In suitable melamine-formaldehyde or melamine-(thio)urea-formaldehyde precondensates, the molar ratios of melamine + urea or thiourea to formaldehyde are generally in the range from 1:0.8 to 1:9, in particular from 1:2 to 1:8 preferably 1:3 to 1:6. The molar ratio of urea or thiourea to melamine is usually in the range from 5:1 to 1:50 and in particular from 30:1 to 1:30.
The pre-condensates may be used in the form of etherified pre-condensates of amino compound and aldehyde. In these etherified pre-condensates the methylol groups formed by the reaction of the amino groups with formaldehyde with an alkanol or an alkandiol, in particular with a C1-C4-alkanol, such as methanol, ethanol, n-propanol or n-butanol, in particular methanol, or a C2-C4-alkandiol, such as ethylene glycol. The degree of etherification of these resins can be adjusted by the molar ratio of amino groups to alkanol which is typically in the range from 10:1 to 1:10, preferably in the range from 2:1 to 1:5.
The pre-condensates are most preferably selected from the group consisting of melamine-formaldehyde resins, including wholly or partially etherified melamine formaldehyde pre-condensates, and urea-formaldehyde pre-condensates and mixtures thereof. Especially, the pre-condensate is a wholly or partially etherified melamine formaldehyde condensate, which may contain small amounts, e.g. 1 to 20 mol.-%, based on melamine, of urea.
Addition of the pre-condensate to the aqueous suspension is normally achieved by adding the pre-condensate in the form of an aqueous or alcoholic solution of the precondensate to the aqueous suspension or by mixing suitable amounts of the dissolved pre-condensate. Preferably, suitable mixing devices, such as stirrers or inline-mixers are used in order to achieve a uniform distribution of the pre-condensate in the aqueous suspension. It may be beneficial to add the pre-condensate, preferably in the form of a solution, to the aqueous suspension of trifludimoxazin with stirring. Preferably, the addition of the pre-condensate is performed under conditions, where the polycondensation reaction is slow or does not occur, e.g. where either the pH of the aqueous suspension at least pH 6, e.g. in the range form pH 6 to pH 10, or where the temperature does not exceed 30°C or both.

The polycondensation of the aminoplast pre-condensate can be effected or initiated in a well-known manner, e.g. by heating the aqueous suspension to a certain reaction temperature, at a pH, where the polycondensation at the reaction temperature occurs.
During the polycondensation, the aminoplast pre-condensate is converted into a water-insoluble aminoplast resin, which precipitates from the aqueous phase and deposits preferably on the surface of the solid trifludimoxazin particles, thereby embedding or surrounding the solid trifludimoxazin particles. Thereby, it is possible to a achieve an efficient encapsulation even with small amounts of the aminoplast pre-condensate. Preferably, the polycondensation of the aminoplast is performed at pH of less than pH 6, in particular at a pH of at most pH 5, e.g. in the range of pH 0 to 6, more particularly in the range from pH 1 to 5 or in the range from pH 2 to 4. The pH of the aqueous suspension is usually adjusted by addition of suitable amounts of an organic or inorganic acid, such as sulfuric acid, hydrochloric acid, phosphoric acid, a carboxylic acid including alkanoic acids, alkandioic acids or hydroxycarboxylic acids, such as formic acid, acetic acid, propionic acid, oxalic acid, malic acid or citric acid, and alkyl or arylsulfonic acids, such as methane sulfonic acid or toluene sulfonic acid. It is preferred, if at least a portion, in particular the majority of the acid is present in the aqueous suspension, before the aqueous suspension is heated to the reaction temperature.

Preferably, the polycondensation of the aminoplast pre-condensate is performed at elevated temperature, in particular at a temperature of at least 30°C, in particular at least 40°C or at least 50°C, e.g. at a temperature in the range of 30 to 100°C, in particular in the range of 40 to 95°C or in the range of 50 to 90°C. It may be possible to effect the start of the polycondensation of the aminoplast at a comparatively low temperature, e.g. a temperature in the range of 30 to 65°C or 35 to 60°C and then complete the polycondensation reaction at a higher temperature of e.g. 50 to 100°C or 60 to 90°C. The time for completing the polycondensation may vary, depending on the reactivity of the pre-condensate, the temperature and the pH of the aqueous suspension and may take from 1 h to 24 h, in particular from 2 to 12 h. Preferably, the polycondensation reaction is at least partly performed at temperatures of at least 50°C, in particular at least 60°C, e.g. for 1 to 8 h at a temperature in the range from 50 to 100°C, in particular 60 to 90°C.

The thus obtained aqueous suspension of the trifludimoxazin microparticles may be neutralized by the addition of a base. Preferably, the pH of the suspension is adjusted to a pH of at least 6, e.g. a pH in the range of pH 6 to 10, in particular in the range of pH 6.5 to 9.0. In one preferred embodiment the base used is ammonia, especially aqueous ammonia.

From the thus obtained aqueous suspension the microparticles can be isolated, e.g. by filtration or centrifugation, or the aqueous suspension may be spray-dried, granulated or freeze-dried, to obtain a solid composition in the form of a powder or granules. The solid composition may be re-dispersed or formulated by using formulation auxiliaries as described above.
The aqueous suspension may also be used as such or formulated as a liquid formulation, e.g. as a suspension, by using suitable formulation auxiliaries as described above, e.g. such as thickeners, anionic surfactants B, non-ionic surfactants and/or biocides.

The invention also relates to uses of the microparticle composition of the invention for protecting crop plants and to methods of controlling undesired vegetation, which comprise applying the formulations, in diluted or undiluted form, to plants, their environment and/or seeds.
The compositions of the invention provide for a very good control of vegetation in noncrop areas, especially at high application rates. However, generally no higher application rates are required in comparison with conventional formulations of non-encapsulated trifludimoxazin for achieving similar control.

Furthermore, it has been found that the compositions according to the invention are also suitable for the defoliation of plant parts, for which crop plants such as cotton, potato, oilseed rape, sunflower, soybean or field beans, in particular cotton, are suitable. In this regard compositions have been found for the defoliation of plants, processes for preparing these compositions, and methods for defoliating plants using the compositions according to the invention.

Also of economic interest is the facilitation of harvesting, which is made possible by concentrating within a certain period of time the dehiscence, or reduction of adhesion to the tree, in citrus fruit, olives and other species and varieties of pomaceous fruit, stone fruit and nuts. The same mechanism, i.e. the promotion of the development of abscission tissue between fruit part or leaf part and shoot part of the plants is also essential for the controlled defoliation of useful plants, in particular cotton.

Moreover, a shortening of the time interval in which the individual cotton plants mature leads to an increased fiber quality after harvesting.

In crops such as soybean, cotton, oilseed rape, flax, lentils, rice, sugar beet, sunflower, tobacco and cereals, such as, for example maize or wheat, the compositions of the invention are active against broad-leaved weeds and grass weeds and provide for less damage to the crop plants in comparison with conventional formulations of non-encapsulated trifludimoxazin. This effect is particularly observed at low application rates. Furthermore, the compositions of the invention provide for long lasting residual activity, which exceeds the residual activity of conventional formulations of non-encapsulated trifludimoxazin.

Depending on the application method in question, the formulations of the invention can additionally be employed in a further number of crop plants to remove undesired plants. Crops which are suitable are, for example, the following:
Allium cepa, Ananas comosus, Arachis hypogaea, Asparagus officinalis, Beta vulgaris spec. altissima, Beta vulgaris spec. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa , Phaseolus lunatus, Phaseolus vulgaris, Picea abies, Pinus spec., Pisum sativum, Prunus armeniaca, Prunus avium, Prunus cerasus, Prunus dulcis, Prunus domesticua, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera and Zea mays.

Preferred crops are Arachis hypogaea, Beta vulgaris spec. altissima, Brassica napus var. napus, Brassica oleracea, Citrus limon, Citrus sinensis, Coffea arabica (Coffea canephora, Coffea liberica), Cynodon dactylon, Glycine max, Gossypium hirsutum, (Gossypium arboreum, Gossypium herbaceum, Gossypium vitifolium), Helianthus annuus, Hordeum vulgare, Juglans regia, Lens culinaris, Linum usitatissimum, Lycopersicon lycopersicum, Malus spec., Medicago sativa, Nicotiana tabacum (N.rustica), Olea europaea, Oryza sativa , Phaseolus lunatus, Phaseolus vulgaris, Pistacia vera, Pisum sativum, Prunus dulcis, Saccharum officinarum, Secale cereale, Solanum tuberosum, Sorghum bicolor (s. vulgare), Triticale, Triticum aestivum, Triticum durum, Vicia faba, Vitis vinifera and Zea mays

Especially preferred crops are crops of cereals, corn, soybeans, rice, oilseed rape, cotton, potatoes, peanuts or permanent crops.

In addition, the formulations of the invention can also be used in crops which tolerate the effect of herbicides as the result of breeding, including genetic engineering methods.
Furthermore, the compositions of the invention can also be used in crops which tolerate attack by insects or fungi as the result of breeding, including genetic engineering methods.

The term "crops" as used herein includes also (crop) plants which have been modified by mutagenesis or genetic engineering in order to provide a new trait to a plant or to modify an already present trait.
Mutagenesis includes techniques of random mutagenesis using X-rays or mutagenic chemicals, but also techniques of targeted mutagenesis, in order to create mutations at a specific locus of a plant genome. Targeted mutagenesis techniques frequently use oligonucleotides or proteins like CRISPR/Cas, zinc-finger nucleases, TALENs or meganucleases to achieve the targeting effect.

Genetic engineering usually uses recombinant DNA techniques to create modifications in a plant genome which under natural circumstances cannot readily be obtained by cross breeding, mutagenesis or natural recombination. Typically, one or more genes are integrated into the genome of a plant in order to add a trait or improve a trait. These integrated genes are also referred to as transgenes in the art, while plant comprising such transgenes are referred to as transgenic plants. The process of plant transformation usually produces several transformation events, which differ in the genomic locus in which a transgene has been integrated. Plants comprising a specific transgene on a specific genomic locus are usually described as comprising a specific "event", which is referred to by a specific event name. Traits which have been introduced in plants or have been modified include in particular herbicide tolerance, insect resistance, increased yield and tolerance to abiotic conditions, like drought.

Herbicide tolerance has been created by using mutagenesis as well as using genetic engineering. Plants which have been rendered tolerant to acetolactate synthase (ALS) inhibitor herbicides by conventional methods of mutagenesis and breeding comprise plant varieties commercially available under the name Clearfield^{®}. However, most of the herbicide tolerance traits have been created via the use of transgenes.
Herbicide tolerance has been created to glyphosate, glufosinate, 2,4-D, dicamba, oxynil herbicides, like bromoxynil and ioxynil, sulfonylurea herbicides, ALS inhibitor herbicides and 4-hydroxyphenylpyruvate dioxygenase (HPPD) inhibitors, like isoxaflutole and mesotrione.
Transgenes which have been used to provide herbicide tolerance traits comprise: for tolerance to glyphosate: cp4 epsps, epsps grg23ace5, mepsps, 2mepsps, gat4601, gat4621 and goxv247, for tolerance to glufosinate: pat and bar, for tolerance to 2,4-D: aad-1 and aad-12, for tolerance to dicamba: dmo, for tolerance to oxynil herbicides: bxn, for tolerance to sulfonylurea herbicides: zm-hra, csr1-2, gm-hra, S4-HrA, for tolerance to ALS inhibitor herbicides: csr1-2, for tolerance to HPPD inhibitor herbicides: hppdPF, W336 and avhppd-03.
Transgenic corn events comprising herbicide tolerance genes are for example, but not excluding others, DAS40278, MON801, MON802, MON809, MON810, MON832, MON87411, MON87419, MON87427, MON88017, MON89034, NK603, GA21, MZHG0JG, HCEM485, VCO-01981-5, 676, 678, 680, 33121, 4114, 59122, 98140, Bt10, Bt176, CBH-351, DBT418, DLL25, MS3, MS6, MZIR098, T25, TC1507 and TC6275.
Transgenic soybean events comprising herbicide tolerance genes are for example, but not excluding others, GTS 40-3-2, MON87705, MON87708, MON87712, MON87769, MON89788, A2704-12, A2704-21, A5547-127, A5547-35, DP356043, DAS44406-6, DAS68416-4, DAS-81419-2, GU262, SYHTØH2, W62, W98, FG72 and CV127.
Transgenic cotton events comprising herbicide tolerance genes are for example, but not excluding others, 19-51a, 31707, 42317, 81910, 281-24-236, 3006-210-23, BXN10211, BXN10215, BXN10222, BXN10224, MON1445, MON1698, MON88701, MON88913, GHB119, GHB614, LLCotton25, T303-3 and T304-40.
Transgenic canola events comprising herbicide tolerance genes are for example, but not excluding others, MON88302, HCR-1, HCN10, HCN28, HCN92, MS1, MS8, PHY14, PHY23, PHY35, PHY36, RF1, RF2 and RF3.

Insect resistance has mainly been created by transferring bacterial genes for insecticidal proteins to plants. Transgenes which have most frequently been used are toxin genes of Bacillus spec. and synthetic variants thereof, like cry1A, cry1Ab, cry1Ab-Ac, cry1Ac, cry1A.105, cry1F, cry1Fa2, cry2Ab2, cry2Ae, mcry3A, ecry3.1Ab, cry3Bb1, cry34Ab1, cry35Ab1, cry9C, vip3A(a), vip3Aa20. However, also genes of plant origin have been transferred to other plants. In particular genes coding for protease inhibitors, like CpTI and pinll. A further approach uses transgenes in order to produce double stranded RNA in plants to target and downregulate insect genes. An example for such a transgene is dvsnf7.

Transgenic corn events comprising genes for insecticidal proteins or double stranded RNA are for example, but not excluding others, Bt10, Bt11, Bt176, MON801, MON802, MON809, MON810, MON863, MON87411, MON88017, MON89034, 33121, 4114, 5307, 59122, TC1507, TC6275, CBH-351, MIR162, DBT418 and MZIR098.
Transgenic soybean events comprising genes for insecticidal proteins are for example, but not excluding others, MON87701, MON87751 and DAS-81419.
Transgenic cotton events comprising genes for insecticidal proteins are for example, but not excluding others, SGK321, MON531, MON757, MON1076, MON15985, 31707, 31803, 31807, 31808, 42317, BNLA-601, Event1, COT67B, COT102, T303-3, T304-40, GFM Cry1A, GK12, MLS 9124, 281-24-236, 3006-210-23, GHB119 and SGK321.

Increased yield has been created by increasing ear biomass using the transgene athb17, being present in corn event MON87403, or by enhancing photosynthesis using the transgene bbx32, being present in the soybean event MON87712.

Crops comprising a modified oil content have been created by using the transgenes: gm-fad2-1, Pj.D6D, Nc.Fad3, fad2-1A and fatb1-A. Soybean events comprising at least one of these genes are: 260-05, MON87705 and MON87769.

Tolerance to abiotic conditions, in particular to tolerance to drought, has been created by using the transgene cspB, comprised by the corn event MON87460 and by using the transgene Hahb-4, comprised by soybean event IND-ØØ41Ø-5.

Traits are frequently combined by combining genes in a transformation event or by combining different events during the breeding process. Preferred combination of traits are herbicide tolerance to different groups of herbicides, insect tolerance to different kind of insects, in particular tolerance to lepidopteran and coleopteran insects, herbicide tolerance with one or several types of insect resistance, herbicide tolerance with increased yield as well as a combination of herbicide tolerance and tolerance to abiotic conditions.

Plants comprising singular or stacked traits as well as the genes and events providing these traits are well known in the art. For example, detailed information as to the mutagenized or integrated genes and the respective events are available from websites of the organizations "International Service for the Acquisition of Agri-biotech Applications (ISAAA)" (http://www.isaaa.org/gmapprovaldatabase) and the "Center for Environmental Risk Assessment (CERA)" (http://cera-gmc.org/GMCropDatabase), as well as in patent applications, like EP3028573 and WO2017/011288.

The use of compositions according to the invention on crops may result in effects which are specific to a crop comprising a certain gene or event. These effects might involve changes in growth behavior or changed resistance to biotic or abiotic stress factors. Such effects may in particular comprise enhanced yield, enhanced resistance or tolerance to insects, nematodes, fungal, bacterial, mycoplasma, viral or viroid pathogens as well as early vigour, early or delayed ripening, cold or heat tolerance as well as changed amino acid or fatty acid spectrum or content.

Furthermore, plants are also covered that contain by the use of recombinant DNA techniques a modified amount of ingredients or new ingredients, specifically to improve raw material production, e.g., potatoes that produce increased amounts of amylopectin (e.g. Amflora^{®} potato, BASF SE, Germany).

Moreover, it has been found that the compositions of the invention are also suitable for the defoliation and desiccation of plant parts, for which crops plants such as cotton, potato, oilseed rape, sunflower, soybean or field beans, in particular cotton, are suitable.

As desiccants, the compositions of the invention are particularly suitable for desiccating the aerial parts of crop plants such as potato, oilseed rape, sunflower and soybean. This makes possible the fully mechanical harvesting of these important crop plants.

Also of economic interest is to facilitate harvesting, which is made possible by concentrating within a certain period of time the dehiscence, or reduction of adhesion to the tree, in citrus fruit, olives or other species and varieties of pome fruit, stone fruit and nuts. The same mechanism, i.e. the promotion of the development of abscission tissue between fruit part or leaf part and shoot part of the plants is also essential for the controlled defoliation of useful plants, in particular cotton. Moreover, a shortening of the time interval within which the individual cotton plants mature leads to an increased fiber quality after harvesting.

Moreover, it has been found that the compositions of the invention are also suitable for the control of conifers, in particular of conifer seedlings which grow naturally, and specifically for the control of pine seedlings which grow naturally.

In general, the compositions of the invention as described herein are useful for combating undesired vegetation. For this purpose, the compositions may be applied as such or are preferably applied after dilution with water. Preferably, for various purposes of end user application, a so-called aqueous spray-liquor is prepared by diluting the compositions of the present invention with water, e.g. tap water. The spray-liquors may also comprise further constituents in dissolved, emulsified or suspended form, for example fertilizers, active substances of other groups of herbicidal or growth-regulatory active substances, further active substances, for example active substances for controlling animal pests or phytopathogenic fungi or bacteria, furthermore mineral salts which are employed for alleviating nutritional and trace element deficiencies, and nonphytotoxic oils or oil concentrates. As a rule, these constituents are added to the spray mixture before, during or after dilution of the compositions according to the invention.

The compositions of the invention can be applied by the pre-emergence or the postemergence method. If the trifludimoxazin is less well tolerated by certain crop plants, application techniques may be employed where the herbicidal compositions are sprayed, with the aid of the spraying apparatus, in such a way that the leaves of the sensitive crop plants ideally do not come into contact with them, while the active substances reach the leaves of undesired plants which grow underneath, or the bare soil surface (post-directed, lay-by).

Depending on the aim of the control measures, the season, the target plants and the growth stage, the compositions of the invention are applied to such a degree that the application rates of trifludimoxazin are from 0.001 to 3.0, preferably from 0.01 to 1.0 kg/ha active substance (a.s.).
To widen the spectrum of action and to obtain synergistic effects, the compositions of the invention can be mixed with a large number of representatives of other groups of herbicidal or growth-regulatory active substances, below referred to as herbicidal or growth-regulatory active substances B) and C), or applied together with these. It is also possible that the microparticles may comprise one or more active ingredients B) or C) encapsulated in the microparticle.

Suitable mixing partners for compositions of the invention include the following (compositions of trifludimoxazin containing microparticles of the invention are below sometimes referred to as "compound A)):
B) herbicides of class b1) to b15):
   b1) lipid biosynthesis inhibitors;
   b2) acetolactate synthase inhibitors (ALS inhibitors);
   b3) photosynthesis inhibitors;
   b4) protoporphyrinogen-IX oxidase inhibitors,
   b5) bleacher herbicides;
   b6) enolpyruvyl shikimate 3-phosphate synthase inhibitors (EPSP inhibitors);
   b7) glutamine synthetase inhibitors;
   b8) 7,8-dihydropteroate synthase inhibitors (DHP inhibitors);
   b9) mitosis inhibitors;
   b10) inhibitors of the synthesis of very long chain fatty acids (VLCFA inhibitors);
   b11) cellulose biosynthesis inhibitors;
   b12) decoupler herbicides;
   b13) auxinic herbicides;
   b14) auxin transport inhibitors; and
   b15) other herbicides selected from the group consisting of bromobutide, chlorflurenol, chlorflurenol-methyl, cinmethylin, cumyluron, dalapon, dazomet, difenzoquat, difenzoquat-metilsulfate, dimethipin, DSMA, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, indaziflam, maleic hydrazide, mefluidide, metam, methiozolin, methyl azide, methyl bromide, methyl-dymron, methyl iodide, MSMA, oleic acid, oxaziclomefone, pelargonic acid, pyributicarb, quinoclamine, tetflupyrolimet, triaziflam, tridiphane and 6-chloro-3-(2-cyclopropyl-6-methylphenoxy)-4-pyridazinol (CAS 499223-49-3) and its salts and esters;
      including their agriculturally acceptable salts or derivatives;
      and
   C) safeners.

If the herbicidal compounds B and/or the safeners C as described herein are capable of forming geometrical isomers, for example E/Z isomers, it is possible to use both, the pure isomers and mixtures thereof, in the compositions according to the invention.

If the herbicidal compounds B and/or the safeners C as described herein have one or more centers of chirality and, as a consequence, are present as enantiomers or diastereomers, it is possible to use both, the pure enantiomers and diastereomers and their mixtures, in the compositions according to the invention.

If the herbicidal compounds B and/or the safeners C as described herein have ionizable functional groups, they can also be employed in the form of their agriculturally acceptable salts. Suitable are, in general, the salts of those cations and the acid addition salts of those acids whose cations and anions, respectively, have no adverse effect on the activity of the active compounds.

Preferred cations are the ions of the alkali metals, preferably of lithium, sodium and potassium, of the alkaline earth metals, preferably of calcium and magnesium, and of the transition metals, preferably of manganese, copper, zinc and iron, further ammonium and substituted ammonium in which one to four hydrogen atoms are replaced by C₁-C₄-alkyl, hydroxy-C₁-C₄-alkyl, C₁-C₄-alkoxy-C₁-C₄-alkyl, hydroxy-C₁-C₄-alkoxy-C₁-C₄-alkyl, phenyl or benzyl, preferably ammonium, methylammonium, isopropyl ammonium, dimethylammonium, diethylammonium, diisopropylammonium, trimethylammonium, triethylammonium, tris(isopropyl)ammonium, heptylammonium, dodecyl ammonium, tetradecyl ammonium, tetramethylammonium, tetraethylammonium, tetrabutylammonium, 2-hydroxyethylammonium (olamine salt), 2-(2-hydroxyeth-1-oxy)eth-1-ylammonium (diglycolamine salt), di(2-hydroxyeth-1-yl)ammonium (diolamine salt), tris(2-hydroxyethyl)ammonium (trolamine salt), tris(2-hydroxypropyl)ammonium, benzyl trimethylammonium, benzyl triethylammonium, N,N,N-trimethylethanolammonium (choline salt), furthermore phosphonium ions, sulfonium ions, preferably tri(C₁-C₄-alkyl)sulfonium, such as trimethyl sulfonium, and sulfoxonium ions, preferably tri(C₁-C₄-alkyl)sulfoxonium, and finally the salts of polybasic amines such as N,N-bis-(3-aminopropyl)methylamine and diethylenetriamine.

Anions of useful acid addition salts are primarily chloride, bromide, fluoride, iodide, hydrogen sulfate, methyl sulfate, sulfate, dihydrogen phosphate, hydrogen phosphate, nitrate, bicarbonate, carbonate, hexafluoro silicate, hexafluorophosphate, benzoate and also the anions of C₁-C₄-alkanoic acids, preferably formate, acetate, propionate and butyrate.

Herbicidal compounds B and/or safeners C as described herein having a carboxyl group can be employed in the form of the acid, in the form of an agriculturally suitable salt as mentioned above or else in the form of an agriculturally acceptable derivative, for example as amides, such as mono- and di-C₁-C₆-alkylamides or arylamides, as esters, for example as allyl esters, propargyl esters, C₁-C₁₀-alkyl esters, alkoxyalkyl esters, tefuryl ((tetrahydrofuran-2-yl)methyl) esters and also as thioesters, for example as C₁-C₁₀-alkylthio esters. Preferred mono- and di-C₁-C₆-alkylamides are the methyl and the dimethylamides. Preferred arylamides are, for example, the anilides and the 2-chloroanilides. Preferred alkyl esters are, for example, the methyl, ethyl, propyl, isopropyl, butyl, isobutyl, pentyl, mexyl (1-methylhexyl), meptyl (1-methylheptyl), heptyl, octyl or isooctyl (2-ethylhexyl) esters. Preferred C₁-C₄-alkoxy-C₁-C₄-alkyl esters are the straight-chain or branched C₁-C₄-alkoxy ethyl esters, for example the 2-methoxyethyl, 2-ethoxyethyl, 2-butoxyethyl (butotyl), 2-butoxypropyl or 3-butoxypropyl ester. An example of a straight-chain or branched C₁-C₁₀-alkylthio ester is the ethylthio ester.

According to a first embodiment of the invention the compositions contain at least one inhibitor of the lipid biosynthesis (herbicide b1). These are compounds that inhibit lipid biosynthesis. Inhibition of the lipid biosynthesis can be affected either through inhibition of acetylCoA carboxylase (hereinafter termed ACC herbicides) or through a different mode of action (hereinafter termed non-ACC herbicides). The ACC herbicides belong to the group A of the HRAC classification system whereas the non-ACC herbicides belong to the group N of the HRAC classification.

According to a second embodiment of the invention the compositions contain at least one ALS inhibitor (herbicide b2). The herbicidal activity of these compounds is based on the inhibition of acetolactate synthase and thus on the inhibition of the branched chain amino acid biosynthesis. These inhibitors belong to the group B of the HRAC classification system.

According to a third embodiment of the invention the compositions contain at least one inhibitor of photosynthesis (herbicide b3). The herbicidal activity of these compounds is based either on the inhibition of the photosystem II in plants (so-called PSII inhibitors, groups C1, C2 and C3 of HRAC classification) or on diverting the electron transfer in photosystem I in plants (so-called PSI inhibitors, group D of HRAC classification) and thus on an inhibition of photosynthesis. Amongst these, PSII inhibitors are preferred.

According to a fourth embodiment of the invention the compositions contain at least one inhibitor of protoporphyrinogen-IX-oxidase (herbicide b4). The herbicidal activity of these compounds is based on the inhibition of the protoporphyrinogen-IX-oxidase. These inhibitors belong to the group E of the HRAC classification system.

According to a fifth embodiment of the invention the compositions contain at least one bleacher-herbicide (herbicide b5). The herbicidal activity of these compounds is based on the inhibition of the carotenoid biosynthesis. These include compounds which inhibit carotenoid biosynthesis by inhibition of phytoene desaturase (so-called PDS inhibitors, group F1 of HRAC classification), compounds that inhibit the 4-hydroxyphenylpyruvate-dioxygenase (HPPD inhibitors, group F2 of HRAC classification), compounds that inhibit DOXsynthase (group F4 of HRAC class) and compounds which inhibit carotenoid biosynthesis by an unknown mode of action (bleacher - unknown target, group F3 of HRAC classification).

According to a sixth embodiment of the invention the compositions contain at least one EPSP synthase inhibitor (herbicide b6). The herbicidal activity of these compounds is based on the inhibition of enolpyruvyl shikimate 3-phosphate synthase, and thus on the inhibition of the amino acid biosynthesis in plants. These inhibitors belong to the group G of the HRAC classification system.

According to a seventh embodiment of the invention the compositions contain at least one glutamine synthetase inhibitor (herbicide b7). The herbicidal activity of these compounds is based on the inhibition of glutamine synthetase, and thus on the inhibition of the amino acid biosynthesis in plants. These inhibitors belong to the group H of the HRAC classification system.

According to an eighth embodiment of the invention the compositions contain at least one DHP synthase inhibitor (herbicide b8). The herbicidal activity of these compounds is based on the inhibition of 7,8-dihydropteroate synthase. These inhibitors belong to the group I of the HRAC classification system.

According to a ninth embodiment of the invention the compositions contain at least one mitosis inhibitor (herbicide b9). The herbicidal activity of these compounds is based on the disturbance or inhibition of microtubule formation or organization, and thus on the inhibition of mitosis. These inhibitors belong to the groups K1 and K2 of the HRAC classification system. Among these, compounds of the group K1, in particular dinitroanilines, are preferred.

According to a tenth embodiment of the invention the compositions contain at least one VLCFA inhibitor (herbicide b10). The herbicidal activity of these compounds is based on the inhibition of the synthesis of very long chain fatty acids and thus on the disturbance or inhibition of cell division in plants. These inhibitors belong to the group K3 of the HRAC classification system.

According to an eleventh embodiment of the invention the compositions contain at least one cellulose biosynthesis inhibitor (herbicide b11). The herbicidal activity of these compounds is based on the inhibition of the biosynthesis of cellulose and thus on the inhibition of the synthesis of cell walls in plants. These inhibitors belong to the group L of the HRAC classification system.

According to a twelfth embodiment of the invention the compositions contain at least one decoupler herbicide (herbicide b12). The herbicidal activity of these compounds is based on the disruption of the cell membrane. These inhibitors belong to the group M of the HRAC classification system.

According to a thirteenth embodiment of the invention the compositions contain at least one auxinic herbicide (herbicide b13). These include compounds that mimic auxins, i.e. plant hormones, and affect the growth of the plants. These compounds belong to the group O of the HRAC classification system.

According to a fourteenth embodiment of the invention the compositions contain at least one auxin transport inhibitor (herbicide b14). The herbicidal activity of these compounds is based on the inhibition of the auxin transport in plants. These compounds belong to the group P of the HRAC classification system.

As to the given mechanisms of action and classification of the active substances, see e.g. "HRAC, Classification of Herbicides According to Mode of Action", http://www.plantprotection.org/hrac/MOA.html).

Preference is given to those compositions according to the present invention comprising at least one herbicide B selected from herbicides of class b2, b3, b4, b5, b6, b9 and b10.

Specific preference is given to those compositions according to the present invention which comprise at least one herbicide B selected from the herbicides of class b4, b6 b9 and b10.

Particular preference is given to those compositions according to the present invention which comprise at least one herbicide B selected from the herbicides of class b4, b6 and b10.

Examples of herbicides B which can be used in combination with the compositions according to the present invention are:
b1) from the group of the lipid biosynthesis inhibitors:
   ACC-herbicides such as alloxydim, alloxydim-sodium, butroxydim, clethodim, clodinafop, clodinafop-propargyl, cycloxydim, cyhalofop, cyhalofop-butyl, diclofop, diclofop-methyl, fenoxaprop, fenoxaprop-ethyl, fenoxaprop-P, fenoxaprop-P-ethyl, fluazifop, fluazifop-butyl, fluazifop-P, fluazifop-P-butyl, haloxyfop, haloxyfop-methyl, haloxyfop-P, haloxyfop-P-methyl, metamifop, pinoxaden, profoxydim, propaquizafop, quizalofop, quizalofop-ethyl, quizalofop-tefuryl, quizalofop-P, quizalofop-P-ethyl, quizalofop-P-tefuryl, sethoxydim, tepraloxydim, tralkoxydim, 4-(4'-Chloro-4-cyclopropyl-2'-fluoro[1,1'-biphenyl]-3-yl)-5-hydroxy-2,2,6,6-tetramethyl-2H-pyran-3(6H)-one (CAS 1312337-72-6); 4-(2',4'-Dichloro-4-cyclopropyl[1,1'-biphenyl]-3-yl)-5-hydroxy-2,2,6,6-tetramethyl-2H-pyran-3(6H)-one (CAS 1312337-45-3); 4-(4'-Chloro-4-ethyl-2'-fluoro[1,1'-biphenyl]-3-yl)-5-hydroxy-2,2,6,6-tetramethyl-2H-pyran-3(6H)-one (CAS 1033757-93-5); 4-(2',4'-Dichloro-4-ethyl[1,1'-biphenyl]-3-yl)-2,2,6,6-tetramethyl-2H-pyran-3,5(4H,6H)-dione (CAS 1312340-84-3); 5-(Acetyloxy)-4-(4'-chloro-4-cyclopropyl-2'-fluoro[1,1'-biphenyl]-3-yl)-3,6-dihydro-2,2,6,6-tetramethyl-2H-pyran-3-one (CAS 1312337-48-6); 5-(Acetyloxy)-4-(2',4'-dichloro-4-cyclopropyl-[1,1'-biphenyl]-3-yl)-3,6-dihydro-2,2,6,6-tetramethyl-2H-pyran-3-one; 5-(Acetyloxy)-4-(4'-chloro-4-ethyl-2'-fluoro[1,1'-biphenyl]-3-yl)-3,6-dihydro-2,2,6,6-tetramethyl-2H-pyran-3-one (CAS 1312340-82-1); 5-(Acetyloxy)-4-(2',4'-dichloro-4-ethyl[1,1'-biphenyl]-3-yl)-3,6-dihydro-2,2,6,6-tetramethyl-2H-pyran-3-one (CAS 1033760-55-2); 4-(4'-Chloro-4-cyclopropyl-2'-fluoro[1,1'-biphenyl]-3-yl)-5,6-dihydro-2,2,6,6-tetramethyl-5-oxo-2H-pyran-3-yl carbonic acid methyl ester (CAS 1312337-51-1); 4-(2',4'-Dichloro -4-cyclopropyl- [1,1'-biphenyl]-3-yl)-5,6-dihydro-2,2,6,6-tetramethyl-5-oxo-2H-pyran-3-yl carbonic acid methyl ester; 4-(4'-Chloro-4-ethyl-2'-fluoro[1,1'-biphenyl]-3-yl)-5,6-dihydro-2,2,6,6-tetramethyl-5-oxo-2H-pyran-3-yl carbonic acid methyl ester (CAS 1312340-83-2); 4-(2',4'-Dichloro-4-ethyl[1,1'-biphenyl]-3-yl)-5,6-dihydro-2,2,6,6-tetramethyl-5-oxo-2H-pyran-3-yl carbonic acid methyl ester (CAS 1033760-58-5); and non ACC herbicides such as benfuresate, butylate, cycloate, dalapon, dimepiperate, EPTC, esprocarb, ethofumesate, flupropanate, molinate, orbencarb, pebulate, prosulfocarb, TCA, thiobencarb, tiocarbazil, triallate and vernolate;
b2) from the group of the ALS inhibitors:
   sulfonylureas such as amidosulfuron, azimsulfuron, bensulfuron, bensulfuron-methyl, chlorimuron, chlorimuron-ethyl, chlorsulfuron, cinosulfuron, cyclosulfamuron, ethametsulfuron, ethametsulfuron-methyl, ethoxysulfuron, flazasulfuron, flucetosulfuron, flupyrsulfuron, flupyrsulfuron-methyl-sodium, foramsulfuron, halosulfuron, halosulfuron-methyl, imazosulfuron, iodosulfuron, iodosulfuron-methyl-sodium, iofensulfuron, iofensulfuron-sodium, mesosulfuron, metazosulfuron, metsulfuron, metsulfuron-methyl, nicosulfuron, orthosulfamuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron, triflusulfuron, triflusulfuron-methyl and tritosulfuron,
   imidazolinones such as imazamethabenz, imazamethabenz-methyl, imazamox, imazapic, imazapyr, imazaquin and imazethapyr, triazolopyrimidine herbicides and sulfonanilides such as cloransulam, cloransulam-methyl, diclosulam, flumetsulam, florasulam, metosulam, penoxsulam, pyrimisulfan and pyroxsulam,
   pyrimidinylbenzoates such as bispyribac, bispyribac-sodium, pyribenzoxim, pyriftalid, pyriminobac, pyriminobac-methyl, pyrithiobac, pyrithiobac-sodium, 4-[[[2-[(4,6-dimethoxy-2-pyrimidinyl)oxy]phenyl]methyl]amino]-benzoic acid-1-methylethyl ester (CAS 420138-41-6), 4-[[[2-[(4,6-dimethoxy-2-pyrimidinyl)oxy]phenyl]methyl]amino]-benzoic acid propyl ester (CAS 420138-40-5), N-(4-bromophenyl)-2-[(4,6-dimethoxy-2-pyrimidinyl)oxy]benzenemethanamine (CAS 420138-01-8),
   sulfonylaminocarbonyl-triazolinone herbicides such as flucarbazone, flucarbazone-sodium, propoxycarbazone, propoxycarbazone-sodium, thiencarbazone and thiencarbazone-methyl;
   and triafamone;
   among these, a preferred embodiment of the invention relates to those compositions comprising at least one imidazolinone herbicide;
b3) from the group of the photosynthesis inhibitors:
   amicarbazone, inhibitors of the photosystem II, e.g. 1-(6-tert-butylpyrimidin-4-yl)-2-hydroxy-4-methoxy-3-methyl-2H-pyrrol-5-one (CAS 1654744-66-7), 1-(5-tert-butylisoxazol-3-yl)-2-hydroxy-4-methoxy-3-methyl-2H-pyrrol-5-one (CAS 1637455-12-9), 1-(5-tert-butylisoxazol-3-yl)-4-chloro-2-hydroxy-3-methyl-2H-pyrrol-5-one (CAS 1637453-94-1), 1-(5-tert-butyl-1-methyl-pyrazol-3-yl)-4-chloro-2-hydroxy-3-methyl-2H-pyrrol-5-one (CAS 1654057-29-0), 1-(5-tert-butyl-1-methyl-pyrazol-3-yl)-3-chloro-2-hydroxy-4-methyl-2H-pyrrol-5-one (CAS 1654747-80-44-hydroxy-1-methoxy-5-methyl-3-[4-(trifluoromethyl)-2-pyridyl]imidazolidin-2-one; (CAS 2023785-78-4), 4-hydroxy-1,5-dimethyl-3-[4-(trifluoromethyl)-2-pyridyl]imidazolidin-2-one (CAS 2023785-79-5), 5-ethoxy-4-hydroxy-1-methyl-3-[4-(trifluoromethyl)-2-pyridyl]imidazolidin-2-one (CAS 1701416-69-4), 4-hydroxy-1-methyl-3-[4-(trifluoromethyl)-2-pyridyl]imidazolidin-2-one (CAS 1708087-22-2), 4-hydroxy-1,5-dimethyl-3-[1-methyl-5-(trifluoromethyl)pyrazol-3-yl]imidazolidin-2-one (CAS 2023785-80-8), 1-(5-tert-butylisoxazol-3-yl)-4-ethoxy-5-hydroxy-3-methyl-imidazolidin-2-one (CAS 1844836-64-1), triazine herbicides, including of chlorotriazine, triazinones, triazindiones, methylthiotriazines and pyridazinones such as ametryn, atrazine, chloridazone, cyanazine, desmetryn, dimethametryn, hexazinone, metribuzin, prometon, prometryn, propazine, simazine, simetryn, terbumeton, terbuthylazin, terbutryn and trietazin, aryl urea such as chlorobromuron, chlorotoluron, chloroxuron, dimefuron, diuron, fluometuron, isoproturon, isouron, linuron, metamitron, methabenzthiazuron, metobenzuron, metoxuron, monolinuron, neburon, siduron, tebuthiuron and thiadiazuron, phenyl carbamates such as desmedipham, karbutilat, phenmedipham, phenmedipham-ethyl, nitrile herbicides such as bromofenoxim, bromoxynil and its salts and esters, ioxynil and its salts and esters, uraciles such as bromacil, lenacil and terbacil, and bentazon and bentazon-sodium, pyridate, pyridafol, pentanochlor and propanil and inhibitors of the photosystem I such as diquat, diquat-dibromide, paraquat, paraquat-dichloride and paraquat-dimetilsulfate. Among these, a preferred embodiment of the invention relates to those compositions comprising at least one aryl urea herbicide. Among these, likewise a preferred embodiment of the invention relates to those compositions comprising at least one triazine herbicide. Among these, likewise a preferred embodiment of the invention relates to those compositions comprising at least one nitrile herbicide;
b4) from the group of the protoporphyrinogen-IX oxidase inhibitors:
   acifluorfen, acifluorfen-sodium, azafenidin, bencarbazone, benzfendizone, bifenox, butafenacil, carfentrazone, carfentrazone-ethyl, chlomethoxyfen, chlorphthalim, cinidon-ethyl, cyclopyranil, fluazolate, flufenpyr, flufenpyr-ethyl, flumiclorac, flumiclorac-pentyl, flumioxazin, fluoroglycofen, fluoroglycofen-ethyl, fluthiacet, fluthiacet-methyl, fomesafen, halosafen, lactofen, oxadiargyl, oxadiazon, oxyfluorfen, pentoxazone, profluazol, pyraclonil, pyraflufen, pyraflufen-ethyl, saflufenacil, sulfentrazone, thidiazimin, tiafenacil, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6; S-3100), N-ethyl-3-(2,6-dichloro-4-trifluoromethylphenoxy)-5-methyl-1*H*-pyrazole-1-carboxamide (CAS 452098-92-9), N-tetrahydrofurfuryl-3-(2,6-dichloro-4-trifluoromethylphenoxy)-5-methyl-1*H*-pyrazole-1-carboxamide (CAS 915396-43-9), N-ethyl-3-(2-chloro-6-fluoro-4-trifluoromethylphenoxy)-5-methyl-1*H*-pyrazole-1-carboxamide (CAS 452099-05-7), N-tetrahydrofurfuryl-3-(2-chloro-6-fluoro-4-trifluoromethylphenoxy)-5-methyl-1*H*-pyrazole-1-carboxamide (CAS 452100-03-7), 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione (CAS 451484-50-7), 2-(2,2,7-trifluoro-3-oxo-4-prop-2-ynyl-3,4-dihydro-2H-benzo[1,4]oxazin-6-yl)-4,5,6,7-tetrahydro-isoindole-1,3-dione (CAS 1300118-96-0), 1-methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione (CAS 1304113-05-0), methyl (*E*)-4-[2-chloro-5-[4-chloro-5-(difluoromethoxy)-1*H*-methyl-pyrazol-3-yl]-4-fluoro-phenoxy]-3-methoxy-but-2-enoate (CAS 948893-00-3), and 3-[7-chloro-5-fluoro-2-(trifluoromethyl)-1H-benzimidazol-4-yl]-1-methyl-6-(trifluoromethyl)-1H-pyrimidine-2,4-dione (CAS 212754-02-4),
   2-[2-chloro-5-[3-chloro-5-(trifluoromethyl)-2-pyridinyl]-4-fluorophenoxy]-2-methoxy-acetic acid methyl ester (CAS 1970221-16-9), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-acetic acid methyl ester (CAS 2158274-96-3), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 158274-50-9), methyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2271389-22-9), ethyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2230679-62-4), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-acetic acid methyl ester (CAS 2158275-73-9), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy] acetic acid ethyl ester (CAS 2158274-56-5), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-N-(methylsulfonyl)-acetamide (CAS 2158274-53-2), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-N-(methylsulfonyl)-acetamide (CAS 2158276-22-1);
b5) from the group of the bleacher herbicides:
   PDS inhibitors: beflubutamid, diflufenican, fluridone, flurochloridone, flurtamone, norflurazon, picolinafen, 4-(3-trifluoromethylphenoxy)-2-(4-trifluoromethylphenyl)pyrimidine (CAS 180608-33-7) and 3-chloro-2-[-3-(difluoromethyl)isoxazol-5-yl]phenyl-5-chloropyrimidin-2-yl-ether, HPPD inhibitors: benzobicyclon, benzofenap, bicyclopyrone, clomazone, fenquinotrione, isoxaflutole, mesotrione, oxotrione (CAS 1486617-21-3), pyrasulfotole, pyrazolynate, pyrazoxyfen, sulcotrione, tefuryltrione, tembotrione, tolpyralate, topramezone, bipyrazone, fenpyrazone, cypyrafluone, tripyrasulfone, benquinotrione, 2-(3,4-dimethoxyphenyl)-4-[2-hydroxy-6-oxocyclohex-1-en-1yl)carbonyl]-6-methylpyridazin-3*(2H)*-one*;* bleacher, unknown target: aclonifen, amitrole flumeturon,2-chloro-3-methylsulfanyl-N-(1-methyltetrazol-5-yl)-4-(trifluoromethyl)benzamide (CAS 1361139-71-0), bixlozone and 2-(2,5-dichlorophenyl)methyl-4,4-dimethyl-3-isoxazolidinone (CAS 81778-66-7);
b6) from the group of the EPSP synthase inhibitors:
   glyphosate, glyphosate-isopropylammonium, glyposate-potassium and glyphosate-trimesium (sulfosate);
b7) from the group of the glutamine synthase inhibitors:
   bilanaphos (bialaphos), bilanaphos-sodium, glufosinate, glufosinate-P and glufosinate-ammonium;
b8) from the group of the DHP synthase inhibitors:
   asulam;
b9) from the group of the mitosis inhibitors:
   compounds of group K1: dinitroanilines such as benfluralin, butralin, dinitramine, ethalfluralin, fluchloralin, oryzalin, pendimethalin, prodiamine and trifluralin, phosphoramidates such as amiprophos, amiprophos-methyl, and butamiphos, benzoic acid herbicides such as chlorthal, chlorthal-dimethyl, pyridines such as dithiopyr and thiazopyr, benzamides such as propyzamide and tebutam; compounds of group K2: carbetamide, chlorpropham, flamprop, flamprop-isopropyl, flamprop-methyl, flamprop-M-isopropyl, flamprop-M-methyl and propham ; among these, compounds of group K1, in particular dinitroanilines are preferred;
b10) from the group of the VLCFA inhibitors:
   chloroacetamides such as acetochlor, alachlor, amidochlor, butachlor, dimethachlor, dimethenamid, dimethenamid-P, metazachlor, metolachlor, metolachlor-S, pethoxamid, pretilachlor, propachlor, propisochlor and thenylchlor, oxyacetanilides such as flufenacet and mefenacet, acetanilides such as diphenamid, naproanilide, napropamide and napropamide-M, tetrazolinones such fentrazamide, and other herbicides such as anilofos, cafenstrole, fenoxasulfone, ipfencarbazone, piperophos, pyroxasulfone, dimesulfazet and isoxazoline compounds of the formulae 11.1, II.2, II.3, II.4, II.5, II.6, II.7, II.8 and II.9 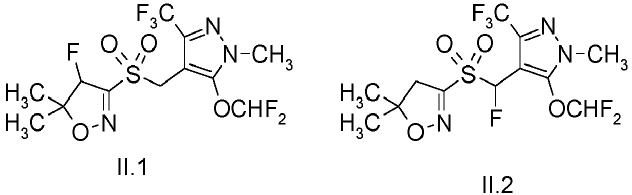 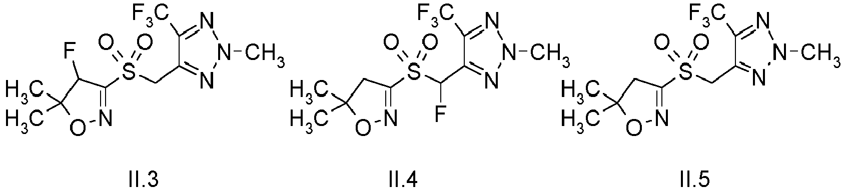 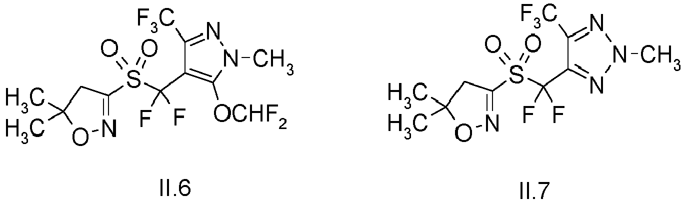 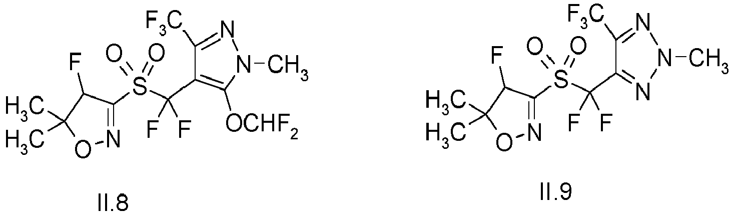
   the isoxazoline compounds of the formula (II) are known in the art, e.g. from WO 2006/024820, WO 2006/037945, WO 2007/071900 and WO 2007/096576;
   among the VLCFA inhibitors, preference is given to chloroacetamides and oxyacetamides;
b11) from the group of the cellulose biosynthesis inhibitors:
   chlorthiamid, dichlobenil, flupoxam, indaziflam, isoxaben, triaziflam and 1-cyclohexyl-5-pentafluorphenyloxy-1⁴-[1,2,4,6]thiatriazin-3-ylamine (CAS 175899-01-1);
b12) from the group of the decoupler herbicides:
   dinoseb, dinoterb and DNOC and its salts;
b13) from the group of the auxinic herbicides:
   2,4-D and its salts and esters such as clacyfos, 2,4-DB and its salts and esters, aminocyclopyrachlor and its salts and esters, aminopyralid and its salts such as aminopyralid-dimethylammonium, aminopyralid-tris(2-hydroxypropyl)ammonium and its esters, benazolin, benazolin-ethyl, chloramben and its salts and esters, clomeprop, clopyralid and its salts and esters, dicamba and its salts and esters, dichlorprop and its salts and esters, dichlorprop-P and its salts and esters, flopyrauxifen, fluroxypyr, fluroxypyr-butometyl, fluroxypyr-meptyl, halauxifen and its salts and esters (CAS 943832-60-8); MCPA and its salts and esters, MCPA-thioethyl, MCPB and its salts and esters, mecoprop and its salts and esters, mecoprop-P and its salts and esters, picloram and its salts and esters, quinclorac, quinmerac, TBA (2,3,6) and its salts and esters, triclopyr and its salts and esters, florpyrauxifen, florpyrauxifen-benzyl (CAS 1390661-72-9) and 4-amino-3-chloro-5-fluoro-6-(7-fluoro-1H-indol-6-yl)picolinic acid (CAS 1629965-65-6);
b14) from the group of the auxin transport inhibitors: diflufenzopyr, diflufenzopyr-sodium, naptalam and naptalam-sodium;
b15) from the group of the other herbicides: bromobutide, chlorflurenol, chlorflurenol-methyl, cinmethylin, cumyluron, cyclopyrimorate (CAS 499223-49-3) and its salts and esters, dalapon, dazomet, difenzoquat, difenzoquat-metilsulfate, dimethipin, DSMA, dymron, endothal and its salts, etobenzanid, flurenol, flurenol-butyl, flurprimidol, fosamine, fosamine-ammonium, indanofan, maleic hydrazide, mefluidide, metam, methiozolin, methyl azide, methyl bromide, methyl-dymron, methyl iodide, MSMA, oleic acid, oxaziclomefone, pelargonic acid, pyributicarb, quinoclamine, tetflupyrolimet and tridiphane.

Preferred herbicides B that can be used in combination with the compositions according to the present invention are:
b1) from the group of the lipid biosynthesis inhibitors:
   clethodim, clodinafop-propargyl, cycloxydim, cyhalofop-butyl, diclofop-methyl, fenoxaprop-P-ethyl, fluazifop-P-butyl, haloxyfop-P-methyl, metamifop, pinoxaden, profoxydim, propaquizafop, quizalofop-P-ethyl, quizalofop-P-tefuryl, sethoxydim, tepraloxydim, tralkoxydim, 4-(4'-Chloro-4-cyclopropyl-2'-fluoro[1,1'-biphenyl]-3-yl)-5-hydroxy-2,2,6,6-tetramethyl-2H-pyran-3(6H)-one (CAS 1312337-72-6); 4-(2',4'-Dichloro-4-cyclopropyl[1,1'-biphenyl]-3-yl)-5-hydroxy-2,2,6,6-tetramethyl-2H-pyran-3(6H)-one (CAS 1312337-45-3); 4-(4'-Chloro-4-ethyl-2'-fluoro[1,1'-biphenyl]-3-yl)-5-hydroxy-2,2,6,6-tetramethyl-2H-pyran-3(6H)-one (CAS 1033757-93-5); 4-(2',4'-Dichloro-4-ethyl[1,1'-biphenyl]-3-yl)-2,2,6,6-tetramethyl-2H-pyran-3,5(4H,6H)-dione (CAS 1312340-84-3); 5-(Acetyloxy)-4-(4'-chloro-4-cyclopropyl-2'-fluoro[1,1'-biphenyl]-3-yl)-3,6-dihydro-2,2,6,6-tetramethyl-2H-pyran-3-one (CAS 1312337-48-6); 5-(Acetyloxy)-4-(2',4'-dichloro-4-cyclopropyl-[1,1'-biphenyl]-3-yl)-3,6-dihydro-2,2,6,6-tetramethyl-2H-pyran-3-one; 5-(Acetyloxy)-4-(4'-chloro-4-ethyl-2'-fluoro[1,1'-biphenyl]-3-yl)-3,6-dihydro-2,2,6,6-tetramethyl-2H-pyran-3-one (CAS 1312340-82-1); 5-(Acetyloxy)-4-(2',4'-dichloro-4-ethyl[1,1'-biphenyl]-3-yl)-3,6-dihydro-2,2,6,6-tetramethyl-2H-pyran-3-one (CAS 1033760-55-2); 4-(4'-Chloro-4-cyclopropyl-2'-fluoro[1,1'-biphenyl]-3-yl)-5,6-dihydro-2,2,6,6-tetramethyl-5-oxo-2H-pyran-3-yl carbonic acid methyl ester (CAS 1312337-51-1); 4-(2',4'-Dichloro-4-cyclopropyl- [1,1'-biphenyl]-3-yl)-5,6-dihydro-2,2,6,6-tetramethyl-5-oxo-2H-pyran-3-yl carbonic acid methyl ester; 4-(4'-Chloro-4-ethyl-2'-fluoro[1,1'-biphenyl]-3-yl)-5,6-dihydro-2,2,6,6-tetramethyl-5-oxo-2H-pyran-3-yl carbonic acid methyl ester (CAS 1312340-83-2); 4-(2',4'-Dichloro-4-ethyl[1,1'-biphenyl]-3-yl)-5,6-dihydro-2,2,6,6-tetramethyl-5-oxo-2H-pyran-3-yl carbonic acid methyl ester (CAS 1033760-58-5); benfuresate, dimepiperate, EPTC, esprocarb, ethofumesate, molinate, orbencarb, prosulfocarb, thiobencarb and triallate;
b2) from the group of the ALS inhibitors:
   amidosulfuron, azimsulfuron, bensulfuron-methyl, bispyribac-sodium, chlorimuron-ethyl, chlorsulfuron, cloransulam-methyl, cyclosulfamuron, diclosulam, ethametsulfuron-methyl, ethoxysulfuron, flazasulfuron, florasulam, flucarbazone-sodium, flucetosulfuron, flumetsulam, flupyrsulfuron-methyl-sodium, foramsulfuron, halosulfuron-methyl, imazamethabenz-methyl, imazamox, imazapic, imazapyr, imazaquin, imazethapyr, imazosulfuron, iodosulfuron, iodosulfuron-methyl-sodium, iofensulfuron, iofensulfuron-sodium, mesosulfuron, metazosulfuron, metosulam, metsulfuron-methyl, nicosulfuron, orthosulfamuron, oxasulfuron, penoxsulam, primisulfuron-methyl, propoxycarbazon-sodium, propyrisulfuron, prosulfuron, pyrazosulfuron-ethyl, pyribenzoxim, pyrimisulfan, pyriftalid, pyriminobac-methyl, pyrithiobac-sodium, pyroxsulam, rimsulfuron, sulfometuron-methyl, sulfosulfuron, thiencarbazone-methyl, thifensulfuron-methyl, triasulfuron, tribenuron-methyl, trifloxysulfuron, triflusulfuron-methyl, tritosulfuron and triafamone;
b3) from the group of the photosynthesis inhibitors:
   ametryn, amicarbazone, atrazine, bentazone, bentazone-sodium, bromoxynil and its salts and esters, chloridazone, chlorotoluron, cyanazine, desmedipham, diquat-dibromide, diuron, fluometuron, hexazinone, ioxynil and its salts and esters, isoproturon, lenacil, linuron, metamitron, methabenzthiazuron, metribuzin, paraquat, paraquat-dichloride, phenmedipham, propanil, pyridate, simazine, terbutryn, terbuthylazine, thidiazuron, 1-(6-tert-butylpyrimidin-4-yl)-2-hydroxy-4-methoxy-3-methyl-2H-pyrrol-5-one (CAS 1654744-66-7), 1-(5-tert-butylisoxazol-3-yl)-2-hydroxy-4-methoxy-3-methyl-2H-pyrrol-5-one (CAS 1637455-12-9), 1-(5-tert-butylisoxazol-3-yl)-4-chloro-2-hydroxy-3-methyl-2H-pyrrol-5-one (CAS 1637453-94-1), 1-(5-tert-butyl-1-methyl-pyrazol-3-yl)-4-chloro-2-hydroxy-3-methyl-2H-pyrrol-5-one (CAS 1654057-29-0), 1-(5-tert-butyl-1-methyl-pyrazol-3-yl)-3-chloro-2-hydroxy-4-methyl-2H-pyrrol-5-one (CAS 1654747-80-4), 4-hydroxy-1-methoxy-5-methyl-3-[4-(trifluoromethyl)-2-pyridyl]imidazolidin-2-one; (CAS 2023785-78-4), 4-hydroxy-1,5-dimethyl-3-[4-(trifluoromethyl)-2-pyridyl]imidazolidin-2-one (CAS 2023785-79-5), 5-ethoxy-4-hydroxy-1-methyl-3-[4-(trifluoromethyl)-2-pyridyl]imidazolidin-2-one (CAS 1701416-69-4), 4-hydroxy-1-methyl-3-[4-(trifluoromethyl)-2-pyridyl]imidazolidin-2-one (CAS 1708087-22-2), 4-hydroxy-1,5-dimethyl-3-[1-methyl-5-(trifluoromethyl)pyrazol-3-yl]imidazolidin-2-one (CAS 2023785-80-8) and 1-(5-tert-butylisoxazol-3-yl)-4-ethoxy-5-hydroxy-3-methyl-imidazolidin-2-one (CAS 1844836-64-1);
b4) from the group of the protoporphyrinogen-IX oxidase inhibitors:
   acifluorfen-sodium, bencarbazone, benzfendizone, butafenacil, carfentrazone-ethyl, cinidon-ethyl, cyclopyranil, flufenpyr-ethyl, flumiclorac-pentyl, flumioxazin, fluoroglycofen-ethyl, fomesafen, lactofen, oxadiargyl, oxadiazon, oxyfluorfen, pentoxazone, pyraflufen, pyraflufen-ethyl, saflufenacil, sulfentrazone, tiafenacil, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6; S-3100), N-ethyl-3-(2,6-dichloro-4-trifluoromethylphenoxy)-5-methyl-1*H*-pyrazole-1-carboxamide (CAS 452098-92-9), N-tetrahydrofurfuryl-3-(2,6-dichloro-4-trifluoromethylphenoxy)-5-methyl-1*H*-pyrazole-1-carboxamide (CAS 915396-43-9), N-ethyl-3-(2-chloro-6-fluoro-4-trifluoromethylphenoxy)-5-methyl-1*H*-pyrazole-1-carboxamide (CAS 452099-05-7), N-tetrahydrofurfuryl-3-(2-chloro-6-fluoro-4-trifluoromethylphenoxy)-5-methyl-1*H*-pyrazole-1-carboxamide (CAS 452100-03-7), 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione (CAS 451484-50-7), 2-(2,2,7-trifluoro-3-oxo-4-prop-2-ynyl-3,4-dihydro-2H-benzo[1,4]oxazin-6-yl)-4,5,6,7-tetrahydro-isoindole-1,3-dione (CAS 1300118-96-0) ;1-methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione (CAS 1304113-05-0), and 3-[7-chloro-5-fluoro-2-(trifluoromethyl)-1H-benzimidazol-4-yl]-1-methyl-6-(trifluoromethyl)-1H-pyrimidine-2,4-dione (CAS 212754-02-4),
   2-[2-chloro-5-[3-chloro-5-(trifluoromethyl)-2-pyridinyl]-4-fluorophenoxy]-2-methoxy-acetic acid methyl ester (CAS 1970221-16-9), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-acetic acid methyl ester (CAS 2158274-96-3), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 158274-50-9), methyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2271389-22-9), ethyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2230679-62-4), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-acetic acid methyl ester (CAS 2158275-73-9), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy] acetic acid ethyl ester (CAS 2158274-56-5), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-N-(methylsulfonyl)-acetamide (CAS 2158274-53-2), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-N-(methylsulfonyl)-acetamide(CAS 2158276-22-1);
b5) from the group of the bleacher herbicides:
   aclonifen, amitrole, beflubutamid, benzobicyclon, bicyclopyrone, clomazone, cypyrafluone, diflufenican, fenquinotrione, flumeturon, flurochloridone, flurtamone, isoxaflutole, mesotrione, oxotrione (CAS 1486617-21-3), norflurazon, picolinafen, pyrasulfotole, pyrazolynate, sulcotrione, tefuryltrione, tembotrione, tolpyralate, topramezone, 4-(3-trifluoromethylphenoxy)-2-(4-trifluoromethylphenyl)pyrimidine (CAS 180608-33-7), 2-chloro-3-methylsulfanyl-N-(1-methyltetrazol-5-yl)-4-(trifluoromethyl)benzamide (CAS 1361139-71-0), bixlozone, 2-(2,5-dichlorophenyl)methyl-4,4-dimethyl-3-isoxazolidinone (CAS 81778-66-7), chloro-2-[-3-(difluoromethyl)isoxazol-5-yl]phenyl-5-chloropyrimidin-2-yl-ether and 2-(3,4-dimethoxyphenyl)-4-[2-hydroxy-6-oxocyclohex-1-en-1yl)carbonyl]-6-methylpyridazin-3*(2H)*-one;
b6) from the group of the EPSP synthase inhibitors:
   glyphosate, glyphosate-isopropylammonium, glyphosate-potassium and glyphosate-trimesium (sulfosate);
b7) from the group of the glutamine synthase inhibitors:
   glufosinate, glufosinate-P, glufosinate-ammonium;
b8) from the group of the DHP synthase inhibitors: asulam;
b9) from the group of the mitosis inhibitors:
   benfluralin, dithiopyr, ethalfluralin, flamprop, flamprop-isopropyl, flamprop-methyl, flamprop-M-isopropyl, flamprop-M-methyl, oryzalin, pendimethalin, thiazopyr and trifluralin;
b10) from the group of the VLCFA inhibitors:
   acetochlor, alachlor, amidochlor, anilofos, butachlor, cafenstrole, dimethenamid, dimethenamid-P, dimesulfazet, fentrazamide, flufenacet, mefenacet, metazachlor, metolachlor, S-metolachlor, naproanilide, napropamide, napropamide-M, pretilachlor, fenoxasulfone, ipfencarbazone, pyroxasulfone, thenylchlor and isoxazoline-compounds of the formulae II.1, II.2, II.3, II.4, II.5, II.6, II.7, II.8 and II.9 as mentioned above;
b11) from the group of the cellulose biosynthesis inhibitors: dichlobenil, flupoxam, indaziflam, isoxaben, triaziflam and 1-cyclohexyl-5-pentafluorphenyloxy-1⁴-[1,2,4,6]thiatriazin-3-ylamine (CAS 175899-01-1);
b13) from the group of the auxinic herbicides:
   2,4-D and its salts and esters, aminocyclopyrachlor and its salts and esters, aminopyralid and its salts such as aminopyralid-dimethylammonium, aminopyralid-tris(2-hydroxypropyl)ammonium and its esters, clopyralid and its salts and esters, dicamba and its salts and esters, dichlorprop-P and its salts and esters, flopyrauxifen, fluroxypyr-meptyl, halauxifen and its salts and esters (CAS 943832-60-8, MCPA and its salts and esters, MCPB and its salts and esters, mecoprop-P and its salts and esters, picloram and its salts and esters, quinclorac, quinmerac, triclopyr and its salts and esters, florpyrauxifen , florpyrauxifen-benzyl (CAS 1390661-72-9) and 4-amino-3-chloro-5-fluoro-6-(7-fluoro-1H-indol-6-yl)picolinic acid (CAS 1629965-65-6);
b14) from the group of the auxin transport inhibitors: diflufenzopyr and diflufenzopyr-sodium;
b15) from the group of the other herbicides: bromobutide, cinmethylin, cumyluron, cyclopyrimorate (CAS 499223-49-3) and its salts and esters, dalapon, difenzoquat, difenzoquat-metilsulfate, DSMA, dymron (= daimuron), indanofan, metam, methylbromide, MSMA, oxaziclomefone, pyributicarb, tetflupyrolimet and tridiphane.

Particularly preferred herbicides B that can be used in combination with the compositions according to the present invention are:
b1) from the group of the lipid biosynthesis inhibitors: clodinafop-propargyl, cycloxydim, cyhalofop-butyl, fenoxaprop-P-ethyl, pinoxaden, profoxydim, tepraloxydim, tralkoxydim, 4-(4'-Chloro-4-cyclopropyl-2'-fluoro[1,1'-biphenyl]-3-yl)-5-hydroxy-2,2,6,6-tetramethyl-2H-pyran-3(6H)-one (CAS 1312337-72-6); 4-(2',4'-Dichloro-4-cyclopropyl[1,1'-biphenyl]-3-yl)-5-hydroxy-2,2,6,6-tetramethyl-2H-pyran-3(6H)-one (CAS 1312337-45-3); 4-(4'-Chloro-4-ethyl-2'-fluoro[1,1'-biphenyl]-3-yl)-5-hydroxy-2,2,6,6-tetramethyl-2H-pyran-3(6H)-one (CAS 1033757-93-5); 4-(2',4'-Dichloro-4-ethyl[1,1'-biphenyl]-3-yl)-2,2,6,6-tetramethyl-2H-pyran-3,5(4H,6H)-dione (CAS 1312340-84-3); 5-(Acetyloxy)-4-(4'-chloro-4-cyclopropyl-2'-fluoro[1,1'-biphenyl]-3-yl)-3,6-dihydro-2,2,6,6-tetramethyl-2H-pyran-3-one (CAS 1312337-48-6); 5-(Acetyloxy)-4-(2',4'-dichloro-4-cyclopropyl-[1,1'-biphenyl]-3-yl)-3,6-dihydro-2,2,6,6-tetramethyl-2H-pyran-3-one; 5-(Acetyloxy)-4-(4'-chloro-4-ethyl-2'-fluoro[1,1'-biphenyl]-3-yl)-3,6-dihydro-2,2,6,6-tetramethyl-2H-pyran-3-one (CAS 1312340-82-1); 5-(Acetyloxy)-4-(2',4'-dichloro-4-ethyl[1,1'-biphenyl]-3-yl)-3,6-dihydro-2,2,6,6-tetramethyl-2H-pyran-3-one (CAS 1033760-55-2); 4-(4'-Chloro-4-cyclopropyl-2'-fluoro[1,1'-biphenyl]-3-yl)-5,6-dihydro-2,2,6,6-tetramethyl-5-oxo-2H-pyran-3-yl carbonic acid methyl ester (CAS 1312337-51-1); 4-(2',4'-Dichloro-4-cyclopropyl- [1,1'-biphenyl]-3-yl)-5,6-dihydro-2,2,6,6-tetramethyl-5-oxo-2H-pyran-3-yl carbonic acid methyl ester; 4-(4'-Chloro-4-ethyl-2'-fluoro[1,1'-biphenyl]-3-yl)-5,6-dihydro-2,2,6,6-tetramethyl-5-oxo-2H-pyran-3-yl carbonic acid methyl ester (CAS 1312340-83-2); 4-(2',4'-Dichloro-4-ethyl[1,1'-biphenyl]-3-yl)-5,6-dihydro-2,2,6,6-tetramethyl-5-oxo-2H-pyran-3-yl carbonic acid methyl ester (CAS 1033760-58-5); esprocarb, prosulfocarb, thiobencarb and triallate;
b2) from the group of the ALS inhibitors: bensulfuron-methyl, bispyribac-sodium, cyclosulfamuron, diclosulam, flumetsulam, flupyrsulfuron-methyl-sodium, foramsulfuron, imazamox, imazapic, imazapyr, imazaquin, imazethapyr, imazosulfuron, iodosulfuron, iodosulfuron-methyl-sodium, iofensulfuron, iofensulfuron-sodium, mesosulfuron, metazosulfuron, nicosulfuron, penoxsulam, propoxycarbazon-sodium, propyrisulfuron, pyrazosulfuron-ethyl, pyroxsulam, rimsulfuron, sulfosulfuron, thiencarbazon-methyl, tritosulfuron and triafamone;
b3) from the group of the photosynthesis inhibitors: ametryn, atrazine, diuron, fluometuron, hexazinone, isoproturon, linuron, metribuzin, paraquat, paraquat-dichloride, propanil, terbutryn, terbuthylazine, 1-(5-tert-butylisoxazol-3-yl)-2-hydroxy-4-methoxy-3-methyl-2H-pyrrol-5-one (CAS 1637455-12-9), 1-(5-tert-butylisoxazol-3-yl)-4-chloro-2-hydroxy-3-methyl-2H-pyrrol-5-one (CAS 1637453-94-1), 1-(5-tert-butylisoxazol-3-yl)-4-ethoxy-5-hydroxy-3-methyl-imidazolidin-2-one (CAS 1844836-64-1);
b4) from the group of the protoporphyrinogen-IX oxidase inhibitors: cyclopyranil, flumioxazin, oxyfluorfen, pyraflufen, pyraflufen-ethyl, saflufenacil, sulfentrazone, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6; S-3100), 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione (CAS 451484-50-7), 2-(2,2,7-trifluoro-3-oxo-4-prop-2-ynyl-3,4-dihydro-2H-benzo[1,4]oxazin-6-yl)-4,5,6,7-tetrahydro-isoindole-1,3-dione (CAS 1300118-96-0), and 1-methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione (CAS 1304113-05-0);
   2-[2-chloro-5-[3-chloro-5-(trifluoromethyl)-2-pyridinyl]-4-fluorophenoxy]-2-methoxy-acetic acid methyl ester (CAS 1970221-16-9), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-acetic acid methyl ester (CAS 2158274-96-3), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 158274-50-9), methyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2271389-22-9), ethyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2230679-62-4), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-acetic acid methyl ester (CAS 2158275-73-9), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy] acetic acid ethyl ester (CAS 2158274-56-5), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-N-(methylsulfonyl)-acetamide (CAS 2158274-53-2), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-N-(methylsulfonyl)-acetamide (CAS 2158276-22-1);
b5) from the group of the bleacher herbicides: amitrole, bicyclopyrone, clomazone, diflufenican, fenquinotrione, flumeturon, flurochloridone, isoxaflutole, mesotrione, oxotrione (CAS 1486617-21-3), picolinafen, sulcotrione, tefuryltrione, tembotrione, tolpyralate, topramezone, 2-chloro-3-methylsulfanyl-N-(1-methyltetrazol-5-yl)-4-(trifluoromethyl)benzamide (CAS 1361139-71-0), bixlozone, 2-(2,5-dichlorophenyl)methyl-4,4-dimethyl-3-isoxazolidinone (CAS 81778-66-7), and chloro-2-[-3-(difluoromethyl)isoxazol-5-yl]phenyl-5-chloropyrimidin-2-yl-ether;
b6) from the group of the EPSP synthase inhibitors: glyphosate, glyphosate-isopropylammonium and glyphosate-trimesium (sulfosate);
b7) from the group of the glutamine synthase inhibitors: glufosinate, glufosinate-P and glufosinate-ammonium;
b9) from the group of the mitosis inhibitors: pendimethalin and trifluralin;
b10) from the group of the VLCFA inhibitors: acetochlor, cafenstrole, dimethenamid-P, fentrazamide, flufenacet, mefenacet, metazachlor, metolachlor, S-metolachlor, fenoxasulfone, ipfencarbazone and pyroxasulfone; likewise, preference is given to isoxazoline compounds of the formulae II.1, II.2, II.3, II.4, II.5, II.6, II.7, II.8 and II.9 as mentioned above;
b11) from the group of the cellulose biosynthesis inhibitors: indaziflam, isoxaben and triaziflam;
b13) from the group of the auxinic herbicides: 2,4-D and its salts and esters such as clacyfos, and aminocyclopyrachlor and its salts and esters, aminopyralid and its salts and its esters, clopyralid and its salts and esters, dicamba and its salts and esters, flopyrauxifen, fluroxypyr-meptyl, halauxifen, halauxifen-methyl, quinclorac, quinmerac, florpyrauxifen, florpyrauxifen-benzyl (CAS 1390661-72-9) and 4-amino-3-chloro-5-fluoro-6-(7-fluoro-1H-indol-6-yl)picolinic acid (CAS 1629965-65-6);
b14) from the group of the auxin transport inhibitors: diflufenzopyr and diflufenzopyr-sodium,
b15) from the group of the other herbicides: cinmethylin, dymon (= daimuron), indanofan, oxaziclomefone and tetflupyrolimet.

In another embodiment of the present invention the compositions according to the present invention comprise at least one safener C.

Safeners are chemical compounds which prevent or reduce damage on useful plants without having a major impact on the herbicidal action of the herbicidal active components of the present compositions towards unwanted plants. They can be applied either before sowings (e.g. on seed treatments, shoots or seedlings) or in the pre-emergence application or post-emergence application of the useful plant. The safeners and the ***compositions*** of the invention and/or the herbicides B can be applied simultaneously or in succession.

Suitable safeners are e.g. (quinolin-8-oxy)acetic acids, 1-phenyl-5-haloalkyl-1H-1,2,4-triazol-3-carboxylic acids, 1-phenyl-4,5-dihydro-5-alkyl-1H-pyrazol-3,5-dicarboxylic acids, 4,5-dihydro-5,5-diaryl-3-isoxazol carboxylic acids, dichloroacetamides, alpha-oximinophenylacetonitriles, acetophenonoximes, 4,6-dihalo-2-phenylpyrimidines, N-[[4-(aminocarbonyl)phenyl]sulfonyl]-2-benzoic amides, 1,8-naphthalic anhydride, 2-halo-4-(haloalkyl)-5-thiazol carboxylic acids, phosphorthiolates and N-alkyl-O-phenylcarbamates and their agriculturally acceptable salts and their agriculturally acceptable derivatives such amides, esters, and thioesters, provided they have an acid group.

Examples of preferred safeners C are benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4), metcamifen and BPCMS (CAS 54091-06-4).

Especially preferred safeners C are benoxacor, cloquintocet, cyprosulfamide, dichlormid, fenchlorazole, fenclorim, flurazole, fluxofenim, furilazole, isoxadifen, mefenpyr, naphthalic anhydride, oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and metcamifen.

Particularly preferred safeners C are benoxacor, cloquintocet, cyprosulfamide, dichlormid, fenchlorazole, fenclorim, furilazole, isoxadifen, mefenpyr, naphthalic anhydride, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and metcamifen.

The active compounds B of groups b1) to b15) and the active compounds C are known herbicides and safeners, see, for example, The Compendium of Pesticide Common Names (http://www.alanwood.net/pesticides/); Farm Chemicals Handbook 2000 volume 86, Meister Publishing Company, 2000; B. Hock, C. Fedtke, R. R. Schmidt, Herbizide [Herbicides], Georg Thieme Verlag, Stuttgart 1995; W. H. Ahrens, Herbicide Handbook, 7th edition, Weed Science Society of America, 1994; and K. K. Hatzios, Herbicide Handbook, Supplement for the 7th edition, Weed Science Society of America, 1998. 2,2,5-Trimethyl-3-(dichloroacetyl)-1,3-oxazolidine [CAS No. 52836-31-4] is also referred to as R-29148. 4-(Dichloroacetyl)-1-oxa-4-azaspiro[4.5]decane [CAS No. 71526-07-3] is also referred to as AD-67 and MON 4660.

The assignment of the active compounds to the respective mechanisms of action is based on current knowledge. If several mechanisms of action apply to one active compound, this substance was only assigned to one mechanism of action.

Active compounds B and C having a carboxyl group can be employed in the form of the acid, in the form of an agriculturally suitable salt as mentioned above or else in the form of an agriculturally acceptable derivative in the compositions according to the invention.

In the case of dicamba, suitable salts include those, where the counterion is an agriculturally acceptable cation. For example, suitable salts of dicamba are dicamba-sodium, dicamba-potassium, dicamba-methylammonium, dicamba-dimethylammonium, dicamba-isopropylammonium, dicamba-diglycolamine, dicamba-olamine, dicamba-diolamine, dicambatrolamine, dicamba-N,N-bis-(3-aminopropyl)methylamine and dicamba-diethylenetriamine. Examples of a suitable ester are dicamba-methyl and dicamba-butotyl.
Suitable salts of 2,4-D are 2,4-D-ammonium, 2,4-D-dimethylammonium, 2,4-D-diethylammonium, 2,4-D-diethanolammonium (2,4-D-diolamine), 2,4-D-triethanolammonium, 2,4-D-isopropylammonium, 2,4-D-triisopropanolammonium, 2,4-D-heptylammonium, 2,4-D-dodecylammonium, 2,4-D-tetradecylammonium, 2,4-D-triethylammonium, 2,4-D-tris(2-hydroxypropyl)ammonium, 2,4-D-tris(isopropyl)ammonium, 2,4-D-trolamine, 2,4-D-lithium, 2,4-D-sodium and 2,4-D-N,N,N-trimethylethanolammonium (2,4-D choline). Examples of suitable esters of 2,4-D are 2,4-D-butotyl, 2,4-D-2-butoxypropyl, 2,4-D-3-butoxypropyl, 2,4-D-butyl, 2,4-D-ethyl, 2,4-D-ethylhexyl, 2,4-D-isobutyl, 2,4-D-isooctyl, 2,4-D-isopropyl, 2,4-D-meptyl, 2,4-D-methyl, 2,4-D-octyl, 2,4-D-pentyl, 2,4-D-propyl, 2,4-D-tefuryl and clacyfos.
Suitable salts of 2,4-DB are for example 2,4-DB-sodium, 2,4-DB-potassium and 2,4-DB-dimethylammonium. Suitable esters of 2,4-DB are for example 2,4-DB-butyl and 2,4-DB-isoctyl. Suitable salts of dichlorprop are for example dichlorprop-sodium, dichlorprop-potassium and dichlorprop-dimethylammonium. Examples of suitable esters of dichlorprop are dichlorprop-butotyl and dichlorprop-isooctyl.
Suitable salts and esters of MCPA include MCPA-butotyl, MCPA-butyl, MCPA-dimethylammonium, MCPA-diolamine, MCPA-ethyl, MCPA-thioethyl, MCPA-2-ethylhexyl, MCPA-isobutyl, MCPA-isooctyl, MCPA-isopropyl, MCPA-isopropylammonium, MCPA-methyl, MCPA-olamine, MCPA-potassium, MCPA-sodium and MCPA-trolamine.
A suitable salt of MCPB is MCPB sodium. A suitable ester of MCPB is MCPB-ethyl.
Suitable salts of clopyralid are clopyralid-potassium, clopyralid-olamine and clopyralid-tris-(2-hydroxypropyl)ammonium. Example of suitable esters of clopyralid is clopyralid-methyl. Examples of a suitable ester of fluroxypyr are fluroxypyr-meptyl and fluroxypyr-2-butoxy-1-methylethyl, wherein fluroxypyr-meptyl is preferred.
Suitable salts of picloram are picloram-dimethylammonium, picloram-potassium, picloram-triisopropanolammonium, picloram-triisopropylammonium and picloram-trolamine. A suitable ester of picloram is picloram-isoctyl.
A suitable salt of triclopyr is triclopyr-triethylammonium. Suitable esters of triclopyr are for example triclopyr-ethyl and triclopyr-butotyl.
Suitable salts and esters of chloramben include chloramben-ammonium, chloramben-diolamine, chloramben-methyl, chloramben-methylammonium and chloramben-sodium. Suitable salts and esters of 2,3,6-TBA include 2,3,6-TBA-dimethylammonium, 2,3,6-TBA-lithium, 2,3,6-TBA-potassium and 2,3,6-TBA-sodium.
Suitable salts and esters of aminopyralid include aminopyralid-potassium, aminopyralid-dimethylammonium, and aminopyralid-tris(2-hydroxypropyl)ammonium.
Suitable salts of glyphosate are for example glyphosate-ammonium, glyphosate-diammonium, glyphosate-dimethylammonium, glyphosate-isopropylammonium, glyphosate-potassium, glyphosate-sodium, glyphosate-trimesium as well as the ethanolamine and diethanolamine salts, preferably glyphosate-diammonium, glyphosate-isopropylammonium and glyphosate-trimesium (sulfosate).

A suitable salt of glufosinate is for example glufosinate-ammonium.
A suitable salt of glufosinate-P is for example glufosinate-P-ammonium.
Suitable salts and esters of bromoxynil are for example bromoxynil-butyrate, bromoxynil-heptanoate, bromoxynil-octanoate, bromoxynil-potassium and bromoxynil-sodium.
Suitable salts and esters of ioxonil are for example ioxonil-octanoate, ioxonil-potassium and ioxonil-sodium.
Suitable salts and esters of mecoprop include mecoprop-butotyl, mecoprop-dimethylammonium, mecoprop-diolamine, mecoprop-ethadyl, mecoprop-2-ethylhexyl, mecoprop-isoctyl, mecoprop-methyl, mecoprop-potassium, mecoprop-sodium and mecoprop-trolamine.
Suitable salts of mecoprop-P are for example mecoprop-P-butotyl, mecoprop-P-dimethylammonium, mecoprop-P-2-ethylhexyl, mecoprop-P-isobutyl, mecoprop-P-potassium and mecoprop-P-sodium.
A suitable salt of diflufenzopyr is for example diflufenzopyr-sodium.
A suitable salt of naptalam is for example naptalam-sodium.
Suitable salts and esters of aminocyclopyrachlor are for example aminocyclopyrachlor-dimethylammonium, aminocyclopyrachlor-methyl, aminocyclopyrachlor-triisopropanolammonium, aminocyclopyrachlor-sodium and aminocyclopyrachlor-potassium.
A suitable salt of quinclorac is for example quinclorac-dimethylammonium.
A suitable salt of quinmerac is for example quinmerac-dimethylammonium.
A suitable salt of imazamox is for example imazamox-ammonium.
Suitable salts of imazapic are for example imazapic-ammonium and imazapic-isopropylammonium.
Suitable salts of imazapyr are for example imazapyr-ammonium and imazapyr-isopropylammonium.
A suitable salt of imazaquin is for example imazaquin-ammonium.
Suitable salts of imazethapyr are for example imazethapyr-ammonium and imazethapyr-isopropylammonium.
A suitable salt of topramezone is for example topramezone-sodium.

According to a preferred embodiment of the invention, the composition comprises as herbicidal active compound B or component B at least one, preferably exactly one herbicide B.

According to another preferred embodiment of the invention, the composition comprises as herbicidal active compounds B or component B at least two, preferably exactly two herbicides B different from each other.

According to another preferred embodiment of the invention, the composition comprises as herbicidal active compounds B or component B at least three, preferably exactly three herbicides B different from each other.

According to another preferred embodiment of the invention, the composition comprises as saf-ening component C or component C at least one, preferably exactly one safener C.

According to another preferred embodiment of the invention, the composition comprises as component B at least one, preferably exactly one herbicide B, and as component C at least one, preferably exactly one, safener C.

According to another preferred embodiment of the invention, the composition comprises at least two, preferably exactly two, herbicides B different from each other, and as component C at least one, preferably exactly one, safener C.

According to another preferred embodiment of the invention, the composition comprises at least three, preferably exactly three, herbicides B different from each other, and as component C at least one, preferably exactly one, safener C.

According to another preferred embodiment of the invention, the composition comprises, at least one and especially exactly one herbicidally active compound from group b1), in particular selected from the group consisting of clethodim, clodinafop-propargyl, cycloxydim, cyhalofop-butyl, fenoxaprop-ethyl, fenoxaprop-P-ethyl, metamifop, pinoxaden, profoxydim, sethoxydim, tepraloxydim, tralkoxydim, esprocarb, ethofumesate, molinate, prosulfocarb, thiobencarb and triallate.

According to another preferred embodiment of the invention, the composition comprises, at least one and especially exactly one herbicidally active compound from group b2), in particular selected from the group consisting of bensulfuron-methyl, bispyribac-sodium, cloransulam-methyl, chlorsulfuron, clorimuron, cyclosulfamuron, diclosulam, florasulam, flumetsulam, flupyrsulfuron-methyl-sodium, foramsulfuron, imazamox, imazamox-ammonium, imazapic, imazapic-ammonium, imazapic-isopropylammonium, imazapyr, imazapyr-ammonium, imazethapyr-isopropylammonium, imazaquin, imazaquin-ammonium, imazethapyr, imazethapyr-ammonium, imazethapyr-isopropylammonium, imazosulfuron, iodosulfuron-methyl-sodium, iofensulfuron, iofensulfuron-sodium, mesosulfuron-methyl, metazosulfuron, metsulfuron-methyl, metosulam, nicosulfuron, penoxsulam, propoxycarbazon-sodium, pyrazosulfuron-ethyl, pyribenzoxim, pyriftalid, pyroxsulam, propyrisulfuron, rimsulfuron, sulfosulfuron, thiencarbazon-methyl, thifensulfuron-methyl, tribenuron-methyl, tritosulfuron and triafamone.

According to another preferred embodiment of the invention, the composition comprises, at least one and especially exactly one herbicidally active compound from group b3), in particular selected from the group consisting of ametryn, atrazine, bentazon, bromoxynil, bromoxynil-octanoate, bromoxynil-heptanoate, bromoxynil-potassium, diuron, fluometuron, hexazinone, isoproturon, linuron, metamitron, metribuzin, paraquat-dichloride, propanil, simazin, terbutryn and terbuthylazine.

According to another preferred embodiment of the invention, the composition comprises at least one and especially exactly one herbicidally active compound from group b4), in particular selected from the group consisting of acifluorfen, butafencil, carfenetrazone-ethyl, flumioxazin, fomesafen, oxadiargyl, oxyfluorfen, pyraflufen, pyraflufen-ethyl, saflufenacil, sulfentrazone, ethyl [3-[2-chloro-4-fluoro-5-(1-methyl-6-trifluoromethyl-2,4-dioxo-1,2,3,4-tetrahydropyrimidin-3-yl)-phenoxy]-2-pyridyloxy]acetate (CAS 353292-31-6; S-3100)..

According to another preferred embodiment of the invention, the composition comprises, at least one and especially exactly one herbicidally active compound from group b5), in particular selected from the group consisting of amitrole, benzobicyclon, bicyclopyrone, clomazone, diflufenican, fenquintrone, fluometuron, flurochloridone, isoxaflutole, mesotrione, norflurazone, oxotrione (CAS 1486617-21-3), picolinafen, sulcotrione, tefuryltrione, tembotrione, tolpyralate, topramezone, topramezone-sodium, 2-chloro-3-methylsulfanyl-N-(1-methyltetrazol-5-yl)-4-(trifluoromethyl)benzamide (CAS 1361139-71-0), bixlozone , 2-(2,5-dichlorophenyl)methyl-4,4-dimethyl-3-isoxazolidinone (CAS 81778-66-7), and chloro-2-[-3-(difluoromethyl)isoxazol-5-yl]phenyl-5-chloropyrimidin-2-yl-ether.

According to another preferred embodiment of the invention, the composition comprises, at least one and especially exactly one herbicidally active compound from group b6), in particular selected from the group consisting of glyphosate, glyphosate-ammonium, glyphosate-dimethylammonium , glyphosate-isopropylammonium and glyphosate-trimesium (sulfosate) and glyphosate-potassium.

According to another preferred embodiment of the invention, the composition comprises, at least one and especially exactly one herbicidally active compound from group b7), in particular selected from the group consisting of glufosinate, glufosinate-ammonium, glufosinate-P and glufosinate-P-ammonium.

According to another preferred embodiment of the invention, the composition comprises, at least one and especially exactly one herbicidally active compound from group b9), in particular selected from the group consisting of pendimethalin and trifluralin.

According to another preferred embodiment of the invention, the composition comprises at least one and especially exactly one herbicidally active compound from group b10), in particular selected from the group consisting of acetochlor, butachlor, cafenstrole, dimethenamid-P, fentrazamide, flufenacet, mefenacet, metazachlor, metolachlor, S-metolachlor, fenoxasulfone, ipfencarbazone and pyroxasulfone.
Likewise, preference is given to compositions comprising at least one and especially exactly one herbicidally active compound from group b10), in particular selected from the group consisting of isoxazoline compounds of the formulae II.1, II.2, II.3, II.4, II.5, II.6, II.7, II.8 and II.9, as defined above.

According to another preferred embodiment of the invention, the composition comprises, at least one and especially exactly one herbicidally active compound from group b11), in particular indaziflam, isoxaben and triaziflam.

According to another preferred embodiment of the invention, the composition comprises, at least one and especially exactly one herbicidally active compound from group b13), in particular selected from the group consisting of 2,4-D, 2,4-D-isobutyl, 2,4-D-dimethylammonium, 2,4-D-N,N,N-trimethylethanolammonium, aminocyclopyrachlor, aminocyclopyrachlor-potassium, aminocyclopyrachlor-methyl, aminopyralid, aminopyralid-methyl, aminopyralid-dimethylammonium, aminopyralid-tris(2-hydroxypropyl)ammonium, clopyralid, clopyralid-methyl, clopyralid-olamine, dicamba, dicamba-butotyl, dicamba-diglycolamine, dicamba-dimethylammonium, dicamba-diolamine, dicamba-isopropylammonium, dicamba-potassium, dicamba-sodium, dicamba-trolamine, dicamba-N,N-bis-(3-aminopropyl)methylamine, dicamba-diethylenetriamine, flopyrauxifen, fluroxypyr, fluroxypyr-meptyl, halauxifen, halauxifen-methyl, MCPA, MCPA-2-ethylhexyl, MCPA-dimethylammonium, quinclorac, quinclorac-dimethylammonium, quinmerac, quinmerac-dimethylammonium, florpyrauxifen, florpyrauxifen-benzyl (CAS 1390661-72-9), and 4-amino-3-chloro-5-fluoro-6-(7-fluoro-1H-indol-6-yl)picolinic acid (CAS 1629965-65-6).

According to another preferred embodiment of the invention, the composition comprises, at least one and especially exactly one herbicidally active compound from group b14), in particular selected from the group consisting of diflufenzopyr, diflufenzopyr-sodium, dymron, indanofan and diflufenzopyr-sodium.

According to another preferred embodiment of the invention, the composition comprises at least one and especially exactly one herbicidally active compound from group b15), in particular selected from the group consisting of cinmethylin, dymron (= daimuron), indanofan, oxaziclomefone and tetflupyrolimet.

According to another preferred embodiment of the invention, the composition comprises at least one and especially exactly one safener C, in particular selected from the group consisting of benoxacor, cloquintocet, cyprosulfamide, dichlormid, fenchlorazole, fenclorim, furilazole, isoxadifen, mefenpyr, 4-(dichloroacetyl)-1-oxa-4-azaspiro[4.5]decane (MON4660, CAS 71526-07-3) and 2,2,5-trimethyl-3-(dichloroacetyl)-1,3-oxazolidine (R-29148, CAS 52836-31-4).

Here and below, the term "binary compositions" includes compositions comprising trifludimoxazin containing microparticles and either one or more, for example 1, 2 or 3, herbicides B or one or more safeners C.

Correspondingly, the term "ternary compositions" includes compositions comprising trifludimoxazin containing microparticles, one or more, for example 1, 2 or 3, herbicides B and one or more, for example 1, 2 or 3, safeners C.

In binary compositions comprising trifludimoxazin containing microparticles and at least one herbicide B, the weight ratio of trifludimoxazin: active compounds B is generally in the range of from 1:1000 to 1000:1, preferably in the range of from 1:500 to 500:1, in particular in the range of from 1:250 to 250:1 and particularly preferably in the range of from 1:75 to 75:1.

In binary compositions comprising trifludimoxazin containing microparticles and at least one safener C, the weight ratio of the trifludimoxazin : active compounds C is generally in the range of from 1:1000 to 1000:1, preferably in the range of from 1:500 to 500:1, in particular in the range of from 1:250 to 250:1 and particularly preferably in the range of from 1:75 to 75:1.

In ternary compositions comprising trifludimoxazin, at least one herbicide B and at least one safener C, the relative proportions by weight of trifludimoxazin: components B are generally in the range of from 1:1000 to 1000:1, preferably in the range of from 1:500 to 500:1, in particular in the range of from 1:250 to 250:1 and particularly preferably in the range of from 1:75 to 75:1, the weight ratio of trifludimoxazin : components C is generally in the range of from 1:1000 to 1000:1, preferably in the range of from 1:500 to 500:1, in particular in the range of from 1:250 to 250:1 and particularly preferably in the range of from 1:75 to 75:1, and the weight ratio of the components B:C is generally in the range of from 1:1000 to 1000:1, preferably in the range of from 1:500 to 500:1, in particular in the range of from 1:250 to 250:1 and particularly preferably in the range of from 1:75 to 75:1. The weight ratio of trifludimoxazin + B to component C is preferably in the range of from 1:500 to 500:1, in particular in the range of from 1:250 to 250:1 and particularly preferably in the range of from 1:75 to 75:1.

Particularly preferred herbicides B are the herbicides B as defined above; in particular the herbicides B.1 - B.214 listed below in table B:

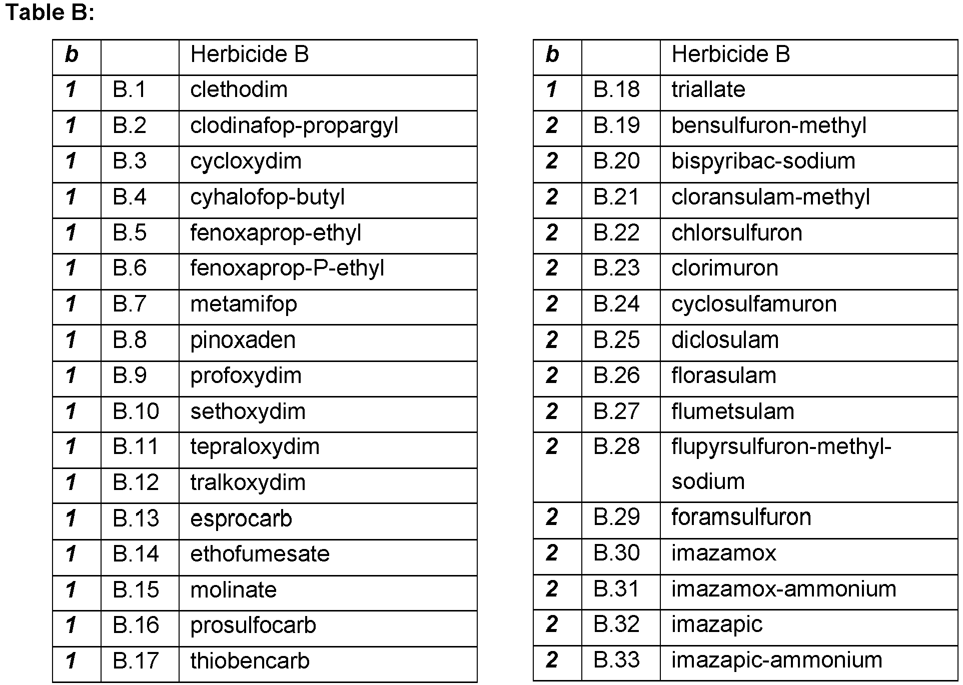

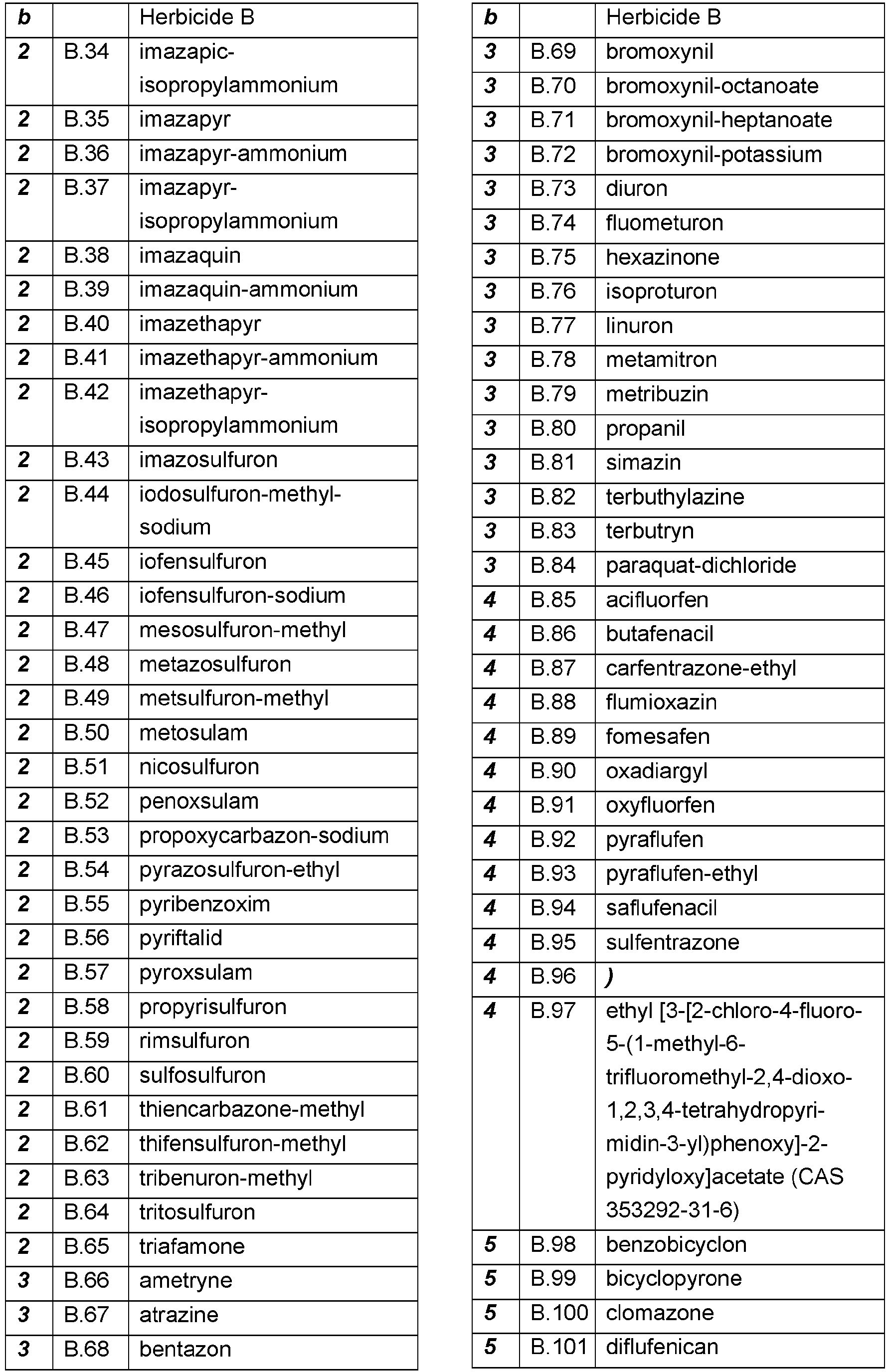

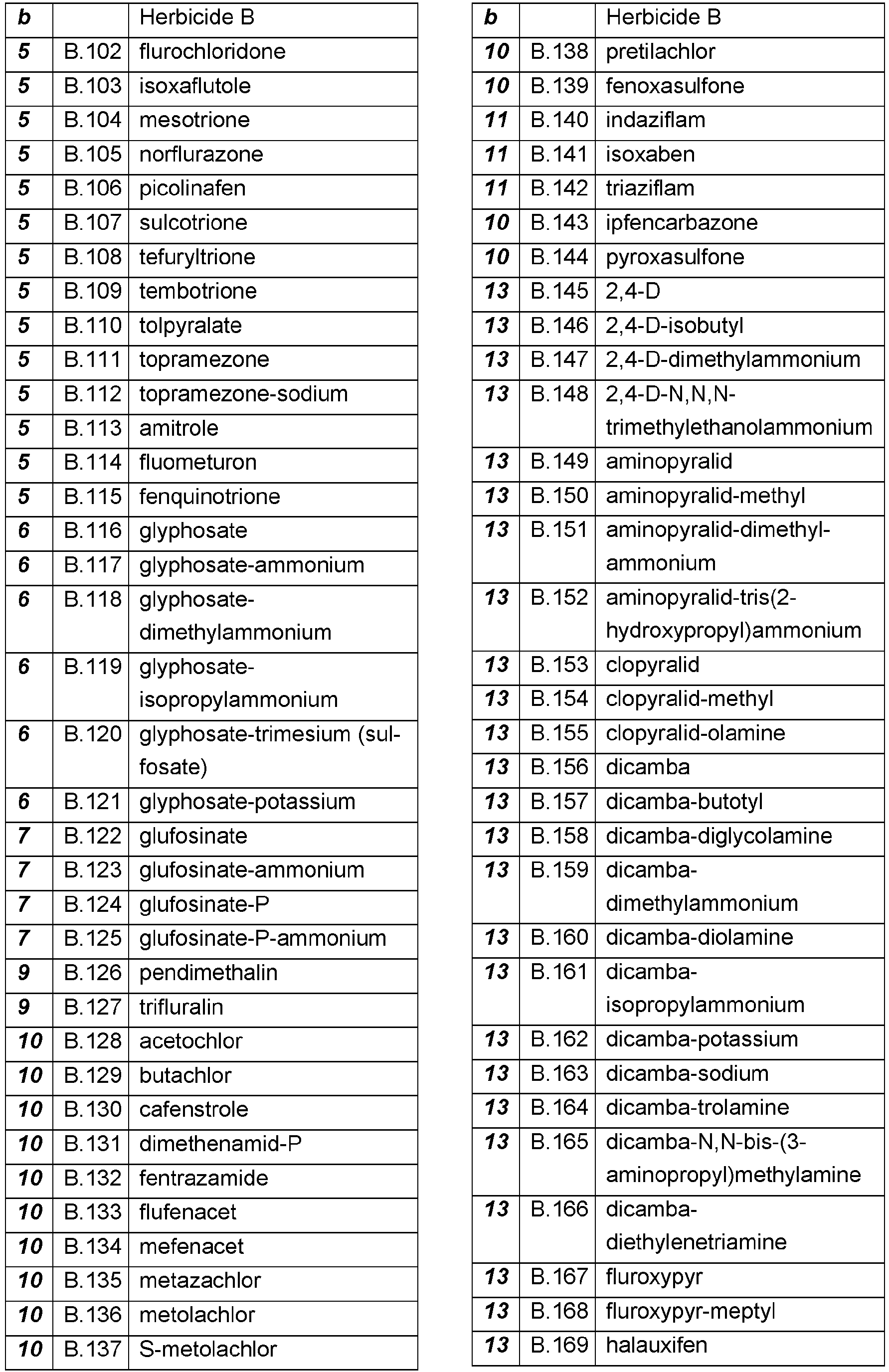

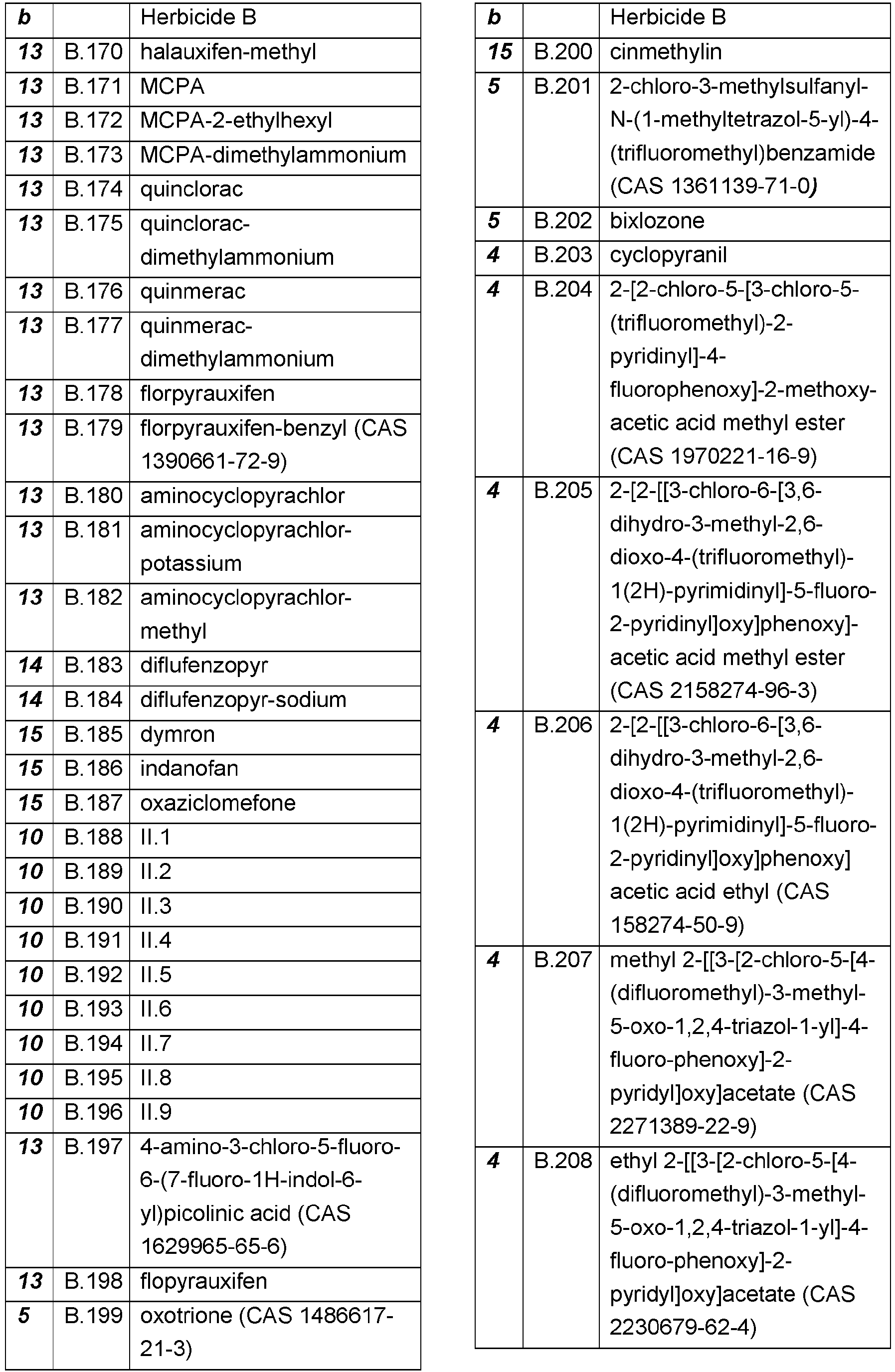

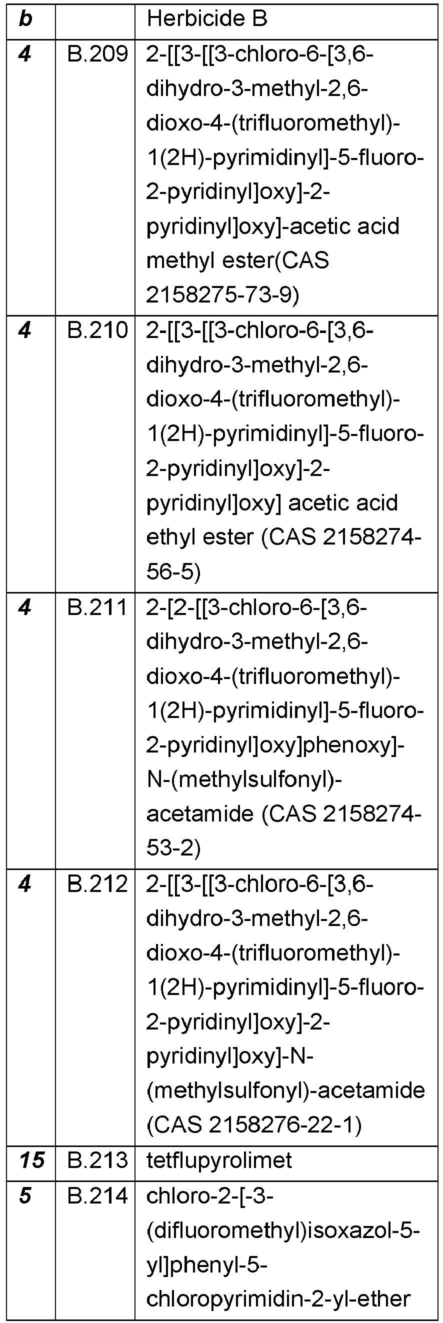

Particularly preferred safeners C, which, as component C, are constituent of the composition according to the invention are the safeners C as defined above; in particular the safeners C.1 - C.17 listed below in table C:

**Table C**

| | Safener C |
|---|---|
| C.1 | benoxacor |
| C.2 | cloquintocet |
| C.3 | cloquintocet-mexyl |
| C.4 | cyprosulfamide |
| C.5 | dichlormid |
| C.6 | fenchlorazole |
| C.7 | fenchlorazole-ethyl |
| C.8 | fenclorim |
| C.9 | furilazole |
| C.10 | isoxadifen |
| C.11 | isoxadifen-ethyl |
| C.12 | mefenpyr |
| C.13 | mefenpyr-diethyl |
| C.14 | naphtalic acid anhydride |
| C.15 | 4-(dichloroacetyl)-1-oxa-4-azaspiro[4.5]decane (MON4660, CAS 71526-07-3) |
| C.16 | 2,2,5-trimethyl-3-(dichloroacetyl)-1,3-oxazolidine (R-29148, CAS 52836-31-4) |
| C.17 | metcamifen |

The weight ratios of the individual components in the preferred mixtures mentioned below are within the limits given above, in particular within the preferred limits.

Particularly preferred are the compositions mentioned below comprising the compositions of the invention containing trifludimoxazin containing microparticles and the substance(s) as defined in the respective row of table 1;

Particularly preferred are compositions 1.1 to 1.3869, comprising the compositions of the invention containing trifludimoxazin containing microparticles and the substance(s) as defined in the respective row of table 1:

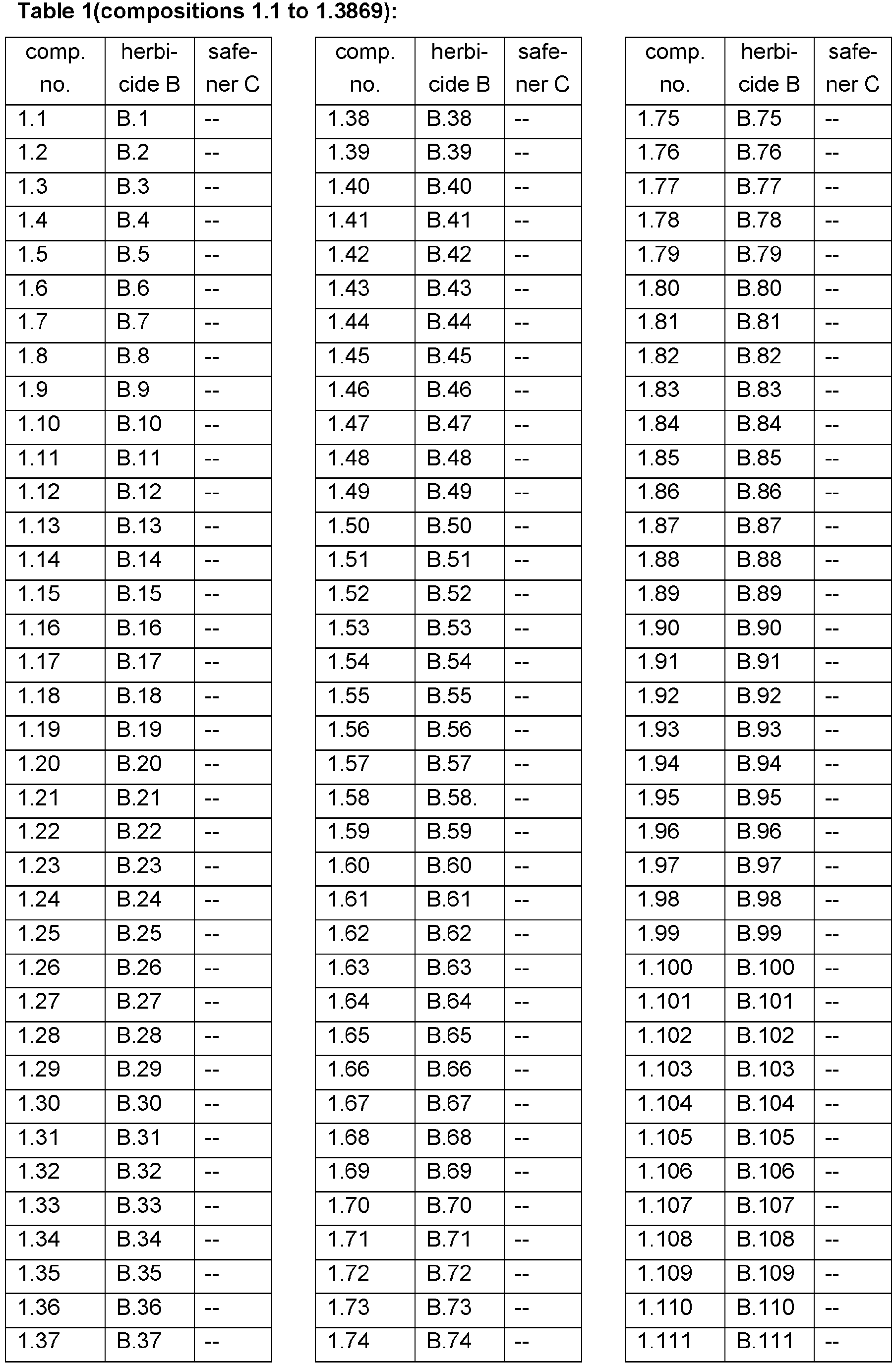

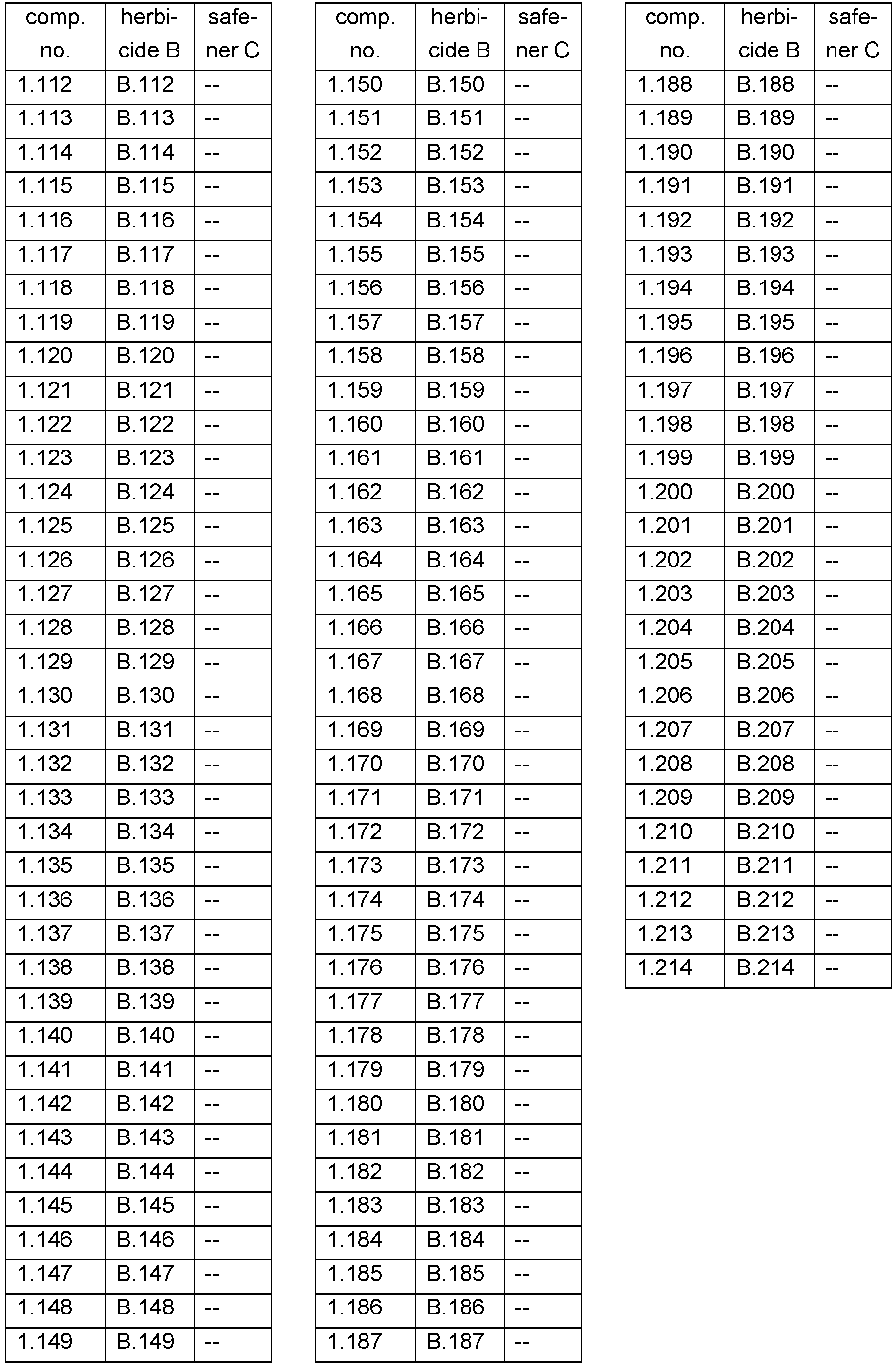

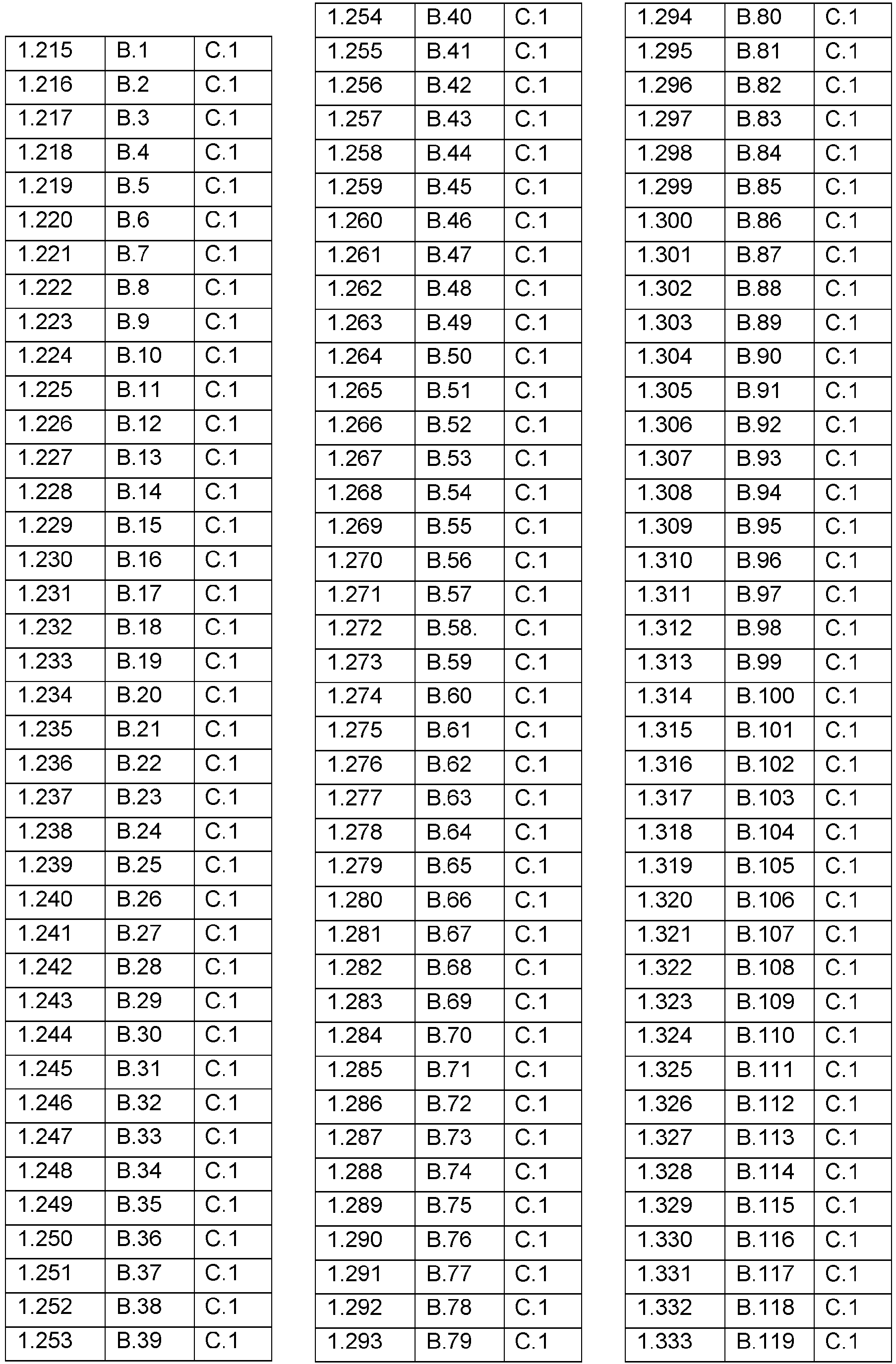

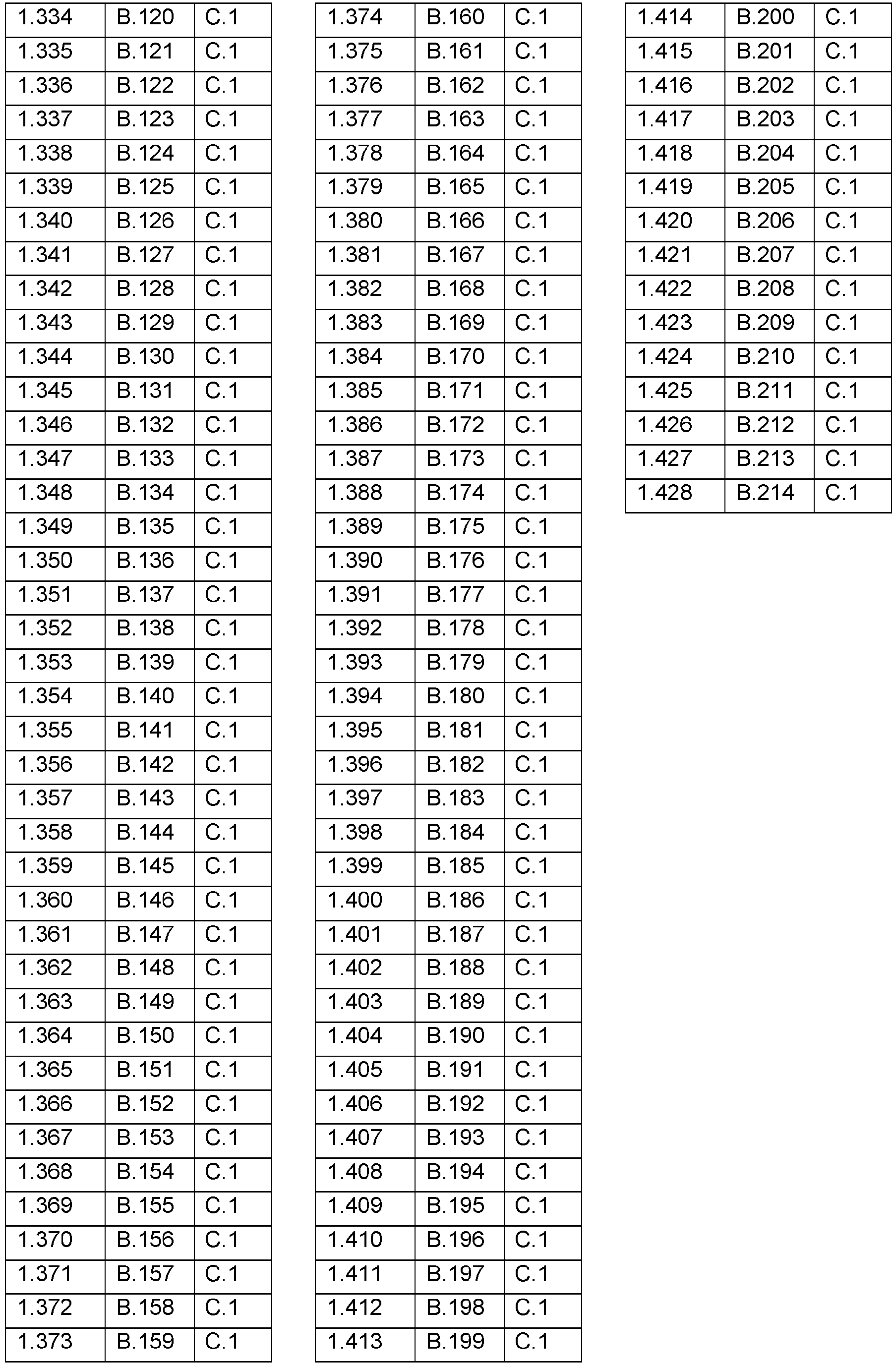

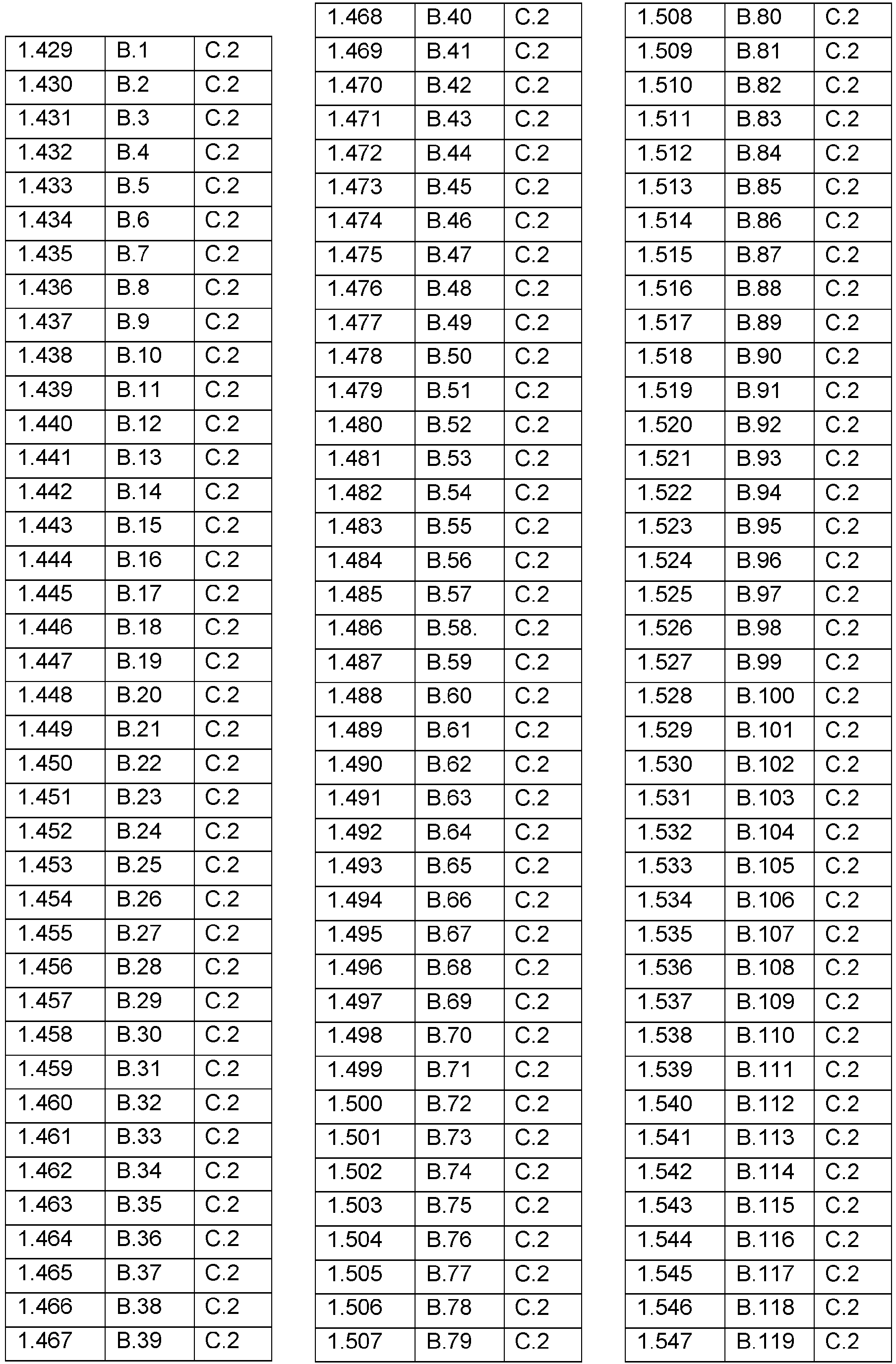

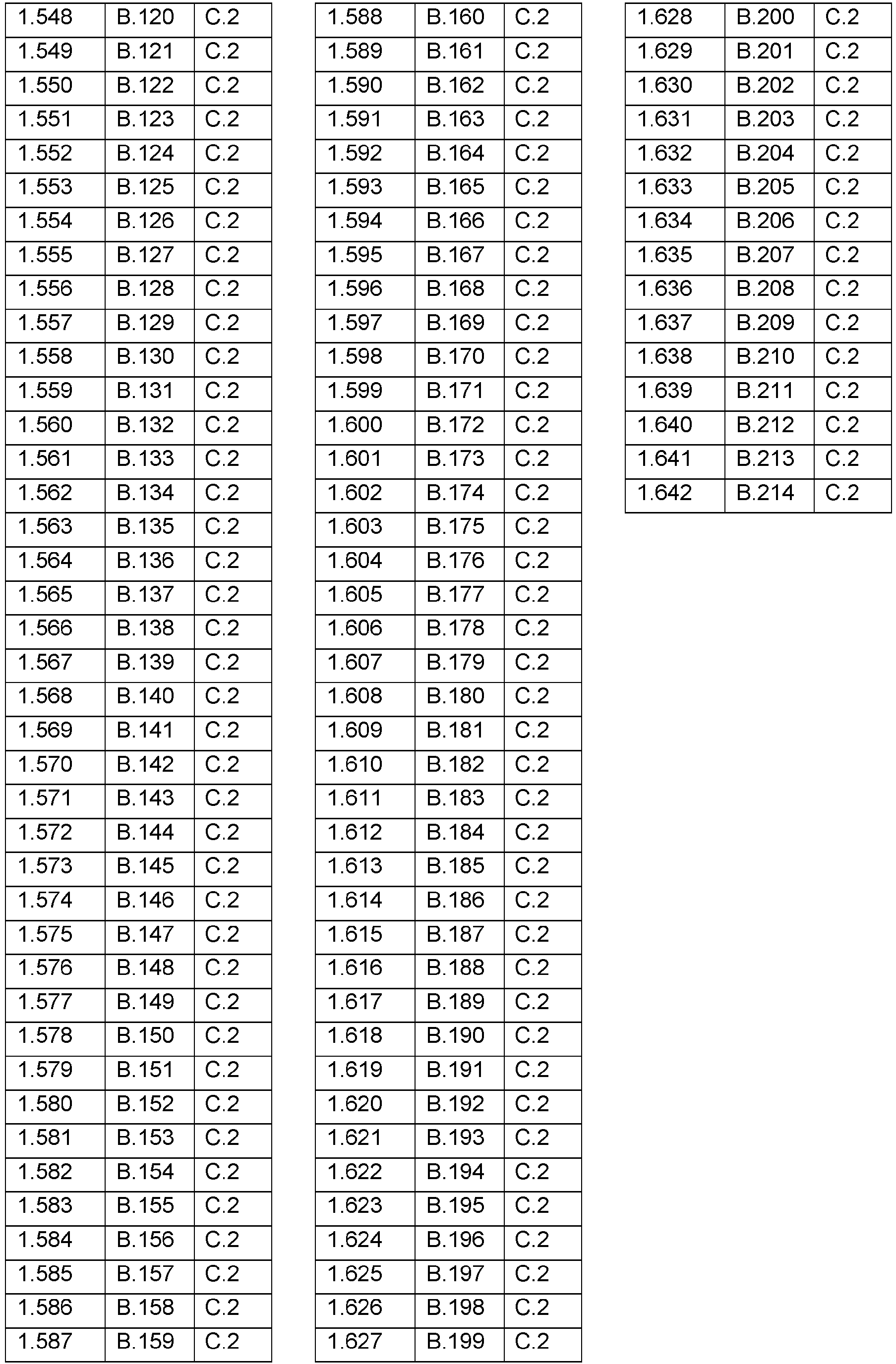

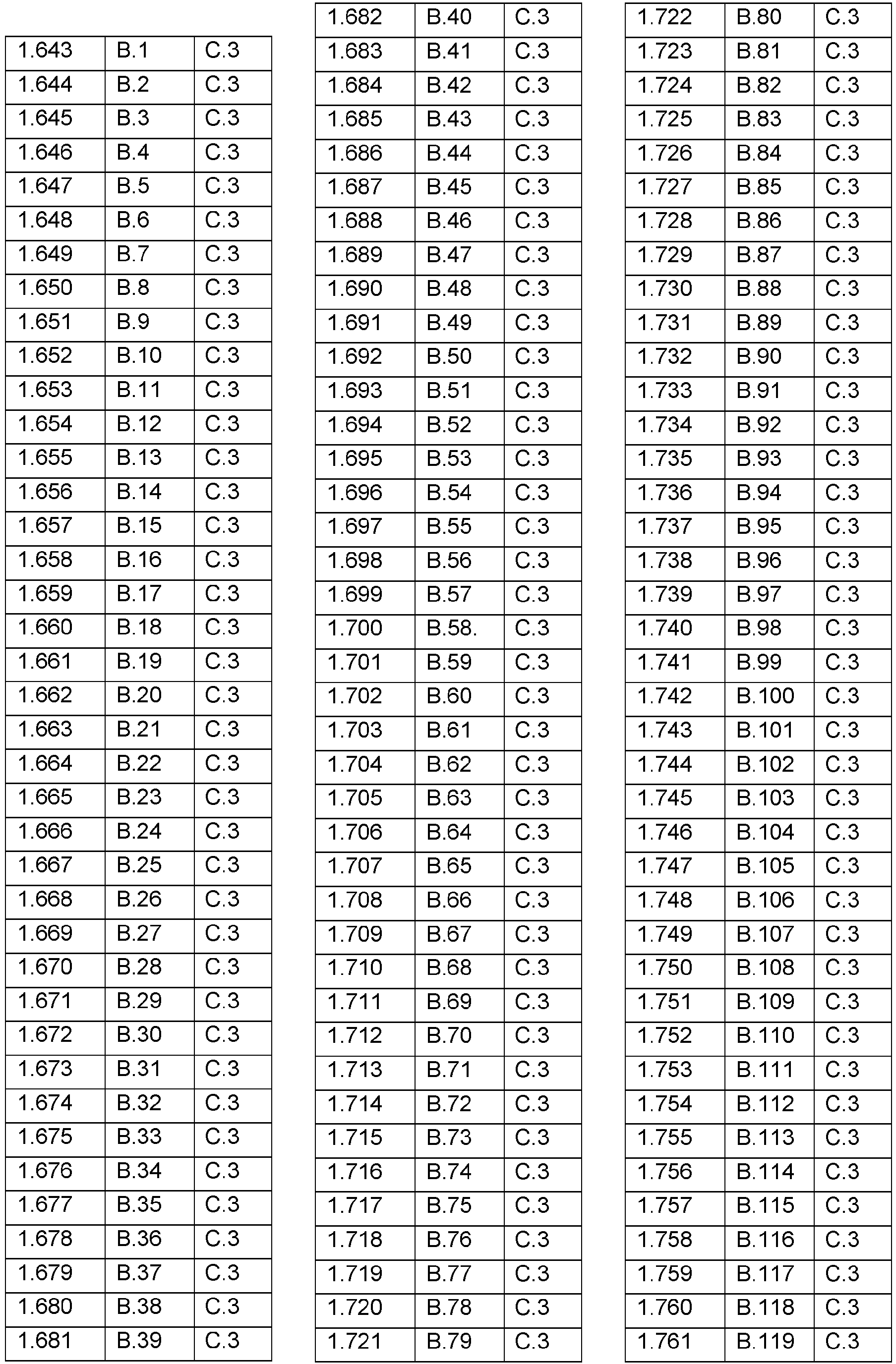

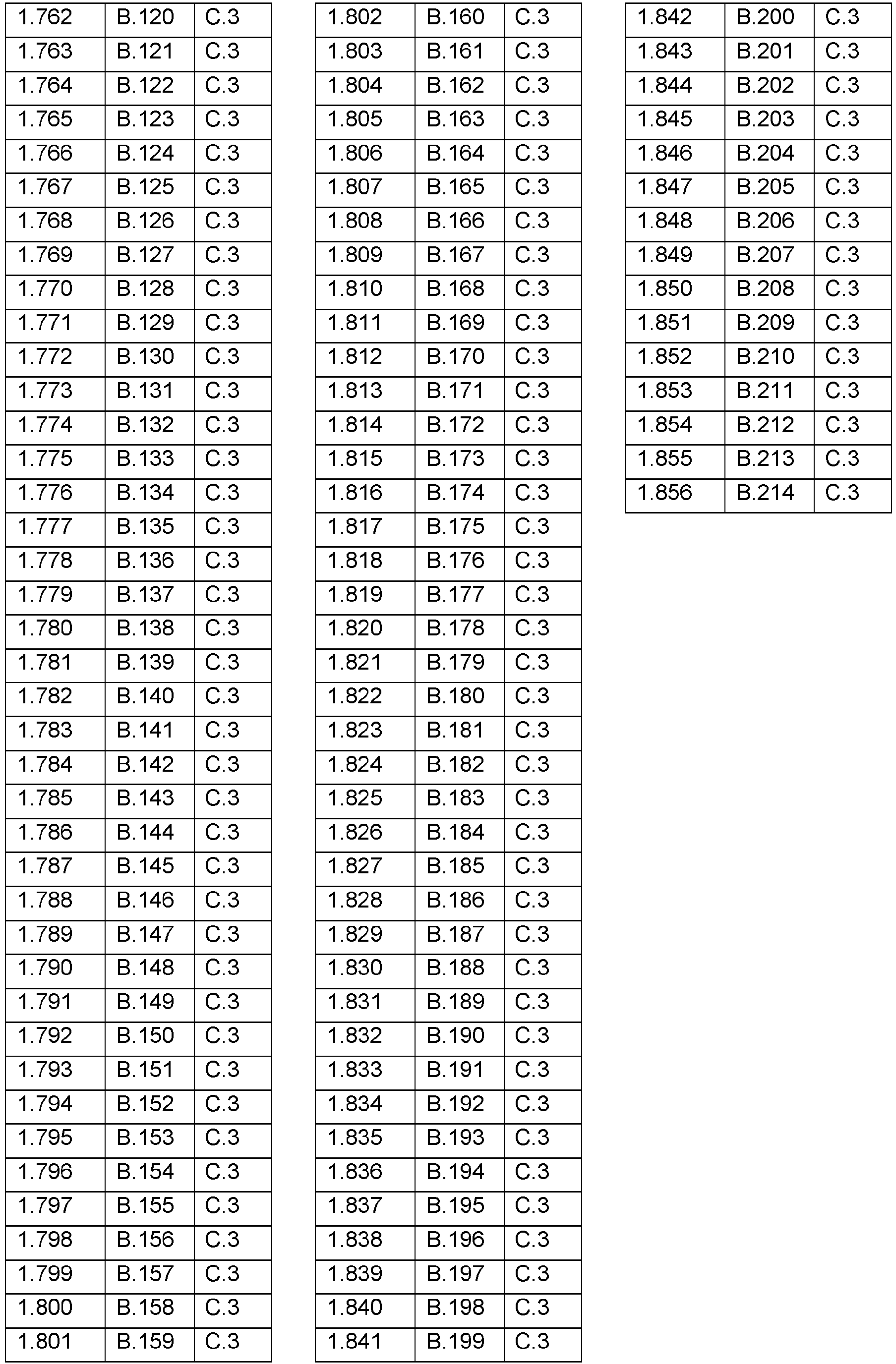

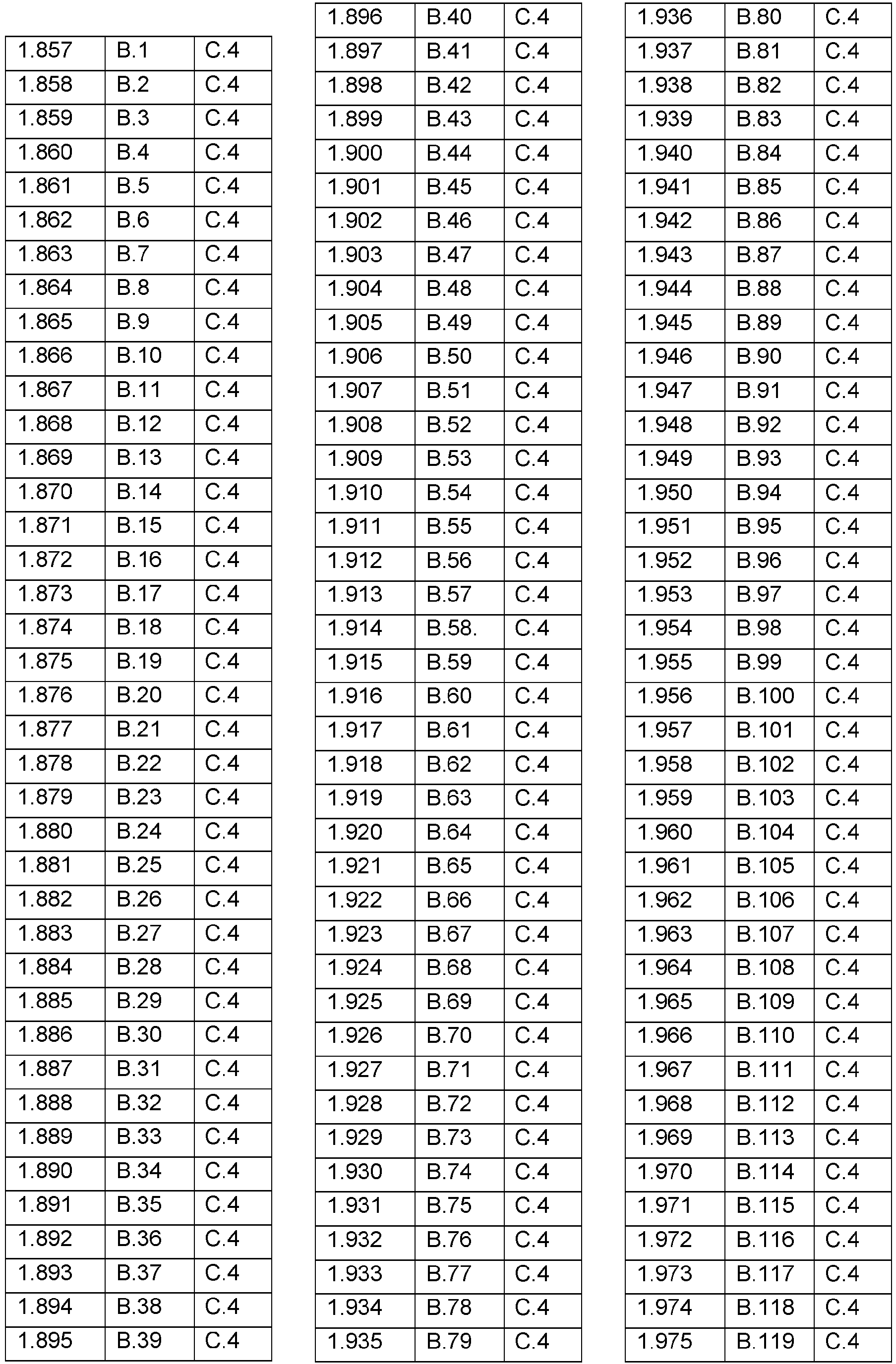

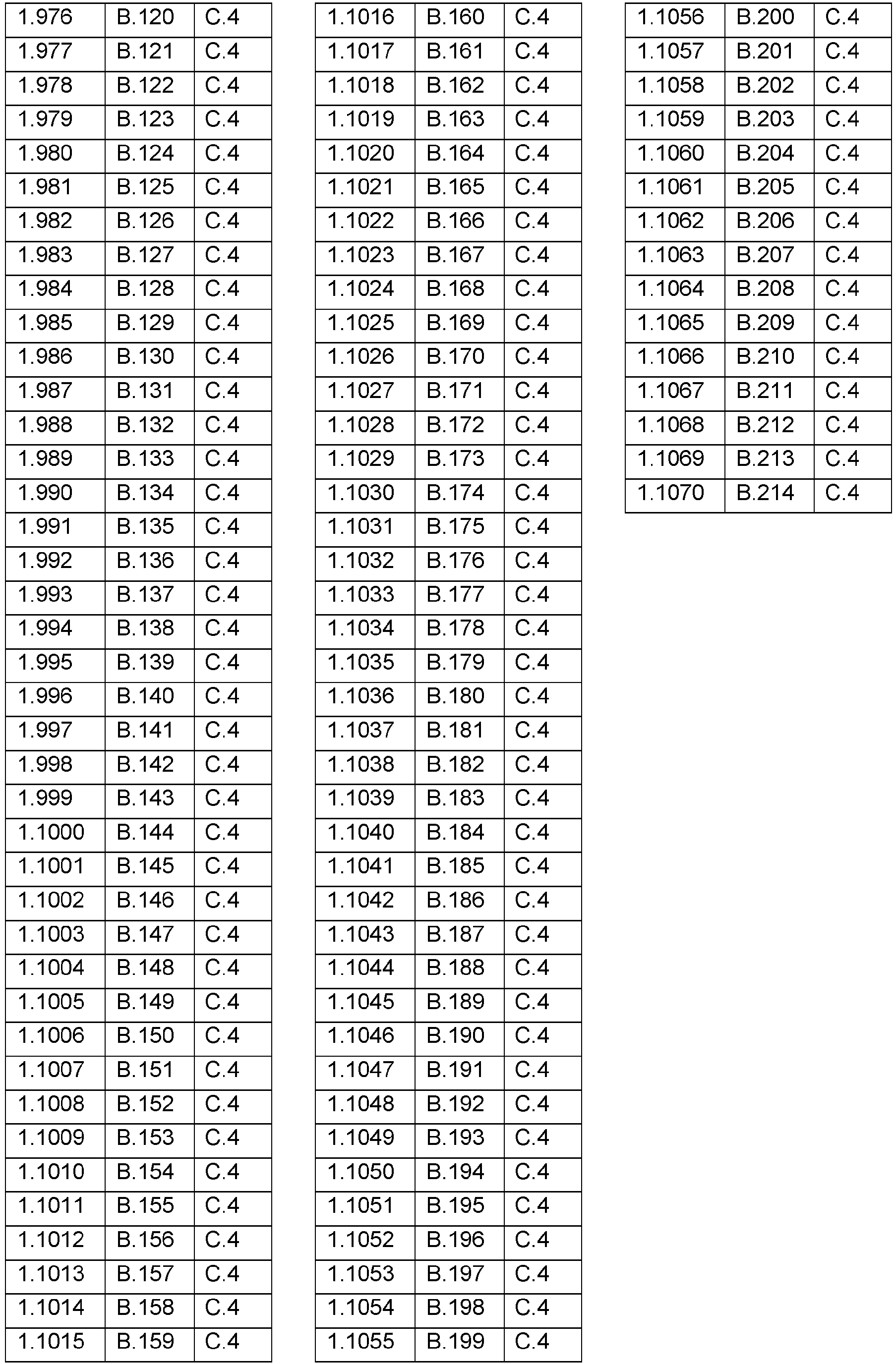

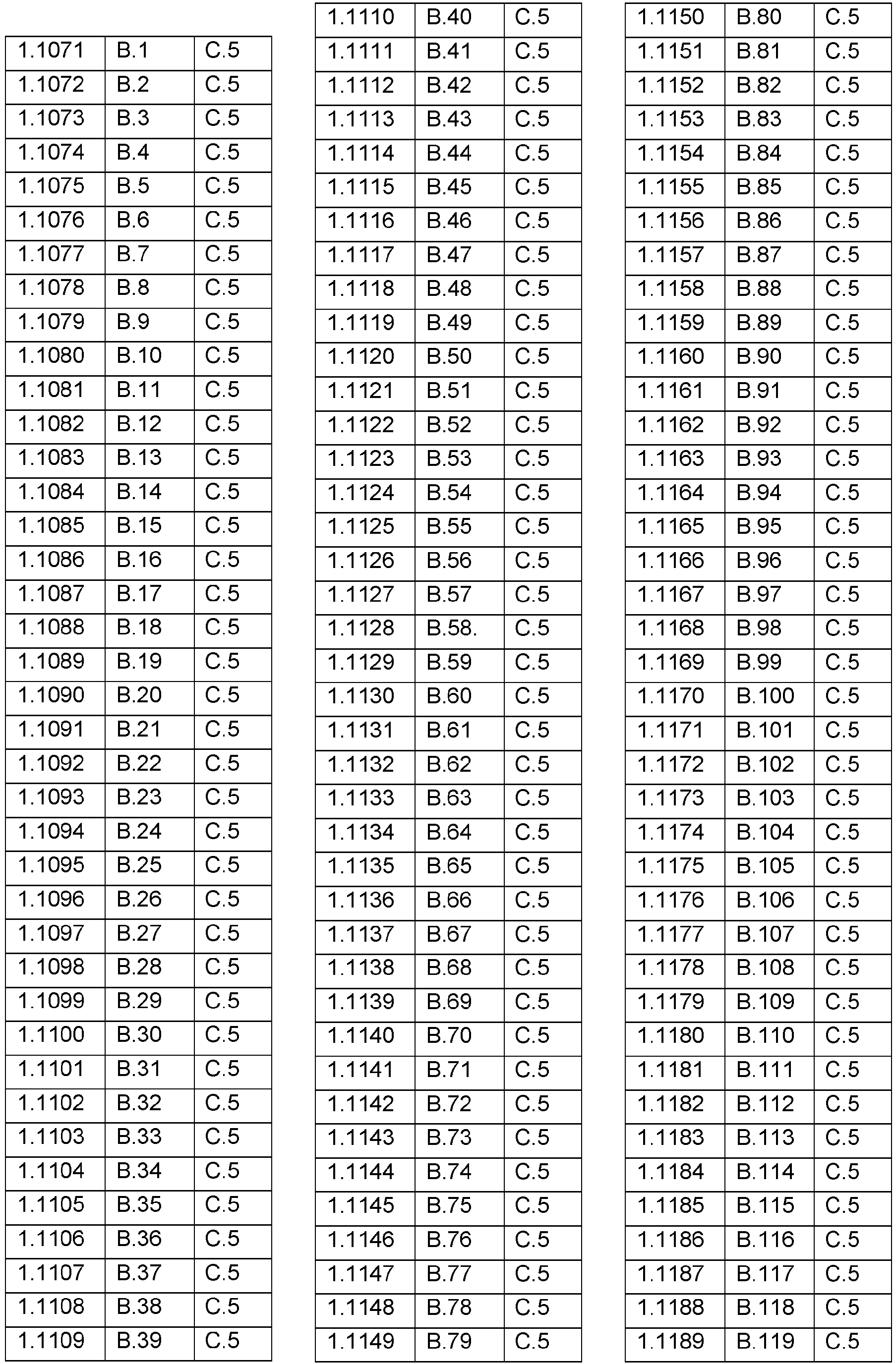

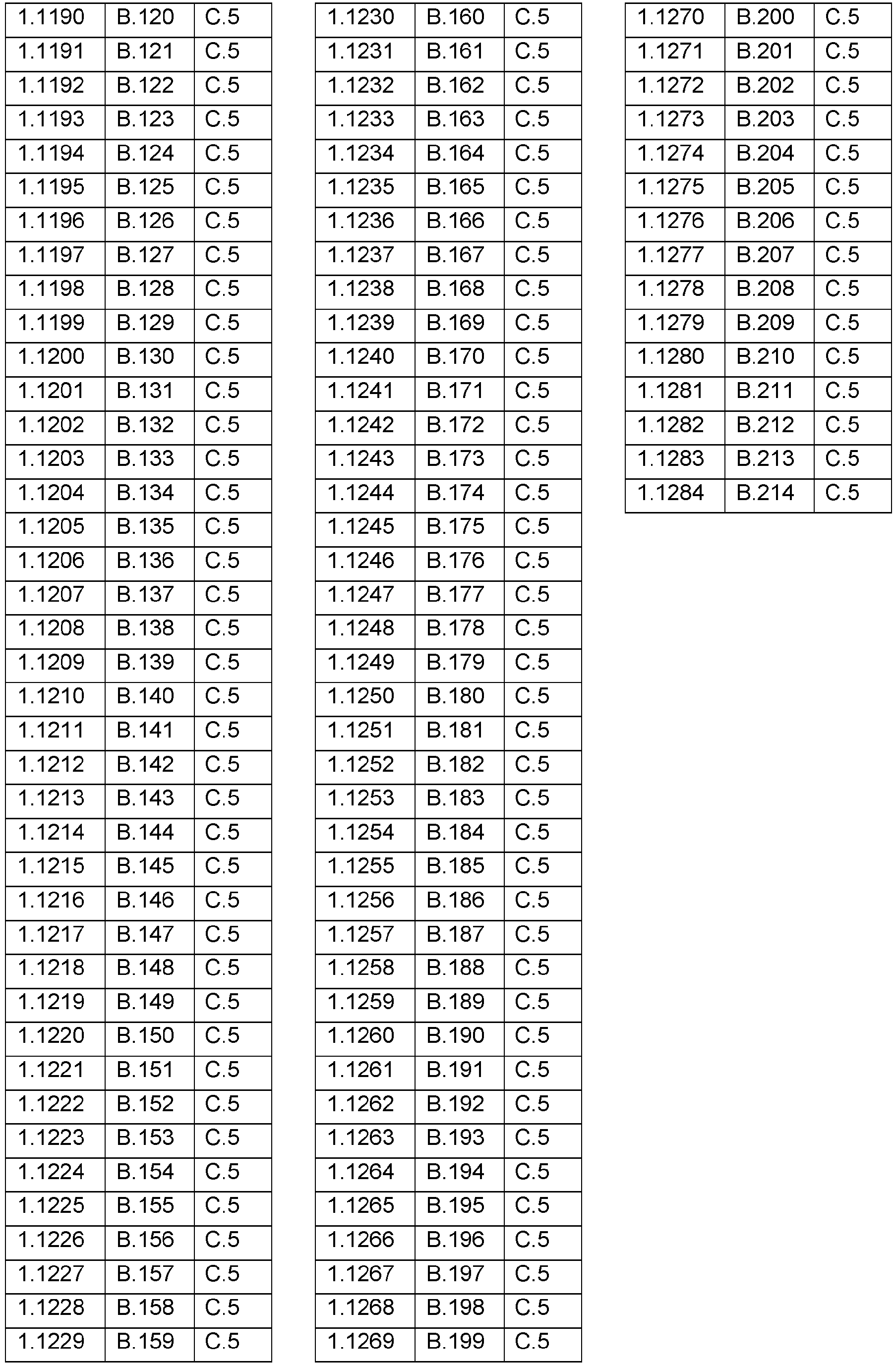

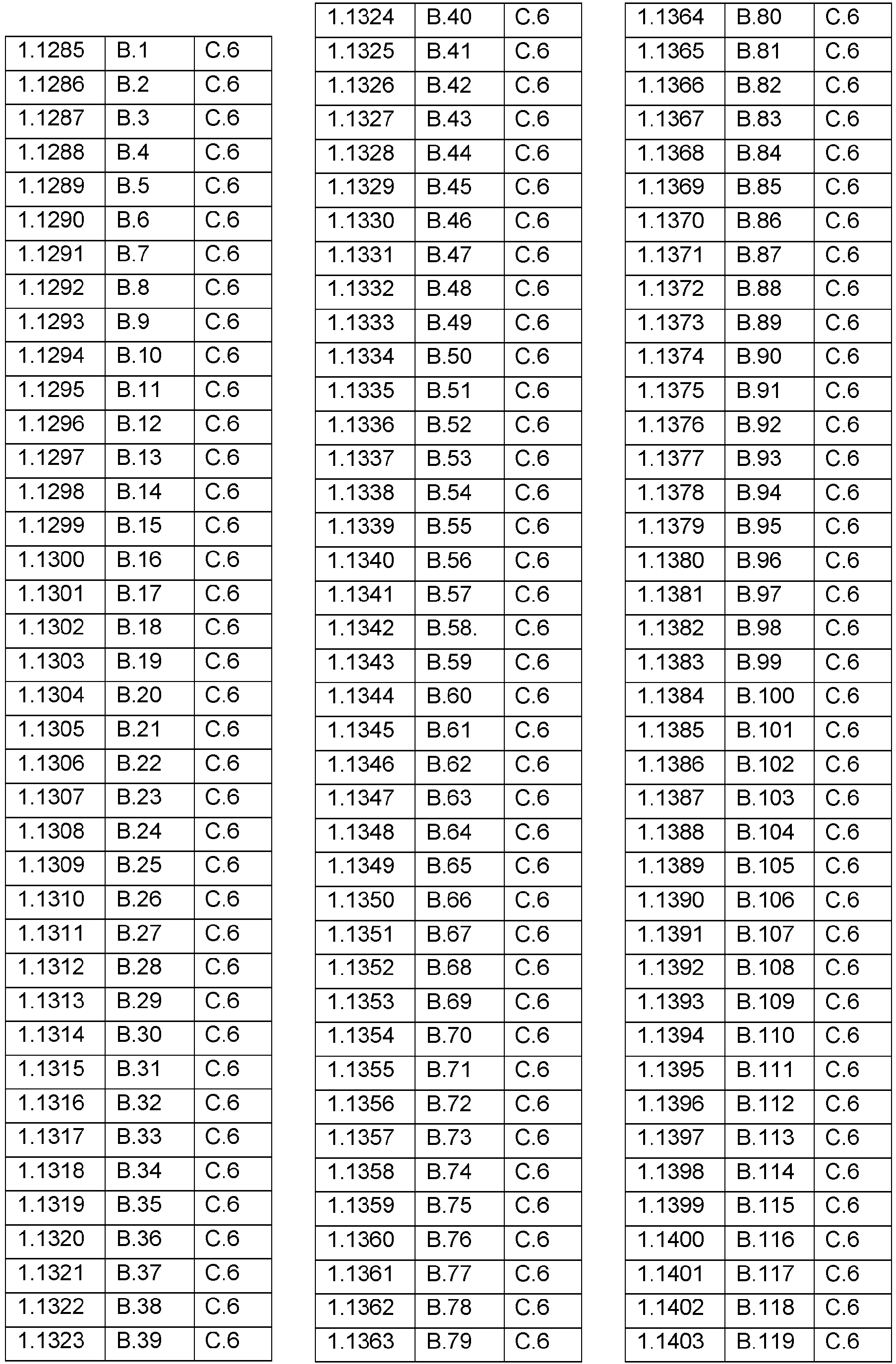

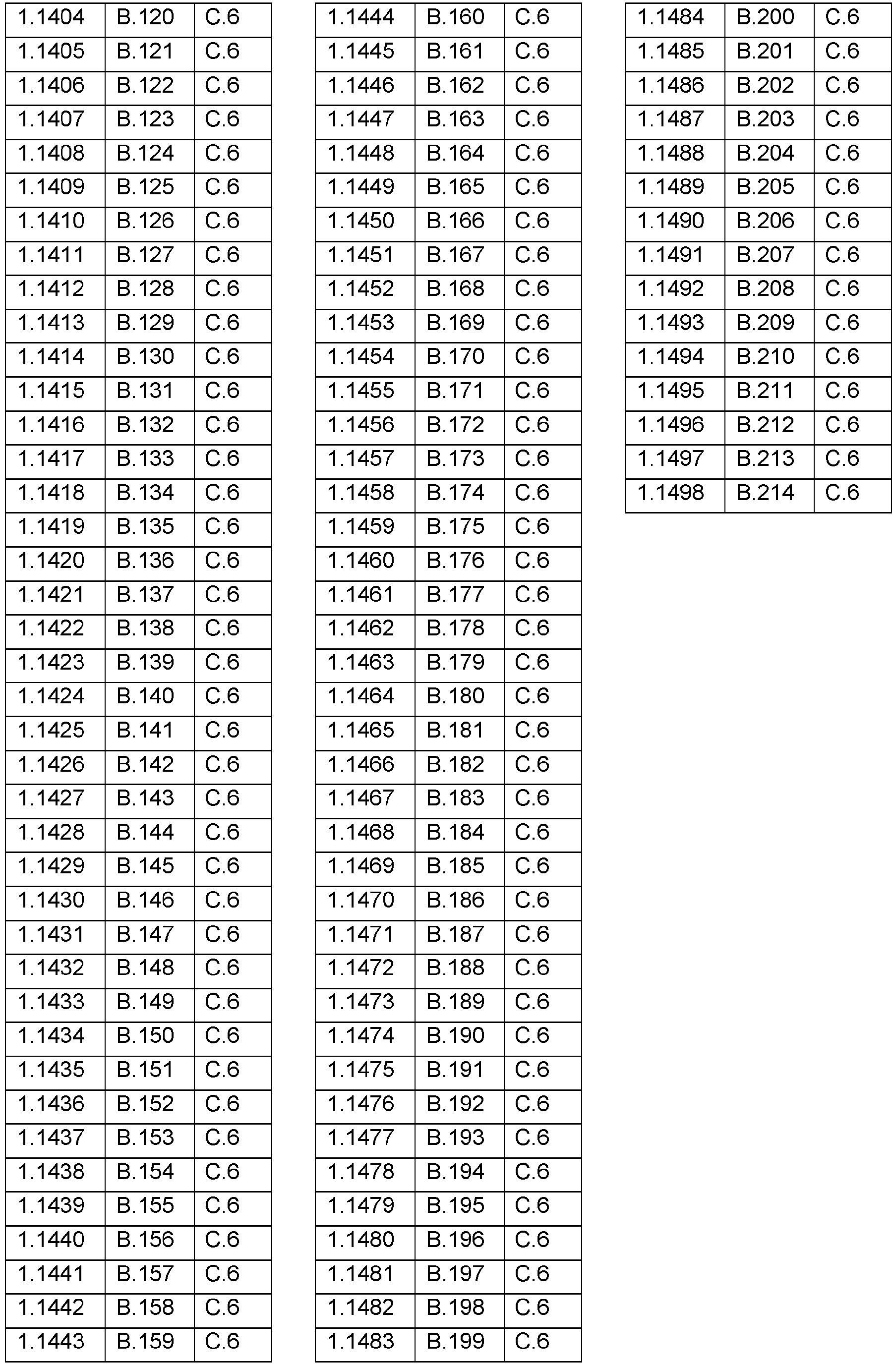

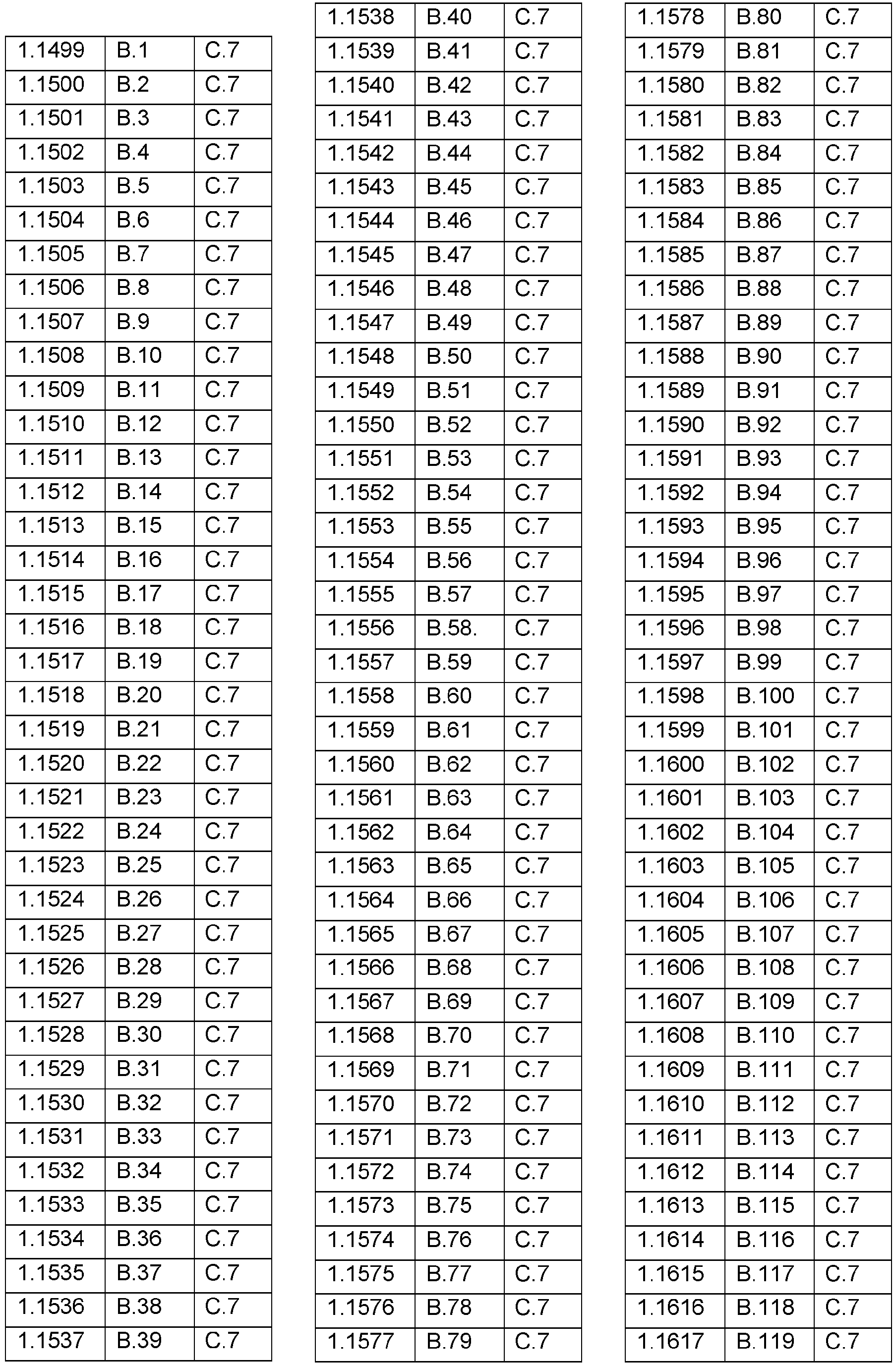

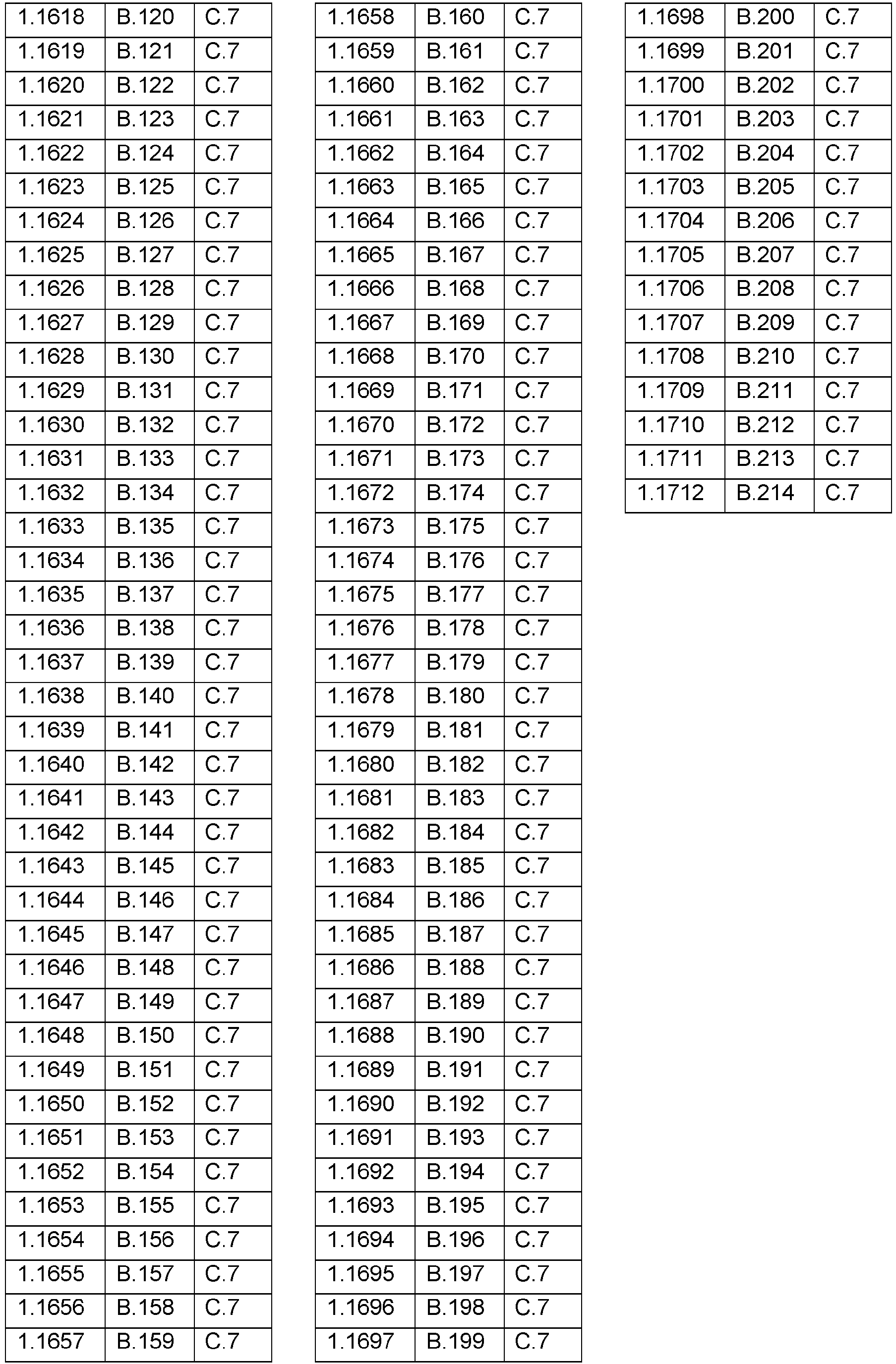

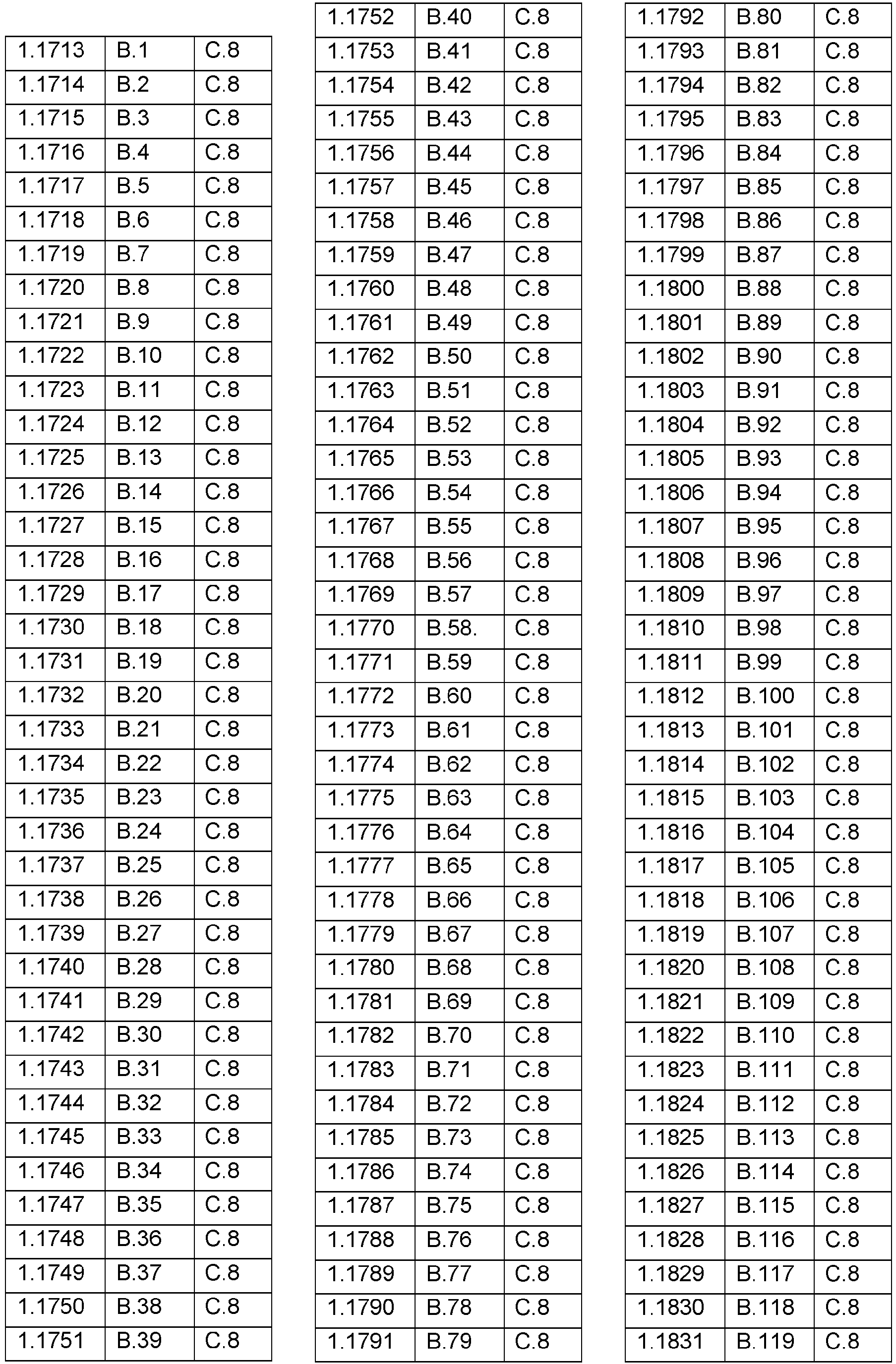

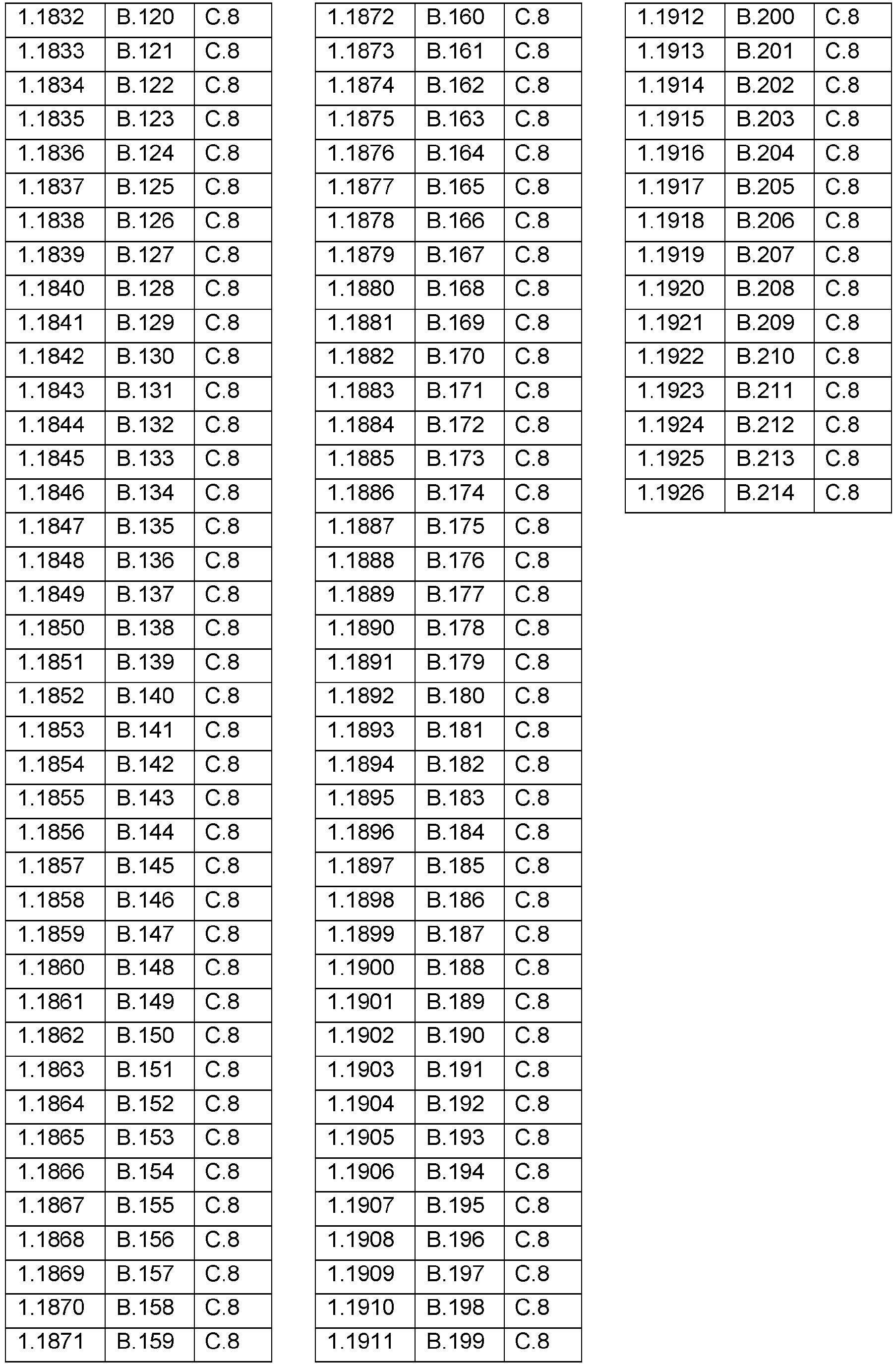

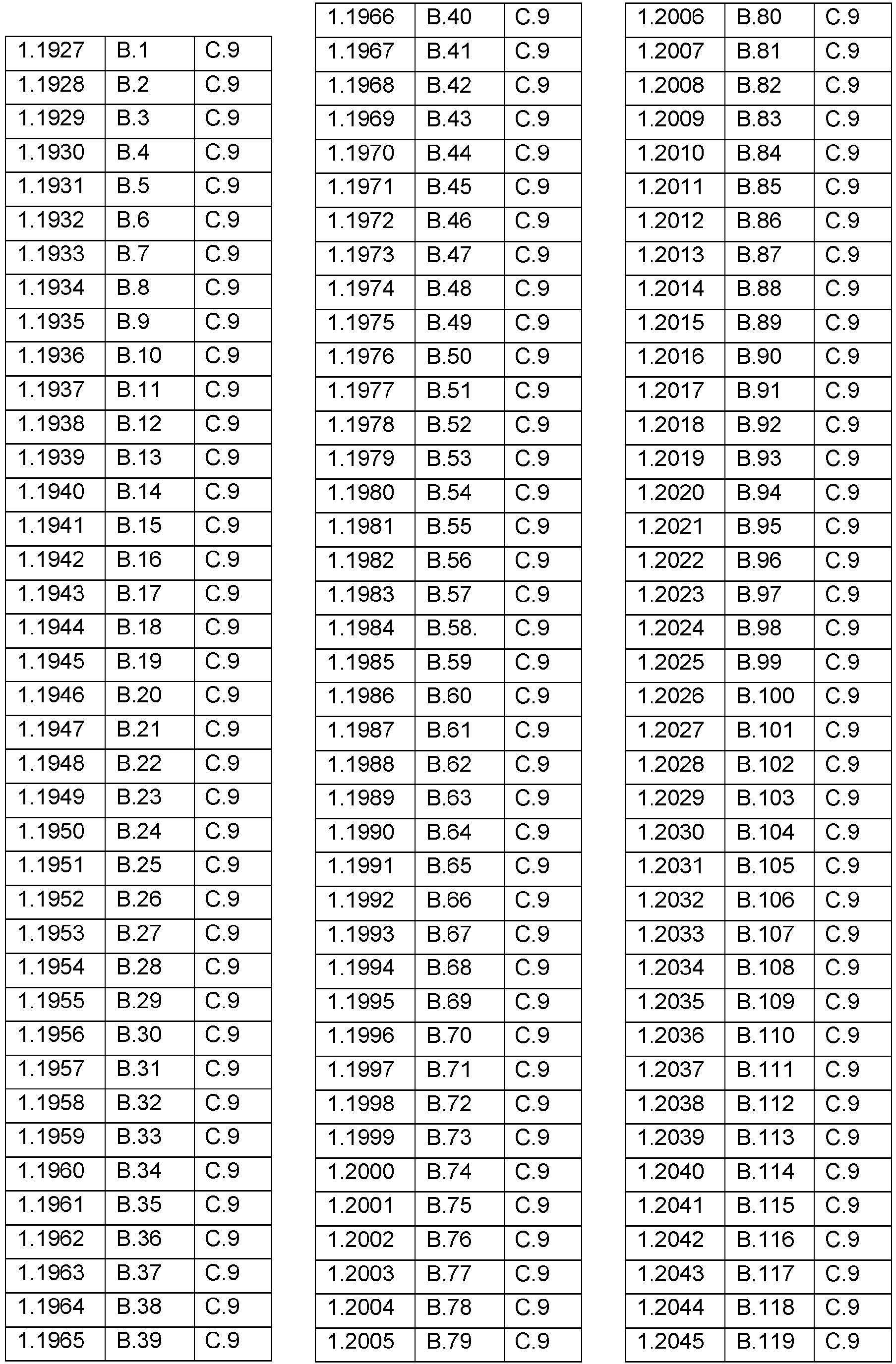

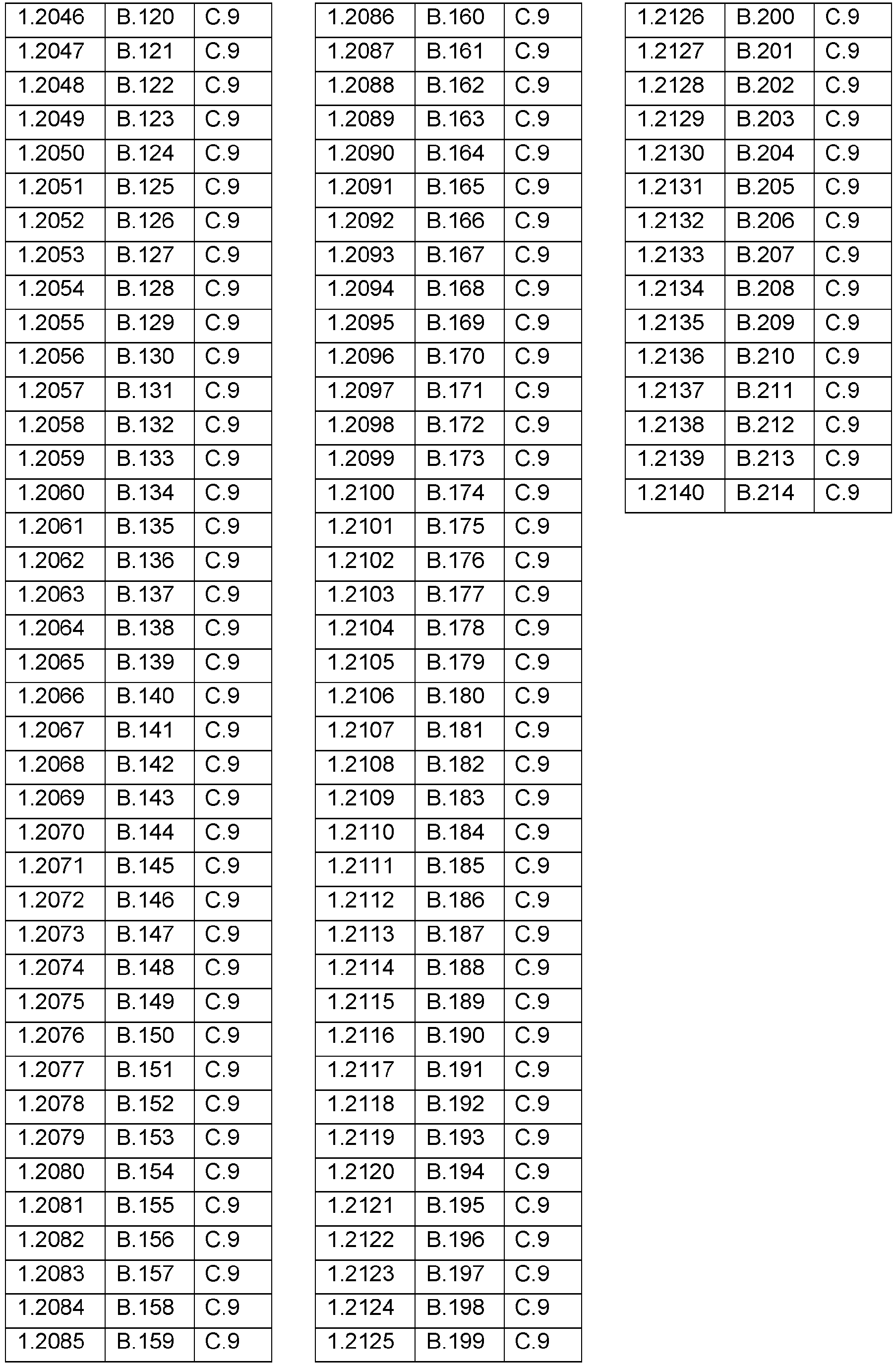

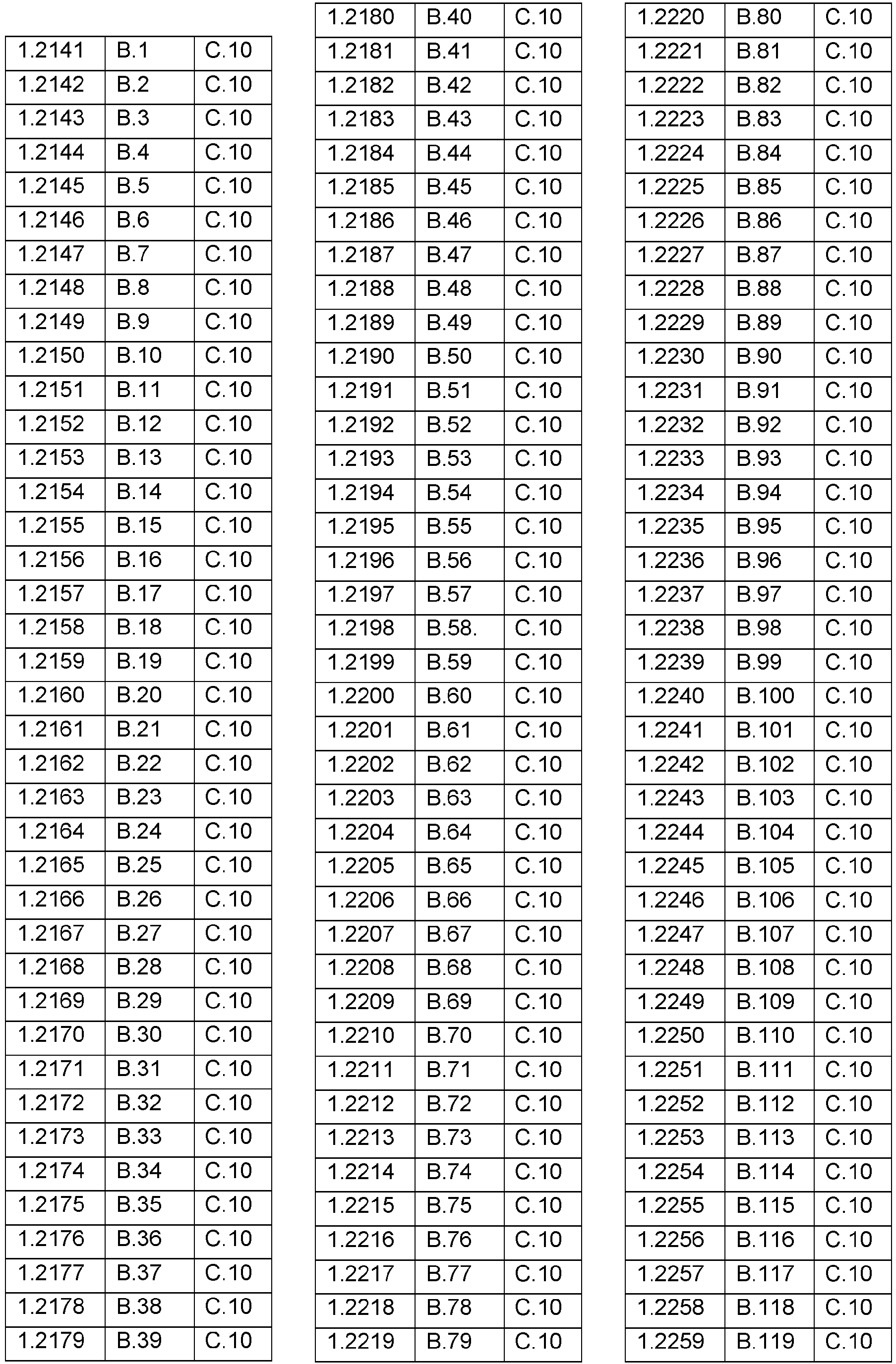

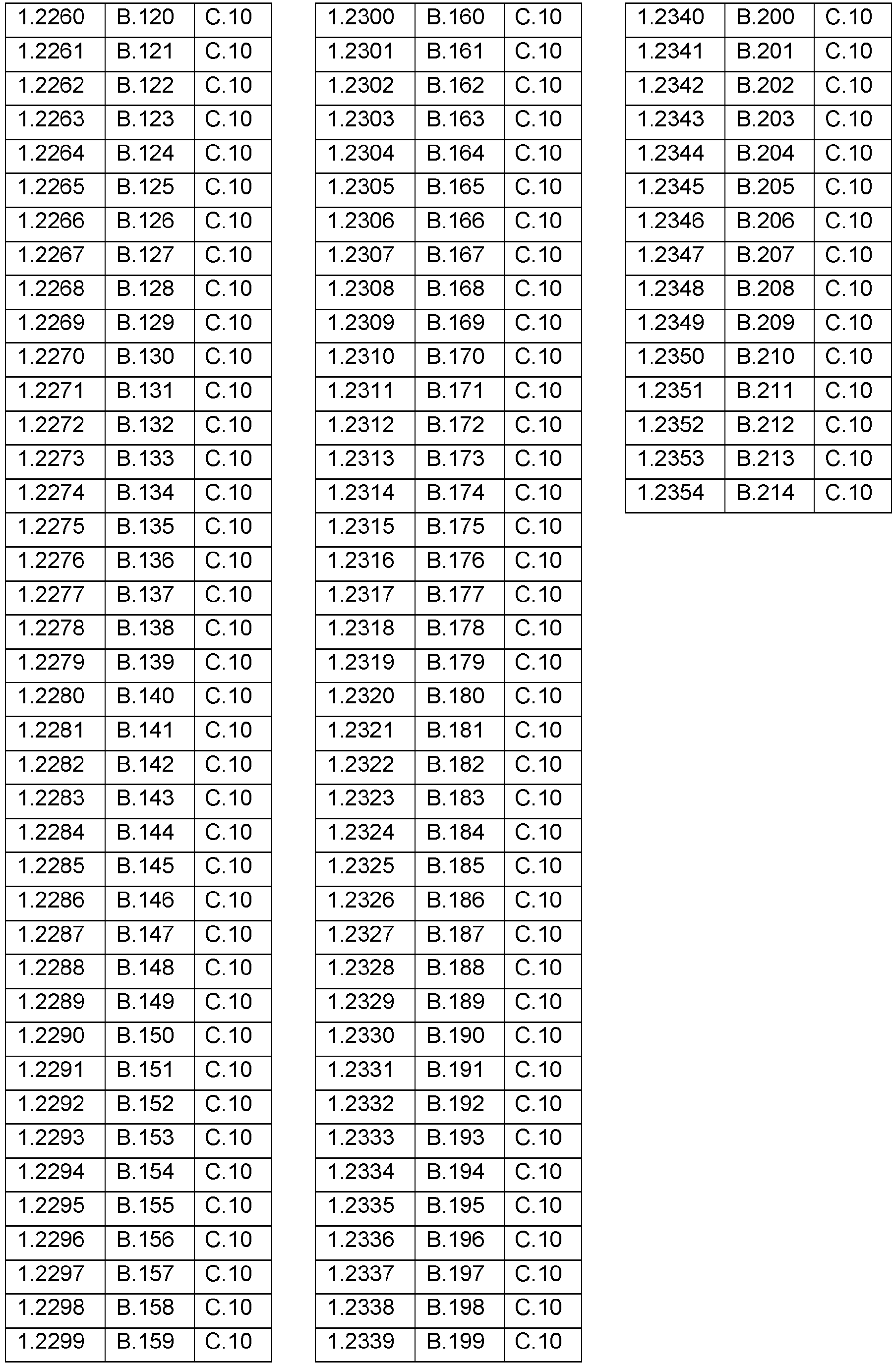

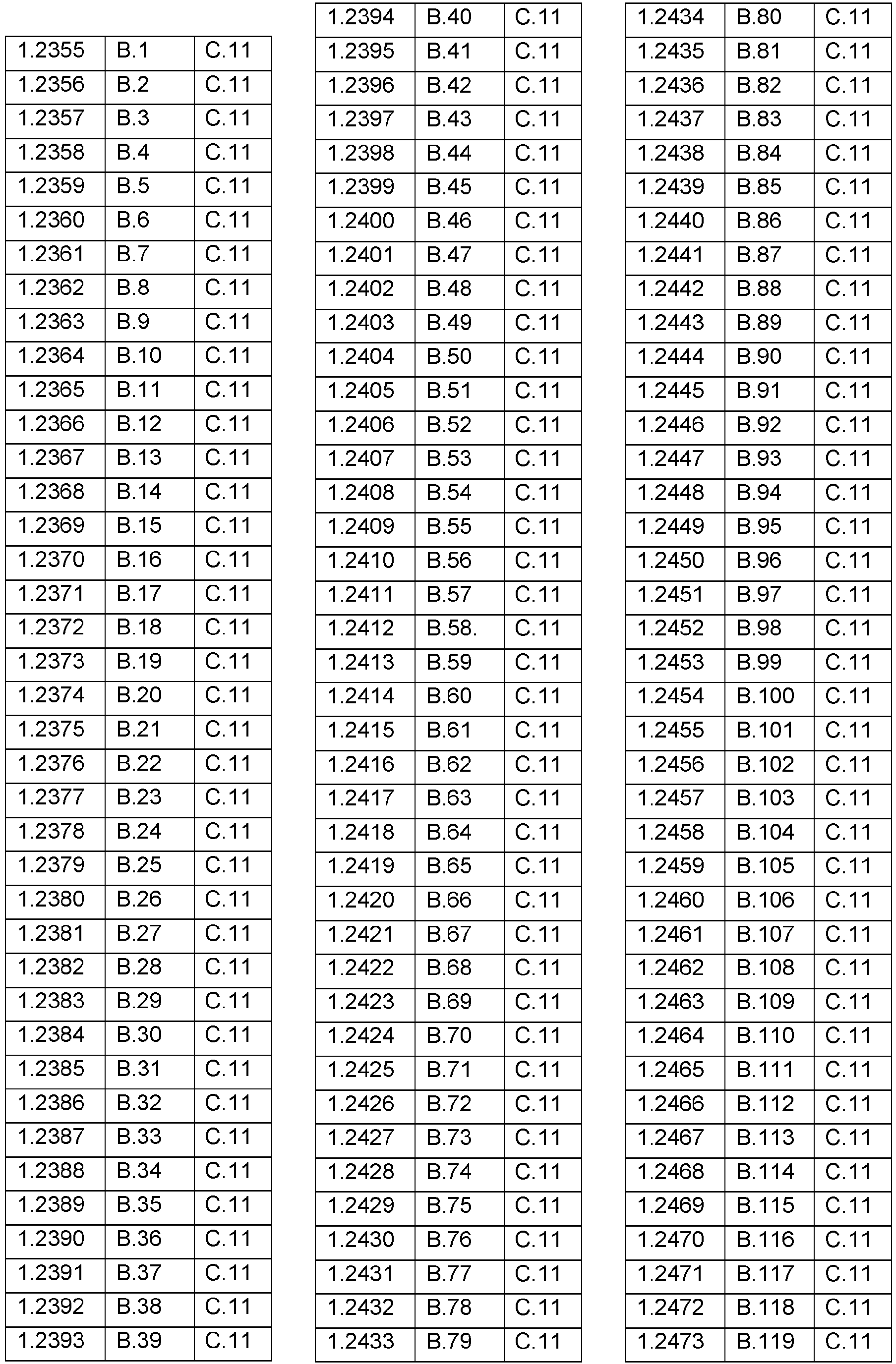

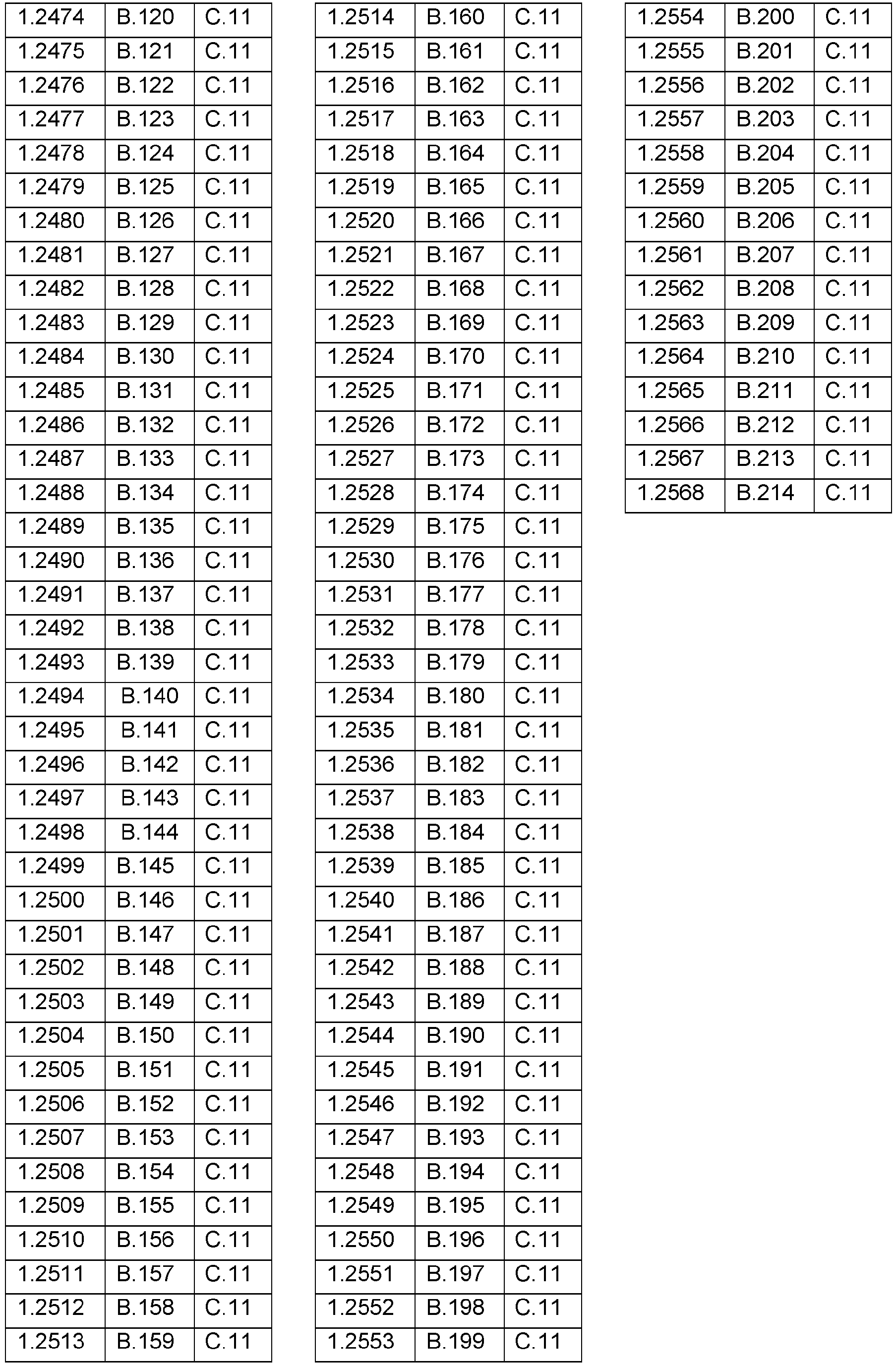

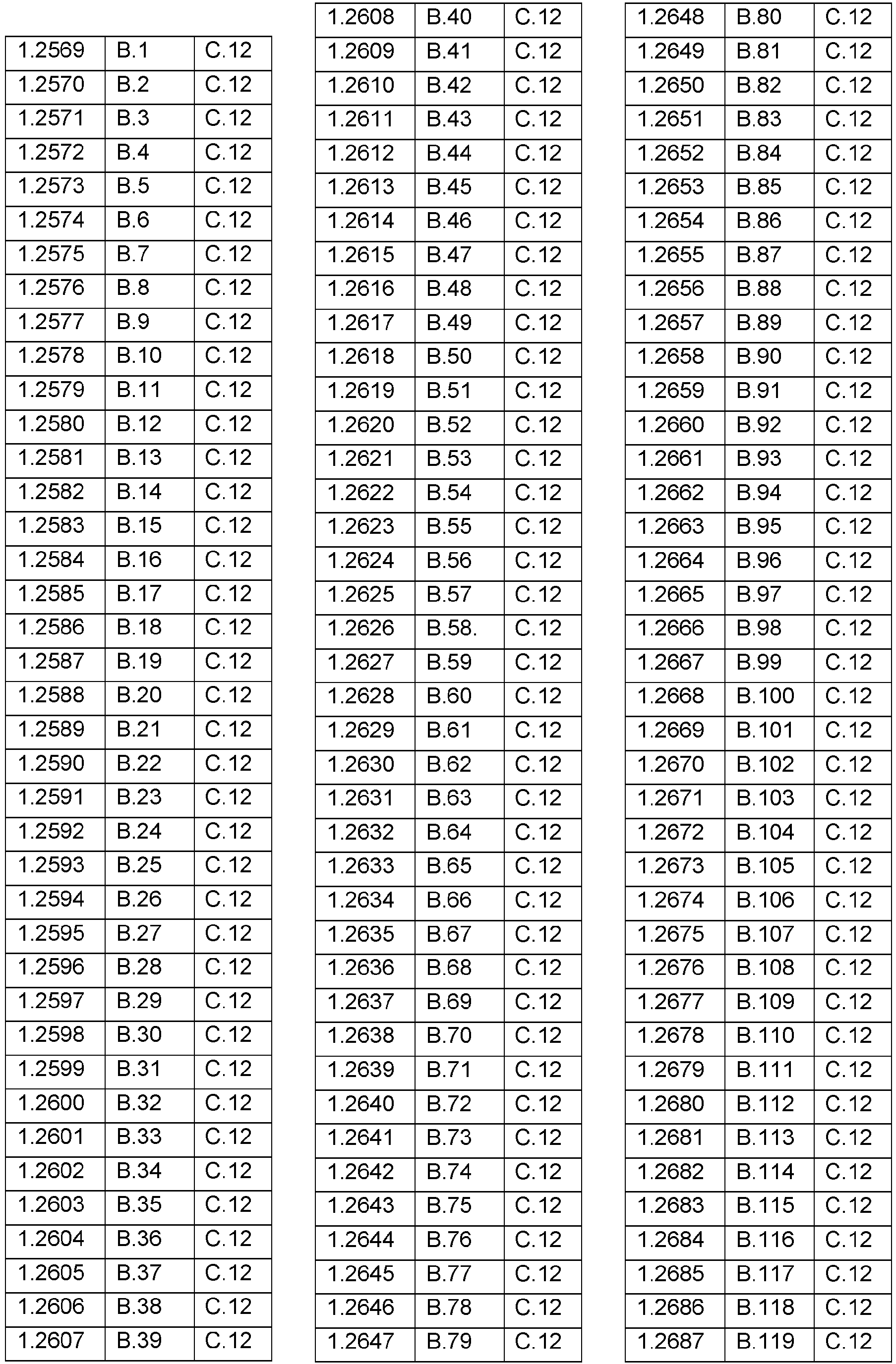

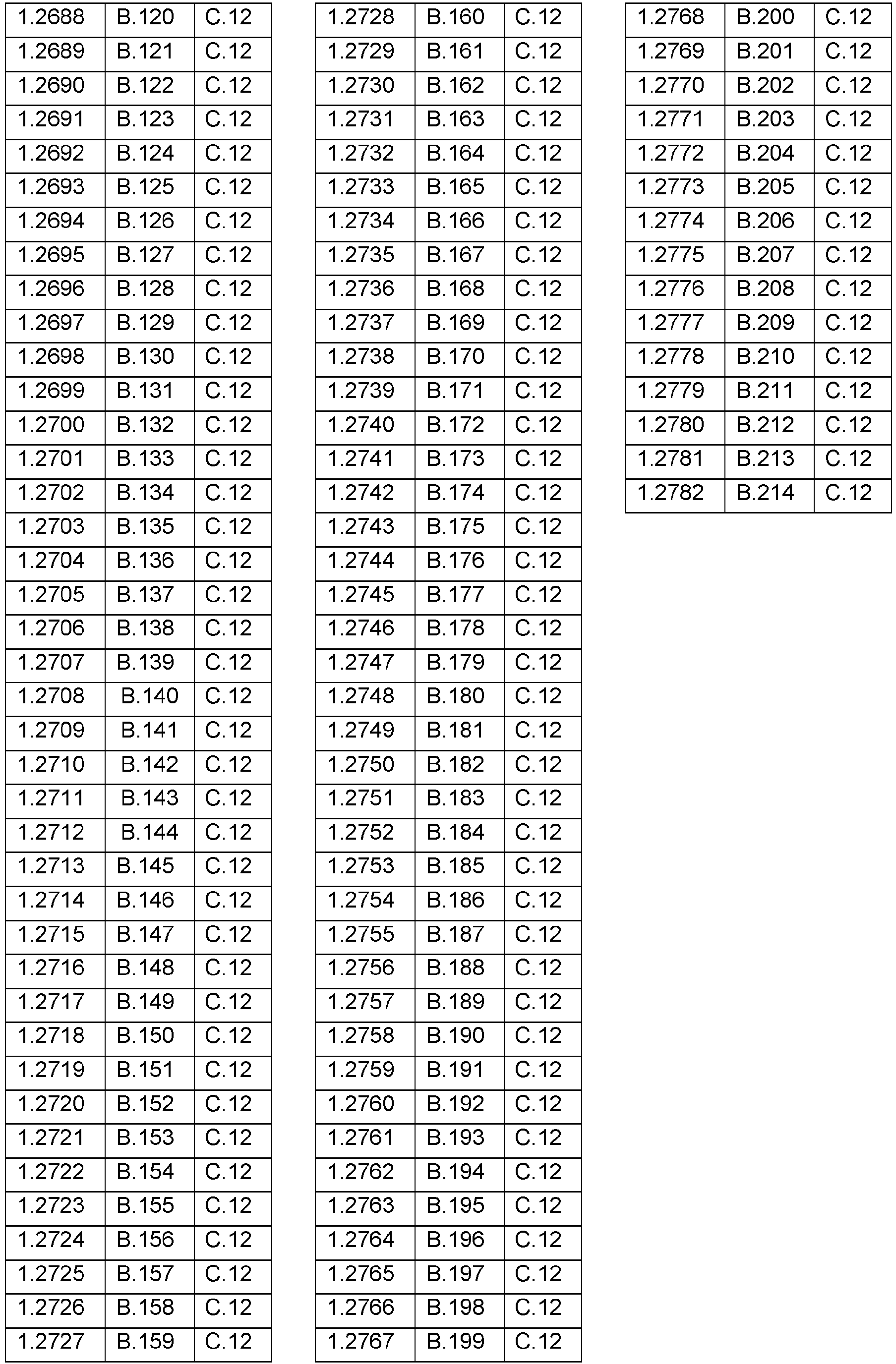

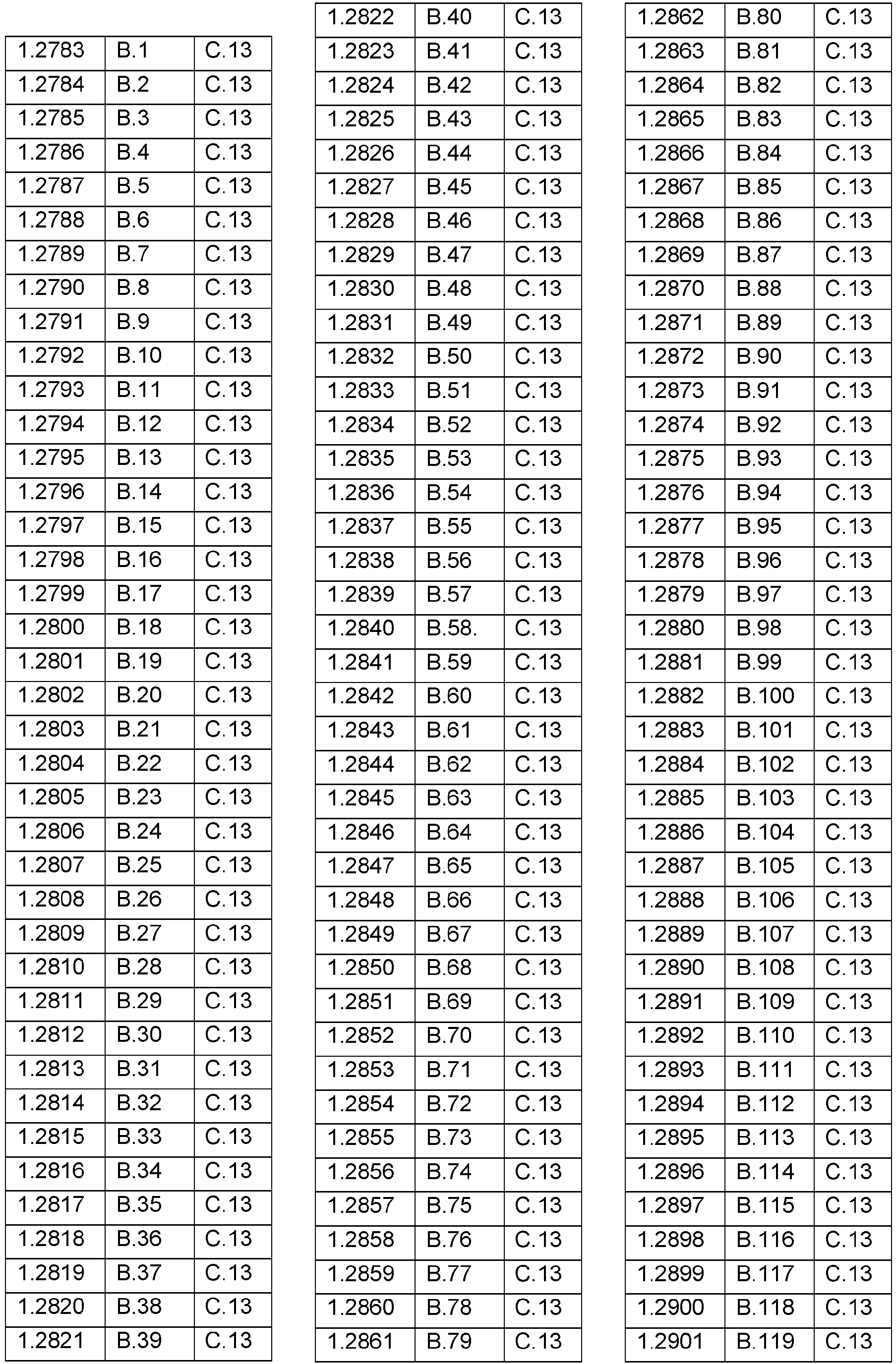

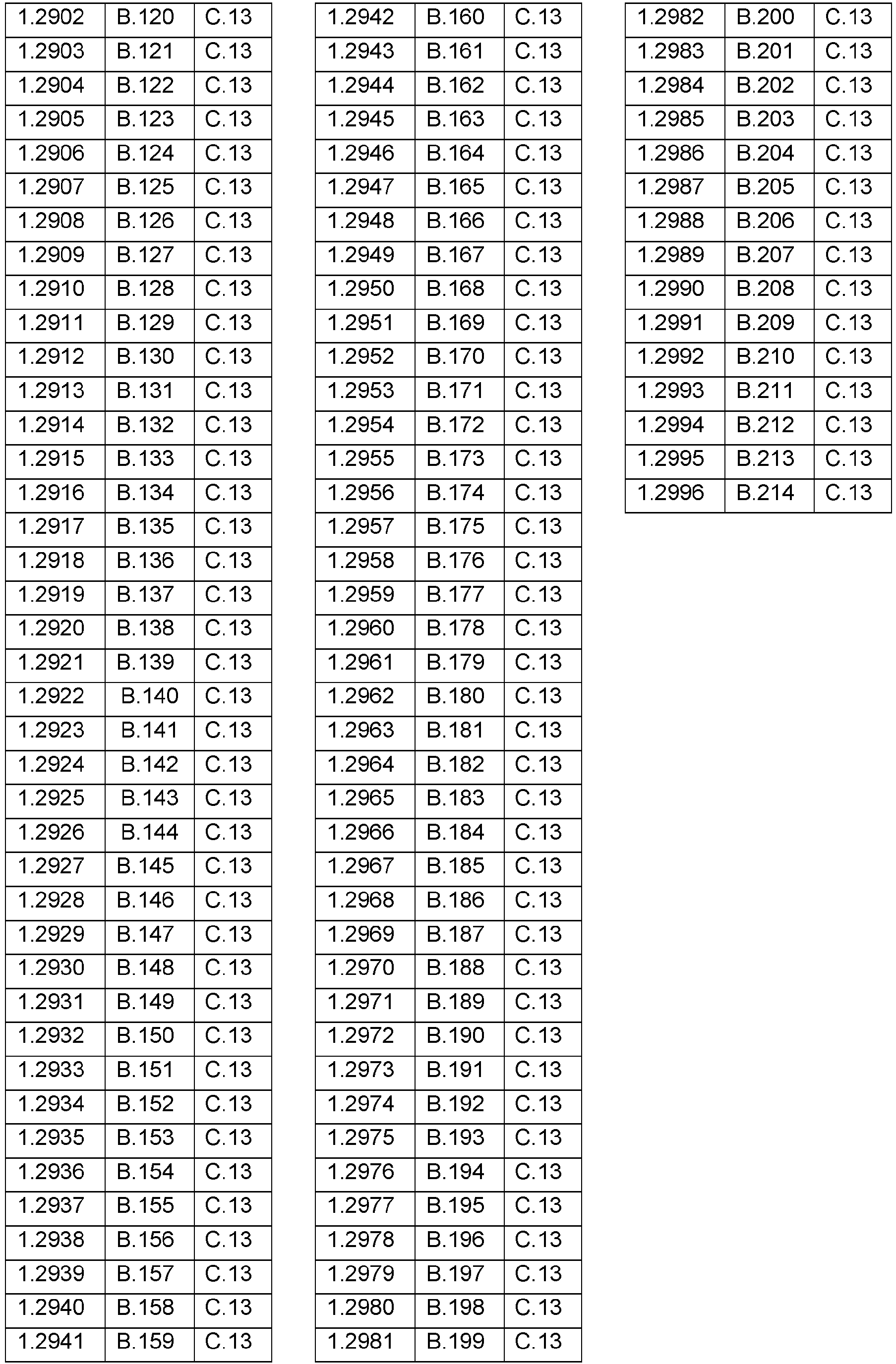

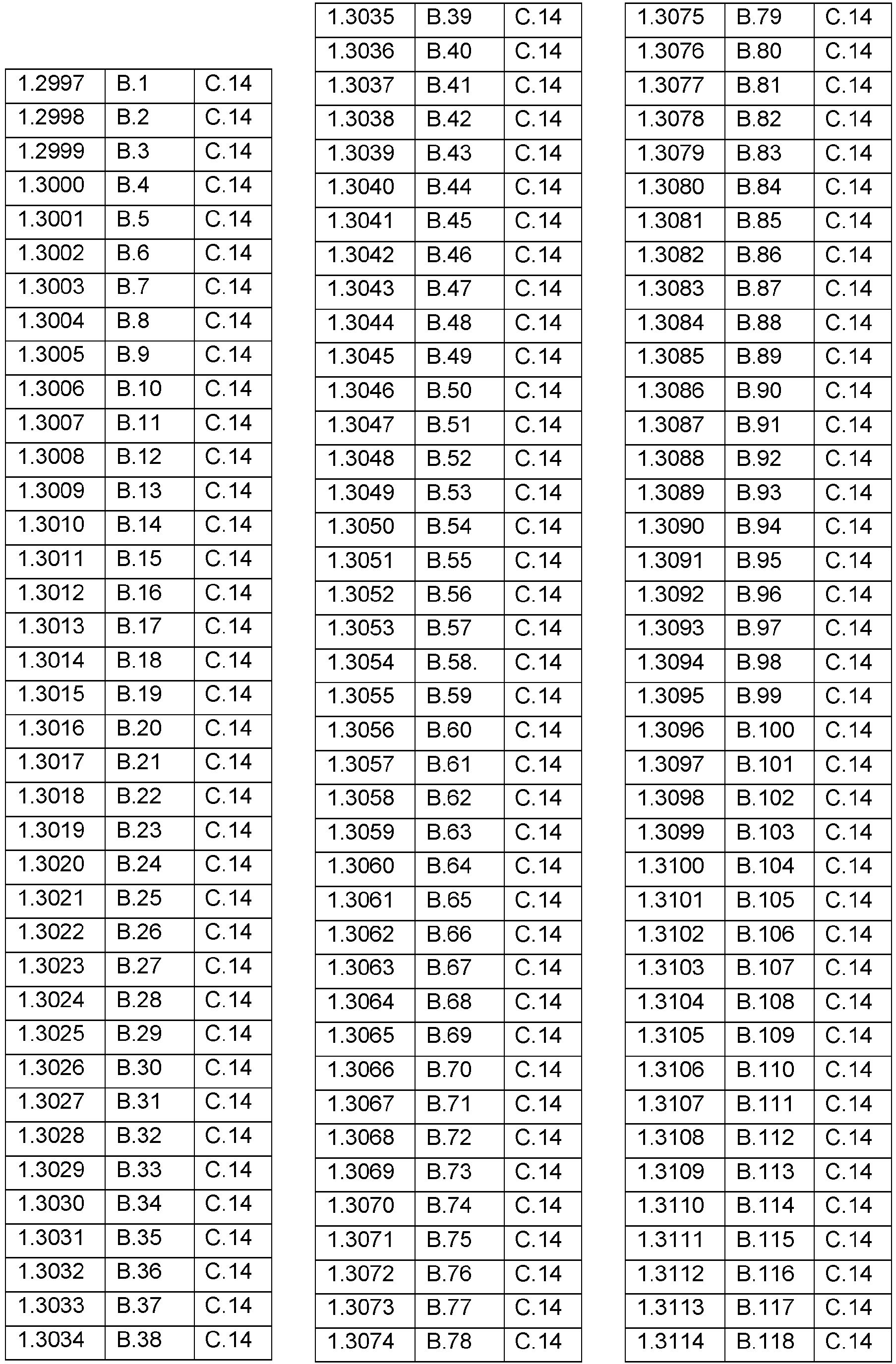

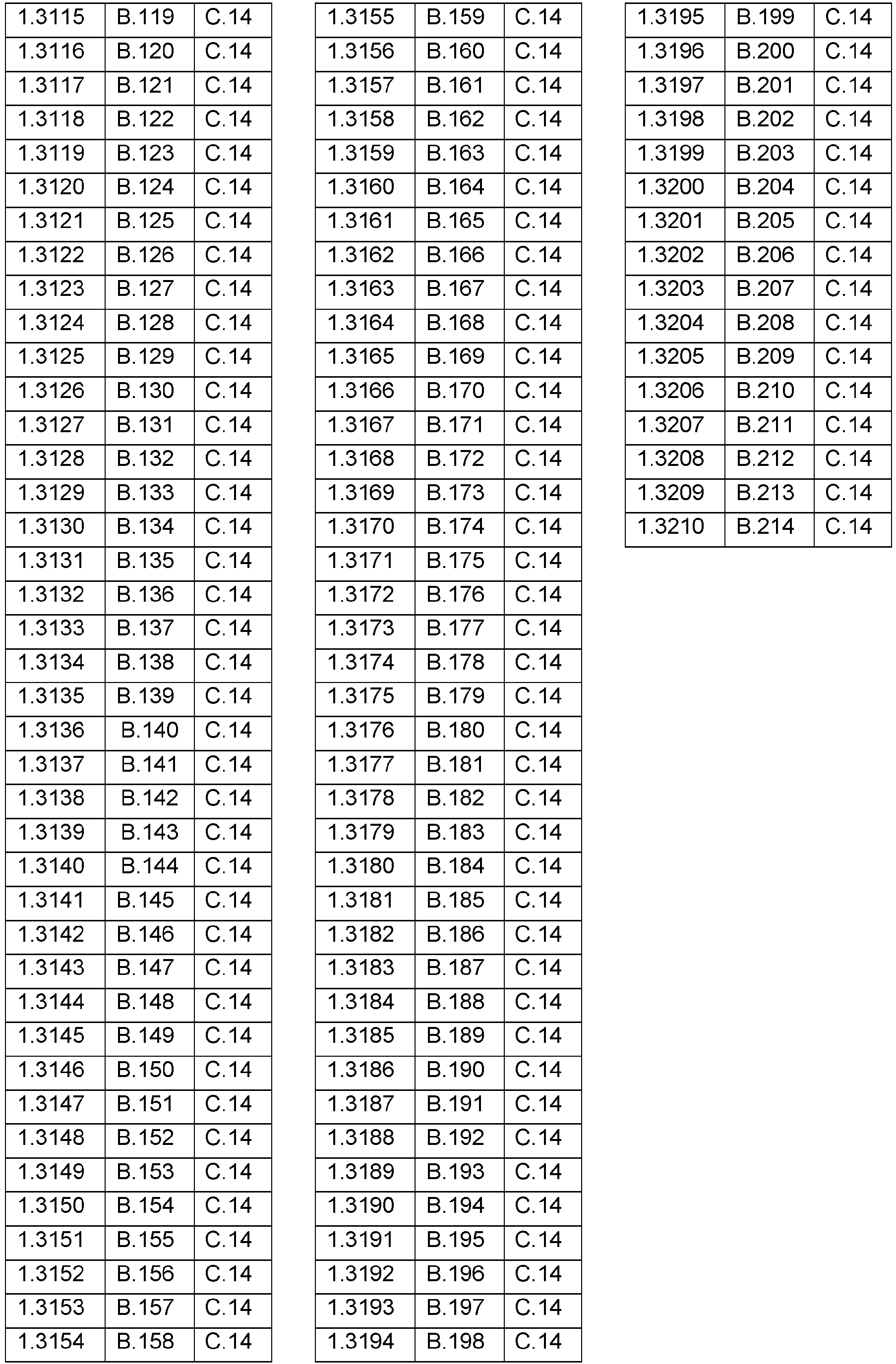

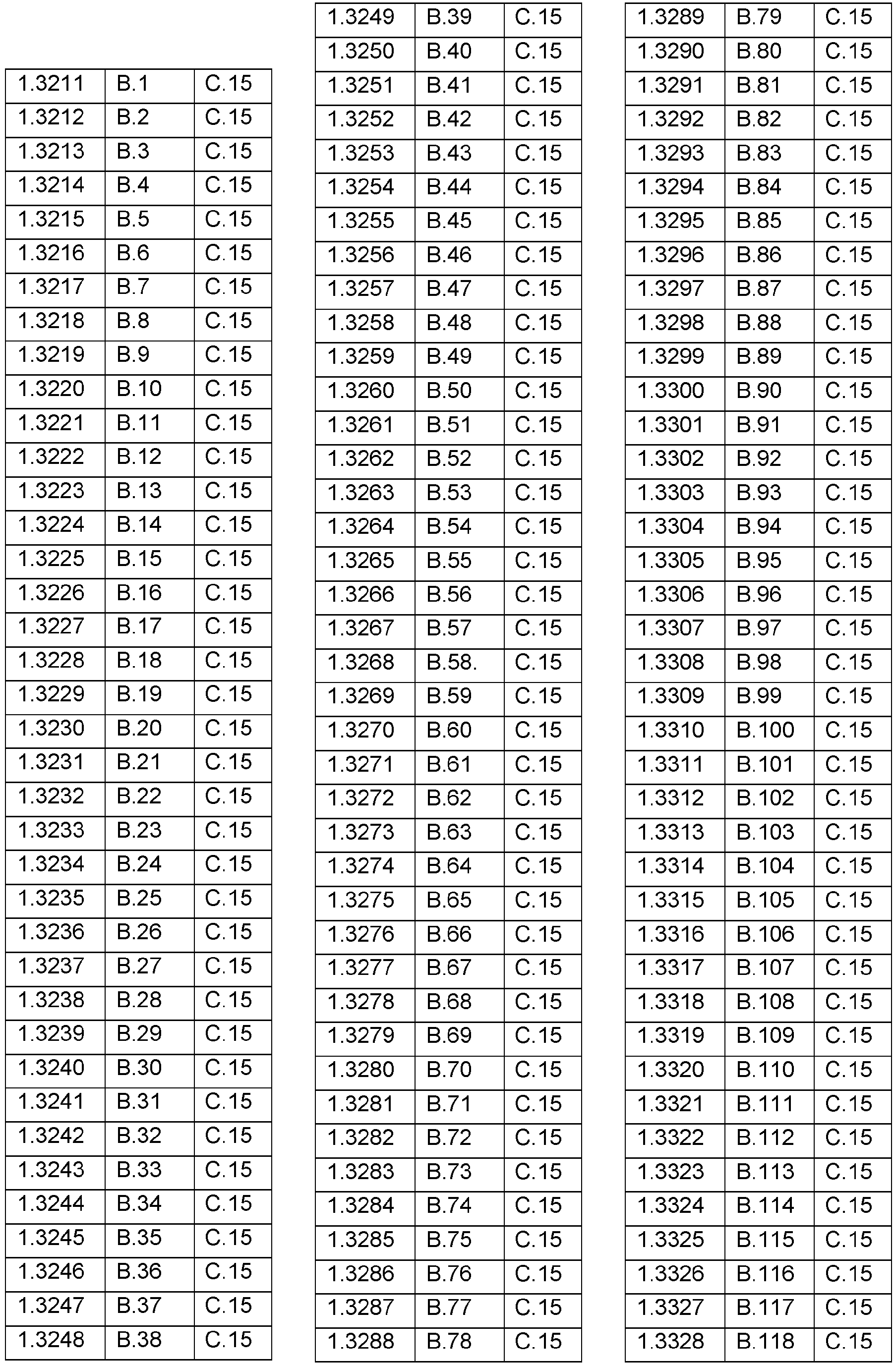

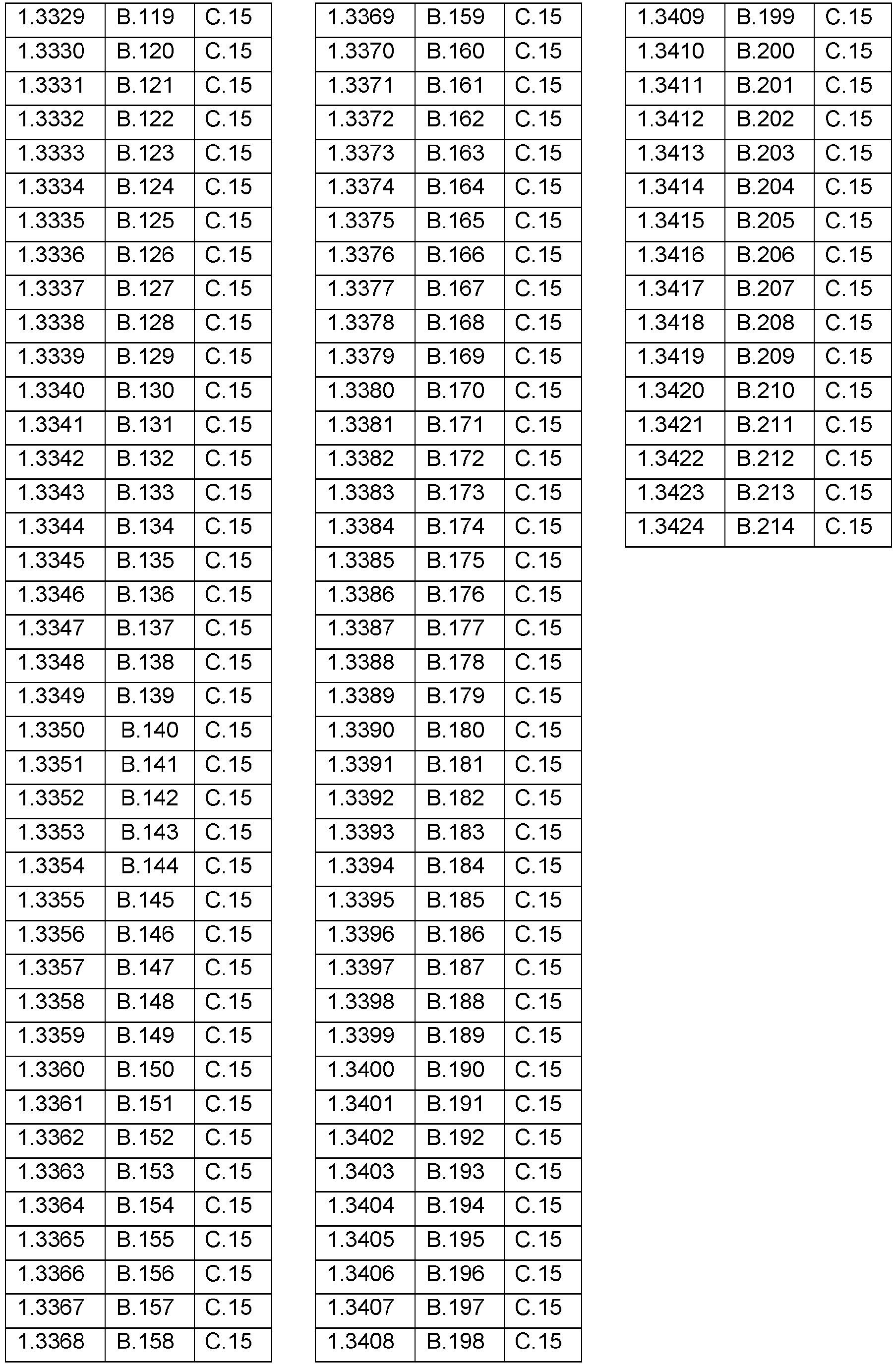

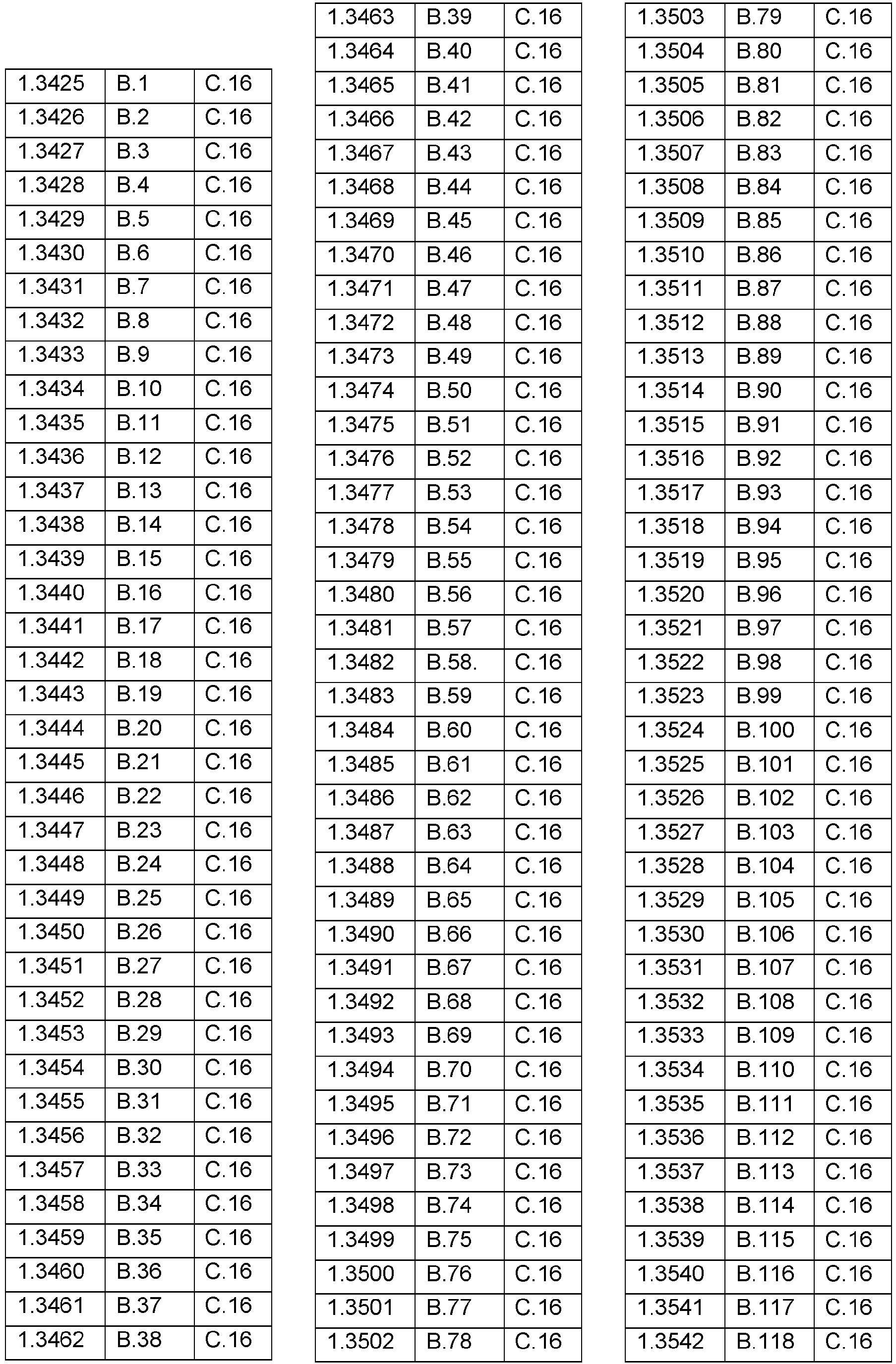

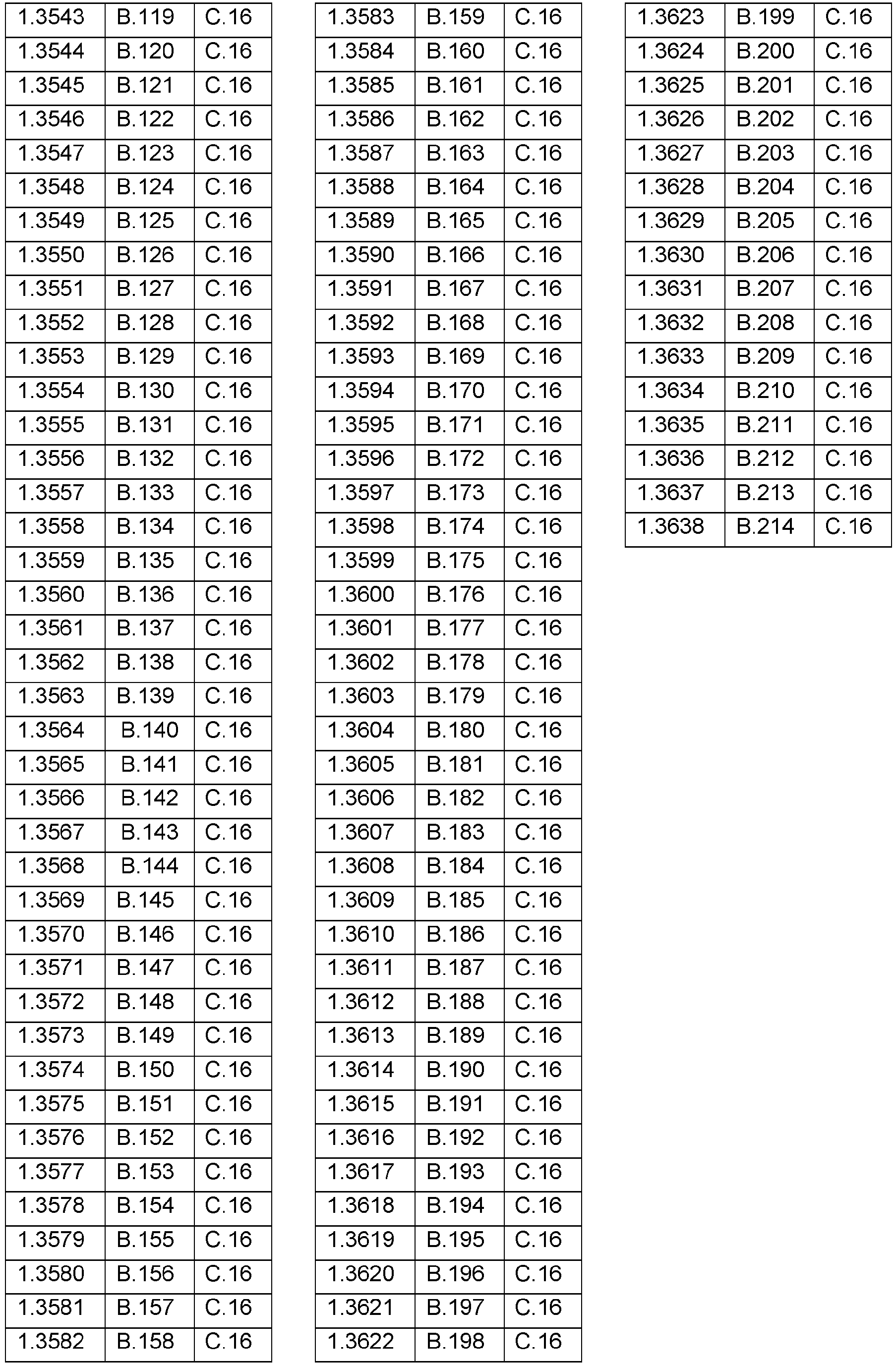

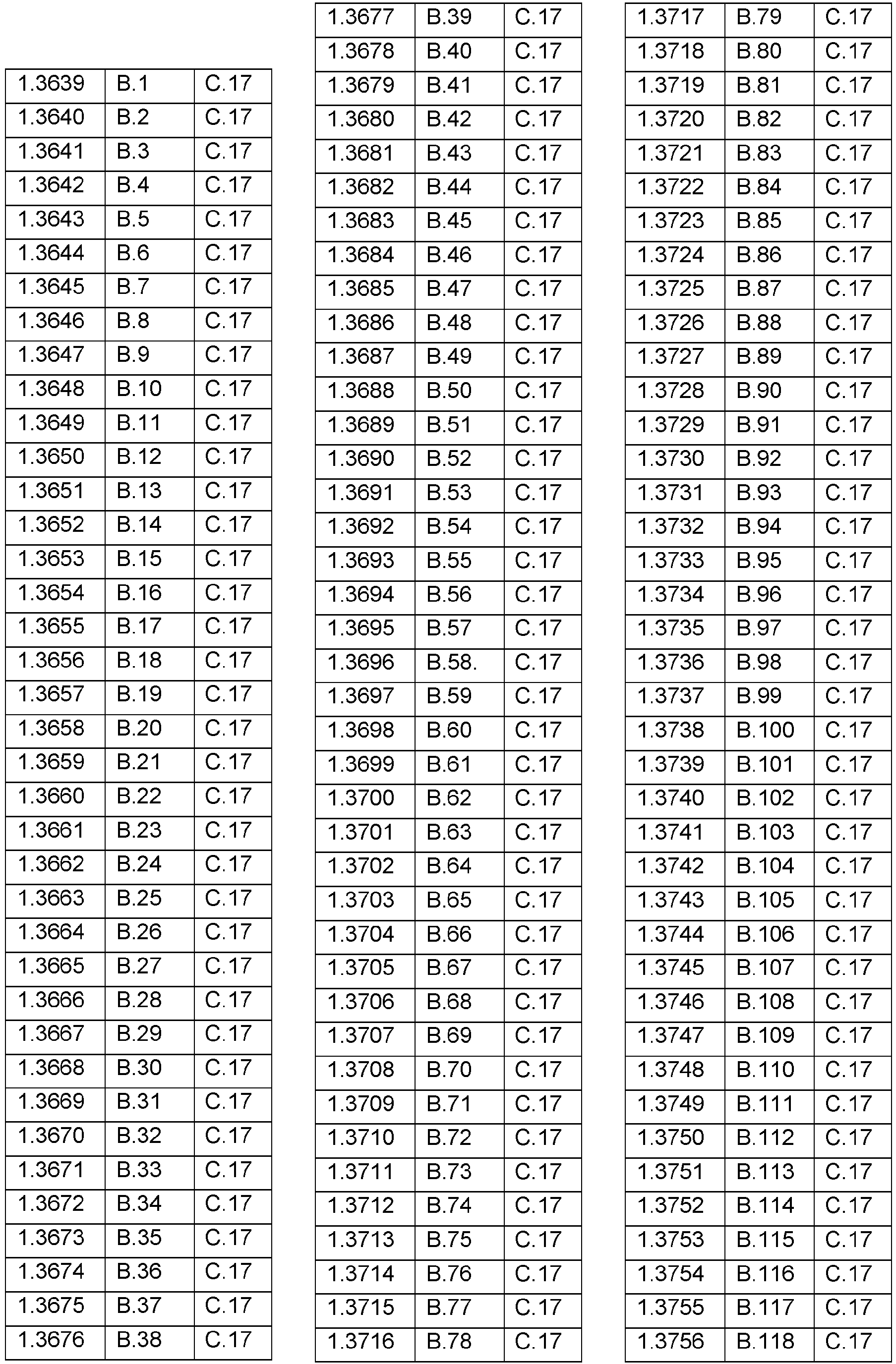

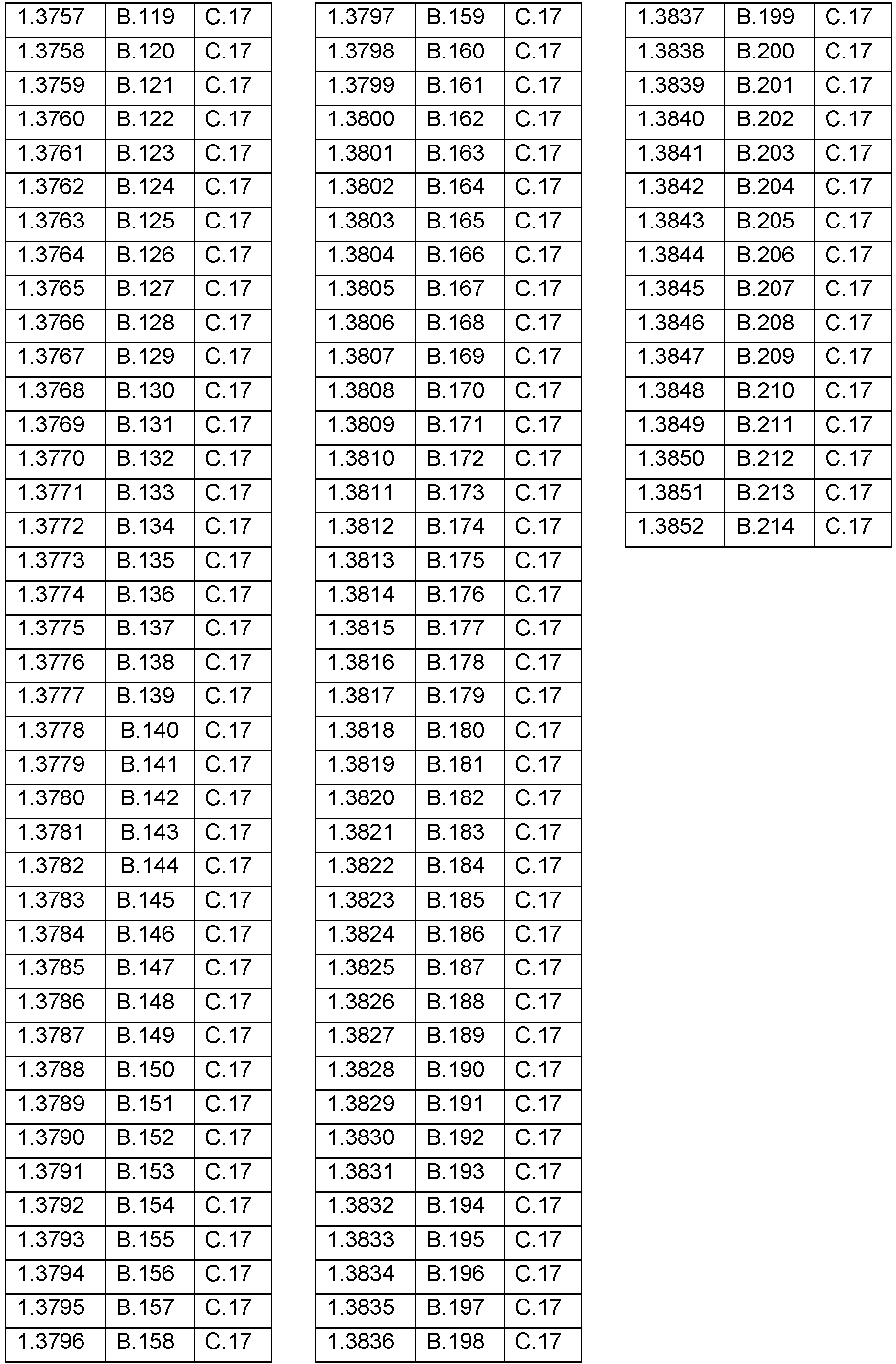

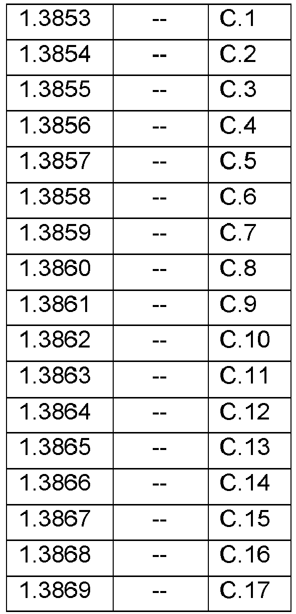

The specific number for each single composition is deducible as follows:
Composition 1.218 for example comprises the compositions of the invention containing trifludimoxazin containing microparticles as well as cyhalofop-butyl (B.4) and benoxacor (C.1) (see *table 1, entry 1.200;* as *well* as *table B, entry B.4 and table C, entry C.1*).

Also especially preferred are compositions 3.1. to 3.3869 which differ from the corresponding compositions 1.1 to 1.3869 only in that they additionally comprise B.2 as further herbicide B.

Also especially preferred are compositions 4.1. to 4.3869 which differ from the corresponding compositions 1.1 to 1.3869 only in that they additionally comprise B.8 as further herbicide B.

Also especially preferred are compositions 5.1. to 5.3869 which differ from the corresponding compositions 1.1 to 1.3869 only in that they additionally comprise B.30 as further herbicide B.

Also especially preferred are compositions 6.1. to 6.3869 which differ from the corresponding compositions 1.1 to 1.3869 only in that they additionally comprise B.32 as further herbicide B.

Also especially preferred are compositions 7.1. to 7.3869 which differ from the corresponding compositions 1.1 to 1.3869 only in that they additionally comprise B.35 as further herbicide B.

Also especially preferred are compositions 8.1. to 8.3869 which differ from the corresponding compositions 1.1 to 1.3869 only in that they additionally comprise B.38 as further herbicide B.

Also especially preferred are compositions 9.1. to 9.3869 which differ from the corresponding compositions 1.1 to 1.3869 only in that they additionally comprise B.40 as further herbicide B.

Also especially preferred are compositions 10.1. to 10.3869 which differ from the corresponding compositions 1.1 to 1.3869 only in that they additionally comprise B.51 as further herbicide B.

Also especially preferred are compositions 11.1. to 11.3869 which differ from the corresponding compositions 1.1 to 1.3869 only in that they additionally comprise B.55 as further herbicide B.

Also especially preferred are compositions 12.1. to 12.3869 which differ from the corresponding compositions 1.1 to 1.3869 only in that they additionally comprise B.56 as further herbicide B.

Also especially preferred are compositions 13.1. to 13.3869 which differ from the corresponding compositions 1.1 to 1.3869 only in that they additionally comprise B.64 as further herbicide B.

Also especially preferred are compositions 14.1. to 14.3869 which differ from the corresponding compositions 1.1 to 1.3869 only in that they additionally comprise B.66 as further herbicide B.

Also especially preferred are compositions 15.1. to 15.3869 which differ from the corresponding compositions 1.1 to 1.3869 only in that they additionally comprise B.67 as further herbicide B.

Also especially preferred are compositions 16.1. to 16.3869 which differ from the corresponding compositions 1.1 to 1.3869 only in that they additionally comprise B.68 as further herbicide B.

Also especially preferred are compositions 17.1. to 17.3869 which differ from the corresponding compositions 1.1 to 1.3869 only in that they additionally comprise B.69 as further herbicide B.

Also especially preferred are compositions 18.1. to 18.3869 which differ from the corresponding compositions 1.1 to 1.3869 only in that they additionally comprise B.73 as further herbicide B.

Also especially preferred are compositions 19.1. to 19.3869 which differ from the corresponding compositions 1.1 to 1.3869 only in that they additionally comprise B.76 as further herbicide B.

Also especially preferred are compositions 20.1. to 20.3869 which differ from the corresponding compositions 1.1 to 1.3869 only in that they additionally comprise B.81 as further herbicide B.

Also especially preferred are compositions 21.1. to 21.3869 which differ from the corresponding compositions 1.1 to 1.3869 only in that they additionally comprise B.82 as further herbicide B.

Also especially preferred are compositions 22.1. to 22.3869 which differ from the corresponding compositions 1.1 to 1.3869 only in that they additionally comprise B.85 as further herbicide B.

Also especially preferred are compositions 23.1. to 23.3869 which differ from the corresponding compositions 1.1 to 1.3869 only in that they additionally comprise B.88 as further herbicide B.

Also especially preferred are compositions 24.1. to 24.3869 which differ from the corresponding compositions 1.1 to 1.3869 only in that they additionally comprise B.89 as further herbicide B.

Also especially preferred are compositions 25.1. to 25.3869 which differ from the corresponding compositions 1.1 to 1.3869 only in that they additionally comprise B.94 as further herbicide B.

Also especially preferred are compositions 26.1. to 26.3869 which differ from the corresponding compositions 1.1 to 1.3869 only in that they additionally comprise B.95 as further herbicide B.

Also especially preferred are compositions 27.1. to 27.3869 which differ from the corresponding compositions 1.1 to 1.3869 only in that they additionally comprise B.98 as further herbicide B.

Also especially preferred are compositions 28.1. to 28.3869 which differ from the corresponding compositions 1.1 to 1.3869 only in that they additionally comprise B.100 as further herbicide B.

Also especially preferred are compositions 29.1. to 29.3869 which differ from the corresponding compositions 1.1 to 1.3869 only in that they additionally comprise B.103 as further herbicide B.

Also especially preferred are compositions 30.1. to 30.3869 which differ from the corresponding compositions 1.1 to 1.3869 only in that they additionally comprise B.103 and B.67 *atrazine* as further herbicides B.

Also especially preferred are compositions 31.1. to 31.3869 which differ from the corresponding compositions 1.1 to 1.3869 only in that they additionally comprise B.103 and B.76 *isoproturon* as further herbicides B.

Also especially preferred are compositions 32.1. to 32.3869 which differ from the corresponding compositions 1.1 to 1.3869 only in that they additionally comprise B.103 and B.82 *terbutylazin* as further herbicides B.

Also especially preferred are compositions 33.1. to 33.3869 which differ from the corresponding compositions 1.1 to 1.3869 only in that they additionally comprise B.104 as further herbicide B.

Also especially preferred are compositions 34.1. to 34.3869 which differ from the corresponding compositions 1.1 to 1.3869 only in that they additionally comprise B.104 and B.67 *atrazine* as further herbicides B.

Also especially preferred are compositions 35.1. to 35.3869 which differ from the corresponding compositions 1.1 to 1.3869 only in that they additionally comprise B.104 and B.76 *isoproturon* as further herbicides B.

Also especially preferred are compositions 36.1. to 36.3869 which differ from the corresponding compositions 1.1 to 1.3869 only in that they additionally comprise B.104 and B.82 *terbutylazin* as further herbicides B.

Also especially preferred are compositions 37.1. to 37.3869 which differ from the corresponding compositions 1.1 to 1.3869 only in that they additionally comprise B.106 as further herbicide B.

Also especially preferred are compositions 38.1. to 38.3869 which differ from the corresponding compositions 1.1 to 1.3869 only in that they additionally comprise B.107 as further herbicide B.

Also especially preferred are compositions 39.1. to 39.3869 which differ from the corresponding compositions 1.1 to 1.3869 only in that they additionally comprise B. 107 and B.67 *atrazine* as further herbicides B.

Also especially preferred are compositions 40.1. to 40.3869 which differ from the corresponding compositions 1.1 to 1.3869 only in that they additionally comprise B. 107 and B.76 *isoproturon* as further herbicides B.

Also especially preferred are compositions 41.1. to 41.3869 which differ from the corresponding compositions 1.1 to 1.3869 only in that they additionally comprise B. 107 and B.82 *terbutylazin* as further herbicides B.

Also especially preferred are compositions 42.1. to 42.3869 which differ from the corresponding compositions 1.1 to 1.3869 only in that they additionally comprise B.109 as further herbicide B.

Also especially preferred are compositions 43.1. to 43.3869 which differ from the corresponding compositions 1.1 to 1.3869 only in that they additionally comprise B.111 as further herbicide B.

Also especially preferred are compositions 44.1. to 44.3869 which differ from the corresponding compositions 1.1 to 1.3869 only in that they additionally comprise B.111 and B.67 *atrazine* as further herbicides B.

Also especially preferred are compositions 45.1. to 45.3869 which differ from the corresponding compositions 1.1 to 1.3869 only in that they additionally comprise B.111 and B.76 *isoproturon* as further herbicides B.

Also especially preferred are compositions 46.1. to 46.3869 which differ from the corresponding compositions 1.1 to 1.3869 only in that they additionally comprise B.111 and B.82 *terbutylazin* as further herbicides B.

Also especially preferred are compositions 47.1. to 47.3869 which differ from the corresponding compositions 1.1 to 1.3869 only in that they additionally comprise B. 116 as further herbicide B.

Also especially preferred are compositions 48.1. to 48.3869 which differ from the corresponding compositions 1.1 to 1.3869 only in that they additionally comprise B.116 and B.67 *atrazine* as further herbicides B.

Also especially preferred are compositions 49.1. to 49.3869 which differ from the corresponding compositions 1.1 to 1.3869 only in that they additionally comprise B.116 and B.94 *saflufenacil* as further herbicides B.

Also especially preferred are compositions 50.1. to 50.3869 which differ from the corresponding compositions 1.1 to 1.3869 only in that they additionally comprise B.116 and B.103 *isoxaflutole* as further herbicides B.

Also especially preferred are compositions 51.1. to 51.3869 which differ from the corresponding compositions 1.1 to 1.3869 only in that they additionally comprise B.116 and B.128 *acetochlor* as further herbicides B.

Also especially preferred are compositions 52.1. to 52.3869 which differ from the corresponding compositions 1.1 to 1.3869 only in that they additionally comprise B.116 and B.104 *mesotrione* as further herbicides B.

Also especially preferred are compositions 53.1. to 53.3869 which differ from the corresponding compositions 1.1 to 1.3869 only in that they additionally comprise B.116 and B.107 *sulcotrione* as further herbicides B.

Also especially preferred are compositions 54.1. to 54.3869 which differ from the corresponding compositions 1.1 to 1.3869 only in that they additionally comprise B.116 and B.111 *topramezone* as further herbicides B.

Also especially preferred are compositions 55.1. to 55.3869 which differ from the corresponding compositions 1.1 to 1.3869 only in that they additionally comprise B.122 as further herbicide B.

Also especially preferred are compositions 56.1. to 56.3869 which differ from the corresponding compositions 1.1 to 1.3869 only in that they additionally comprise B.126 as further herbicide B.

Also especially preferred are compositions 57.1. to 57.3869 which differ from the corresponding compositions 1.1 to 1.3869 only in that they additionally comprise B.128 as further herbicide B.

Also especially preferred are compositions 58.1. to 58.3869 which differ from the corresponding compositions 1.1 to 1.3869 only in that they additionally comprise B.131 *-P* as further herbicide B.

Also especially preferred are compositions 59.1. to 59.3869 which differ from the corresponding compositions 1.1 to 1.3869 only in that they additionally comprise B.132 as further herbicide B.

Also especially preferred are compositions 60.1. to 60.3869 which differ from the corresponding compositions 1.1 to 1.3869 only in that they additionally comprise B.133 as further herbicide B.

Also especially preferred are compositions 61.1. to 61.3869 which differ from the corresponding compositions 1.1 to 1.3869 only in that they additionally comprise B.135 as further herbicide B.

Also especially preferred are compositions 62.1. to 62.3869 which differ from the corresponding compositions 1.1 to 1.3869 only in that they additionally comprise B.137 as further herbicide B.

Also especially preferred are compositions 63.1. to 63.3869 which differ from the corresponding compositions 11.1 to 1.3869 only in that they additionally comprise B.138 as further herbicide B.

Also especially preferred are compositions 64.1. to 64.3869 which differ from the corresponding compositions 1.1 to 1.3869 only in that they additionally comprise B.140 as further herbicide B.

Also especially preferred are compositions 65.1. to 65.3869 which differ from the corresponding compositions 1.1 to 1.3869 only in that they additionally comprise B.145 as further herbicide B.

Also especially preferred are compositions 66.1. to 66.3869 which differ from the corresponding compositions 1.1 to 1.3869 only in that they additionally comprise B.153 as further herbicide B.

Also especially preferred are compositions 67.1. to 67.3869 which differ from the corresponding compositions 1.1 to 1.3869 only in that they additionally comprise B.156 as further herbicide B.

Also especially preferred are compositions 68.1. to 68.3869 which differ from the corresponding compositions 1.1 to 1.3869 only in that they additionally comprise B.171 as further herbicide B.

Also especially preferred are compositions 69.1. to 69.3869 which differ from the corresponding compositions 1.1 to 1.3869 only in that they additionally comprise B.174 as further herbicide B.

Also especially preferred are compositions 70.1. to 70.3869 which differ from the corresponding compositions 1.1 to 1.3869 only in that they additionally comprise B.202 as further herbicide B.

Also especially preferred are compositions 71.1. to 71.3869 which differ from the corresponding compositions 1.1 to 1.3869 only in that it is specified that the compositions of the invention contain trifludimoxazin containing microparticles wherein the aminoplast polymer is selected from the groups consisting of melamine formaldehyde resins and urea formaldehyde resins.

Also especially preferred are compositions 72.1. to 72.3869 which differ from the corresponding compositions 1.1 to 1.3869 only in that it is specified that the compositions of the invention contain trifludimoxazin containing microparticles wherein the amount of aminoplast polymer in the microparticle composition is from 0.5 to 40% by weight, in particular from 1 to 35% by weight and especially from 5 to 25%by weight, based on the total weight of aminoplast polymer and trifludimoxazin.

Also especially preferred are compositions 73.1. to 73.3869 which differ from the corresponding compositions 1.1 to 1.3869 only in that it is specified that the compositions of the invention contain trifludimoxazin containing microparticles wherein the microparticles have a weight average particle diameter d50 in the range from 1 to 25 µm, as determined by dynamic light scattering of an aqueous dispersion of the microcapsules.

Also especially preferred are compositions 74.1. to 74.3869 which differ from the corresponding compositions 1.1 to 1.3869 only in that it is specified that the compositions of the invention contain trifludimoxazin containing microparticles which contain at least one anionic polymeric surfactant having a plurality of sulfate or sulfonate groups.

Also especially preferred are compositions 75.1. to 75.3869 which differ from the corresponding compositions 1.1 to 1.3869 only in that it is specified that the compositions of the invention contain trifludimoxazin containing microparticles and containing a polymeric surfactant that is a homo- or copolymer of a (meth)acrylate monomer or a (meth)acrylamide monomer having a sulfonic acid group.

Also especially preferred are compositions 76.1. to 76.3869 which differ from the corresponding compositions 1.1 to 1.3869 only in that it is specified that the compositions of the invention contain trifludimoxazin containing microparticles and containing at least one lignin based sulfonic acid, such as lignosulfonic acid, ethoxylated lignosulfonic acid or oxidized lignins.

Also especially preferred are compositions 77.1. to 77.3869 which differ from the corresponding compositions 1.1 to 1.3869 only in that it is specified that the compositions of the invention contain trifludimoxazin containing microparticles and containing at least one lignin based sulfonic acid, such as lignosulfonic acid, ethoxylated lignosulfonic acid or oxidized lignins, wherein said lignosulfonic acid has an average molar weight MW of at least 10,000 Da.

Also especially preferred are compositions 78.1. to 78.3869 which differ from the corresponding compositions 1.1 to 1.3869 only in that it is specified that the compositions of the invention contain trifludimoxazin containing microparticles and containing at least one lignin based sulfonic acid, such as lignosulfonic acid, ethoxylated lignosulfonic acid or oxidized lignins, wherein said lignosulfonic acid has an average molar weight MW of at least 10,000 Da and wherein lignin based sulfonic acid has a degree of sulfonation from 1.0 to 2.5 mol per kilogram of said lignosulfonic acid A.

Also especially preferred are compositions 79.1. to 79.3869 which differ from the corresponding compositions 1.1 to 1.3869 only in that it is specified that the compositions of the invention contain trifludimoxazin containing microparticles which contain at least one anionic polymeric surfactant having a plurality of sulfate or sulfonate groups and that further contain at alkyl sulfate like lauryl sulfate.

Also especially preferred are compositions 80.1. to 80.3869 which differ from the corresponding compositions 1.1 to 1.3869 only in that it is specified that the compositions of the invention contain trifludimoxazin containing microparticles wherein said composition of the invention is an aqueous suspension of the microparticles.

Also especially preferred are compositions 81.1. to 81.3869 which differ from the corresponding compositions 1.1 to 1.3869 only in that it is specified that the compositions of the invention contain trifludimoxazin containing microparticles , wherein said composition of the invention is a solid composition of the microparticles .

Also especially preferred are compositions 82.1. to 82.3869 which differ from the corresponding compositions 1.1 to 1.3869 only in that it is specified that the compositions of the invention are prepared according to example 1 in the experimental section.

Also especially preferred are compositions 83.1. to 83.3869 which differ from the corresponding compositions 1.1 to 1.3869 only in that it is specified that the compositions of the invention are prepared according to example 2 in the experimental section.

Also especially preferred are compositions 84.1. to 84.3869 which differ from the corresponding compositions 1.1 to 1.3869 only in that it is specified that the compositions of the invention are prepared according to example 3 in the experimental section.

Preferred mixing partners are 1,2,4-thiadiazoles, 1,3,4-thiadiazoles, amides, amino phosphoric acid and its derivatives, amino triazoles, anilides, aryloxy/heteroaryloxyalkanoic acids and their derivatives, benzoic acid and its derivatives, benzothia diazinones, 2-(hetaroyl/aroyl)-1,3-cyclohexanediones, heteroaryl aryl ketones, benzylisoxazolidinones, meta-CF3-phenyl derivatives, carbamates, quinolinecarboxylic acid and its derivatives, chloroacetanilides, cyclohexenone oxime ether derivatives, diazines, dichloropropionic acid and its derivatives, dihydrobenzofurans, dihydrofuran-3-ones, dinitroanilines, dinitrophenols, diphenyl ethers, dipyridyls, halocarboxylic acids and their derivatives, ureas, 3-phenyluracils, imidazoles, imidazolinones, N-phenyl-3,4,5,6-tetrahydrophthalimides, oxadiazoles, oxiranes, phenols, aryloxy- and heteroaryloxyphenoxypropionic acid esters, phenylacetic acid and its derivatives, 2-phenylpropionic acid and its derivatives, pyrazoles, phenylpyrazoles, pyridazines, pyridine carboxylic acid and its derivatives, pyrimidyl ethers, sulfonamides, sulfonylureas, triazines, triazinones, triazolinones, triazolecarboxamides and uracils.
Especially preferred mixing partners are atrazine, glyphosate, glufosinate, S-metolachlor, 2,4-D ester, isoxaflutole, diflufenzopyr, dicamba, mesotrione, dimethenamid-P, pendimethalin, imazethapyr, pyroxasulfone, tembotrione, 2,4-DB, acetochlor, clethodim, imazamox, imazapyr, imazapic, imazaquin, bentazone, metribuzin, quizalofop, sethoxydim, diuron, cinmethylin, metazachlor, quinclorac.
It is of also possible to use the compositions of the present invention as a tank-mix partner with other formulations. Thus, the compositions of the invention can be mixed and applied together with a large number of different pesticide compound formulations, for example those that include active ingredients or adjuvants. Suitable pesticides include those identified above as active compounds B) and C), yet preferably selected fromatrazine, glyphosate, glufosinate, S-metolachlor, 2,4-D ester, isoxaflutole, diflufenzopyr, dicamba, mesotrione, dimethenamid-P, pendimethalin, imazethapyr, pyroxasulfone, tembotrione, 2,4-DB, acetochlor, clethodim, imazamox, imazapyr, imazapic, imazaquin, bentazone, metribuzin, quizalofop, sethoxydim, diuron, cinmethylin, metazachlor, quinclorac, topramezone, bentazon, saflufenacil paraffin oils, polyol fatty acid esters, polyethoxylated polyol fatty acid esters, ethoxylated alkyl aryl phosphates, methylated seed oils, non-ionic surfactants, emulsifiers, ammonium sulfate or mixtures thereof. In one embodiment, compositions of the invention do not contain saflufenacil.
In one embodiment, compositions of the invention contain saflufenacil.

Moreover, it may be useful to apply the trifludimoxazin -containing compositions of the invention, separately or in combination with other herbicides, jointly as a mixture with yet further plant protection agents, for example with agents for controlling pests or phytopathogenic fungi or bacteria. Also, of interest is the miscibility with mineral salt solutions which are employed for alleviating nutritional and trace element deficiencies.
Nonphytotoxic oils and oil concentrates may also be added.
In one embodiment, compositions of the invention are not applied, separately or in combination with saflufenacil.
In one embodiment, compositions of the invention are applied, separately or in combination, with saflufenacil.

The present invention offers the following advantages:
It is easy and economical to carry out.
Compositions according to the invention are compatible with a broad range of other pesticides and formulations thereof, in particular herbicides with a solubility in water of at least one g/l, such as auxins, bentazone, diquat and paraquat and their formulations. In particular, the compatibility with dicamba, glyphosate, glufosinate, MCPA, 2,4-dichlorophenoxyacetic acid, 2,4,5-Trichlorophenoxyacetic acid, bentazone, diquat and paraquat and their formulations is achieved.

Compositions according to the invention are very efficient for controlling weeds.
Compositions according to the invention show both high physical and chemical stability over prolonged storage periods while maintaining their biological efficacy.

Compositions according to the invention can be easily and flexibly applied. In particular, the time window in which they can be applied to effectively control weeds is very long. Compositions according to the invention can be applied pre-emergence or post emergence of the crops.

Compositions according to the invention can be applied such that a high residual activity is achieved while at the same time a low phytotoxicity towards the desired crops is observed. Compositions according to the invention can be applied such that a high residual activity is achieved while at the same a high crop selectivity is achieved.

Compositions according to the invention are compatible with tank-mix partners which are commonly combined with trifludimoxazin, such as dicamba, glyphosate, glufosinate, topramezone, pyroxasulfone and their formulations.
Upon dilution with water, the compositions according to the invention give a stable aqueous composition of trifludimoxazin and form no or only little coarse material or supernatant liquid.

The following examples are intended to further illustrate the present invention without limiting its scope in any way.

### Examples

Particle size Distribution (PSD) was determined by statistic laser scattering using a Malvern Mastersizer 200 according to European norm ISO 13320 EN. The data were treated according to the Mie-Theory by software using a "universal model" provided by Malvern Instruments. Important parameters are the dₙ-values for n = 10, 50 and 90, the d₁₀, d₂₀ and d₃₀.

Solid content of the final dispersion was measured by evaporating the volatiles of small probe of the aqueous suspension in an oven at 105 °C for 2 hours. The value indicated for the examples is an average value from three parallel experiments.

### Materials Used:

Surfactant A-1: 20 wt. % aqueous solution of poly(2-acrylamido-2-methylpropane sulfonic acid) sodium salt with pH 2.5-4;
Surfactant A-2: 20 wt.% aqueous solution of lignin sulfonate having an MW of 10,200 g/mol and a degree of sulfonation of 1,5 mol SO₃ /kg lignosulfonate
Surfactant B: 15 wt.% aqueous solution of sodium dodecyl sulfate
Surfactant C: 15 wt.% aqueous solution of copolymer of poly(propylene oxide) and poly ethylene oxide
Pre-condensate P1: 70% w/w aqueous solution of etherified melamine formaldehyde pre-condensate, CAS 68002-20-0
Defoamer: PDMS-based formulation
Thickener: xanthan gum
Acticide B20: Glycol based benzisothiazolinone from Thor Chemicals
Acticide L30: 2-Bromo-2-nitropropane-1,3-diol from Thor Chemicals

### Preparation of the compositions of the invention:

### Example 1:

1155 g of water, 2.28 g of Defoamer, 158.9 g of Surfactant A-1 were mixed in a 4 l batch reactor equipped with a disperser disc (300 rpm) and a pre-milled trifludimoxazin dispersion (d₁₀= 0.6 µm, d₅₀= 1.35 µm, d₉₀=3.13 µm) containing 462 g of trifludimoxazin, 304.92 g of water, 67.54 g of Surfactant B, 2.36 g of defoamer, and 0.43 of thickener was added. Pre-condensate P1 (134.7 g) was added and the disperser disc was exchanged with an anchor stirrer (80 rpm). 100.32 g of a 10 wt.% aqueous citric acid solution was slowly added. The batch reactor was heated to 40 °C within 10 min and was stirred for 60 min at 40 °C. Then the temperature was increased to 80 °C within 60 min and the temperature was kept at 80 °C for 2 h. Then the reactor was cooled to 22°C. The dispersion was sieved over a sieve (150 µm mesh size) and 141.44 g of ammonium acetate, 477.84 g of Surfactant C, 11.88 g of Defoamer, thickener (205.69 g as 3 wt.% solution), 2.48 g of Acticide B20, 0.99 g of Acticide L 30, 216.91 g of Surfactant A-2, 34.06 g of ammonia (25 wt.% in water), and 149.03 g of water were added. The obtained suspension had a solid content of 22.7 wt.%. The particle size is given in table 1.

### Example 2:

1122 g of water, 2.28 g of defoamer, 158.9 g of Surfactant A-1 were mixed in a 4 l batch reactor equipped with a disperser disc (300 rpm) and a pre-milled trifludimoxazin dispersion (d₁₀= 0.6 µm, d₅₀= 1.35 µm, d₉₀=3.13 µm) containing 462 g of trifludimoxazin, 304.92 g of water, 67.54 g of Surfactant B, 2.36 g of defoamer, and 0.43 of thickener was added. Pre-condensate P1 (193.12 g) was added and the disperser disc was exchanged with an anchor stirrer (80 rpm). 100.32 g of a 10 wt.% aqueous citric acid solution was slowly added. The batch reactor was heated to 40 °C within 10 min and was stirred for 60 min at 40 °C. Then the temperature was increased to 80 °C within 60 min and the temperature was kept at 80 °C for 2 h. Then the reactor was cooled to 22°C. The suspension was sieved over a sieve (150 µm mesh size) and 141.44 g of ammonium acetate, 477.84 g of Surfactant C, 11.88 g of Defoamer, thickener (205.69 g as 3 wt.% solution), 2.48 g of Acticide B20, 0.99 g of Acticide L 30, 216.91 g of Surfactant A-2, 45.51 g of ammonia (25 wt.% in water), and 112.17 g of water were added.
The obtained suspension had a solid content of 23.6 wt.%. The particle size is given in table 1.

### Example 3:

1122 g of water, 2.28 g of defoamer, 158.9 g of Surfactant A-1 were mixed in a 4 l batch reactor equipped with a disperser disc (300 rpm) and a pre-milled trifludimoxazin dispersion (d₁₀= 0.6 µm, d₅₀= 1.35 µm, d₉₀=3.13 µm) containing 462 g of trifludimoxazin, 304.92 g of water, 67.54 g of Surfactant B, 2.36 g of defoamer, and 0.43 of thickener was added. Pre-condensate P1 (235.72 g) was added and the disperser disc was exchanged with an anchor stirrer (80 rpm). 100.32 g of a 10 wt.% aqueous citric acid solution was slowly added. The batch reactor was heated to 40 °C within 10 min and was stirred for 60 min at 40 °C. Then the temperature was increased to 80 °C within 60 min and the temperature was kept at 80 °C for 2 h. Then the reactor was cooled to 22°C. The suspension was sieved over a sieve (150 µm mesh size) and 141.44 g of ammonium acetate, 477.84 g of Surfactant C, 11.88 g of Defoamer, thickener (205.69 g as 3 wt.% solution), 2.48 g of Acticide B20, 0.99 g of Acticide L 30, 216,91 g of Surfactant A-2, 47.98 g of ammonia (25 wt.% in water), and 67.09 g of water were added.
The obtained suspension had a solid content of 24.3 wt.%. The particle size is given in table 1.

| | Particle size distribution ( µm) | | |
|---|---|---|---|
| | D₁₀ | D₅₀ | D₉₀ |
| Example 1 | 0.95 | 4.42 | 7.62 |
| Example 2 | 3.76 | 6.43 | 9.09 |
| Example 3 | 4.94 | 7.71 | 10.81 |

### Use Examples

The use of formulations of the invention to reduce crop response from a herbicidal compound with either pre-emergence or post-emergence applications was demonstrated in a series of greenhouse and field experiments. Presently pre-emergence application rates of trifludimoxazin are limited to minimize potential crop response. The invention's encapsulation of trifludimoxazin can moderate the availability of the herbicide and resulting crop response. Moderating the availability of trifludimoxazin allows either a reduction in interval from time of application to time of planting and increased application rates to take advantage of the residual properties of the herbicide. An additional benefit of the invention is the ability to apply trifludimoxazin after crop response and avoid injury.

For herbicide treatments, trifludimoxazin, both as an SC formulation and the microcapsule examples 1 to 3, which had been suspended in water, were applied using spray nozzles providing fine to coarse droplets.

The herbicide compounds applied in the examples were used as experimental or soon to be commercially available formulations which have been diluted with tap water to a suitable concentration. Trifludimoxazin was used as a SC formulation containing 500 g ai/l of trifludimoxazin (Vulcarus^{®}, BASF), and the encapsulated trifludimoxazin consisted of experimental CS formulations containing 130 g ai/l.

The evaluation for plant injury or damage caused by the chemical compositions was carried out using a scale from 0 - 100% when compared with the untreated control plants. Here, 0 means no damage and 100 means complete destruction of the plants. Weed control evaluations from the chemical compositions utilized a scale from 0 - 100% when compared to the untreated control plots. Here, 0 means the chemical compositions provided no weed control and 100 means complete control of the weed.

### Example 4

### Corn Pre emergence Crop Safety Comparison of Trifludimoxazin SC versus CS Formulations (Greenhouse)

Single seeds of corn (*Zea mays,* ZEAMD) were planted 3.8 cm deep into pots containing air dried, sieved Drummer soil (silty clay loam; 2.8% organic matter; pH 7.4; CEC 19.1) with the soil surface smoothed after planting. These pots were then treated with pre emergence applications of either trifludimoxazin SC (Vulcarus^{®} of BASF SE) or one of three trifludimoxazin CS obtained in examples 1 to 3 at 12.5, 25, 50 or 100 g ai/ha. After application 1.27 cm of simulated rainfall was applied using a fine droplet nozzle within a spray chamber to activate/incorporate the herbicide into the pots. Pots were placed in a completely randomized design with four replications per treatment within a greenhouse. Percent injury data was collected 16 days after treatment (DAT). The results are summarized in table 1.

**(Table 1) Demonstration of enhanced corn crop safety to pre emergence trifludimoxazin applications with encapsulated trifludimoxazin (Greenhouse).**

| **Corn Tolerance to Tirexor CS PRE (greenhouse trial)** | | | | | |
|---|---|---|---|---|---|
| | | | | **ZEAMD** | |
| | | | | **PHYTOX** | |
| **Product Name** | **Rate g a/ha** | **Rate fl oz/A** | **Growth Stage** | **16 DAT** | * |
| CHECK | | | PRE | **0** | **c** |
| Trifludimoxazin SC | 12.5 | 0.343 | PRE | **5** | **bc** |
| Trifludimoxazin Example 3 | 12.5 | 1.32 | PRE | **3** | **bc** |
| Trifludimoxazin Example 2 | 12.5 | 1.32 | PRE | **4** | **bc** |
| Trifludimoxazin Example 1 | 12.5 | 1.32 | PRE | **3** | **bc** |
| | | | | | |
| Trifludimoxazin SC | 25 | 0.685 | PRE | **9** | **bc** |
| Trifludimoxazin Example 3 | 25 | 2.64 | PRE | **2** | **c** |
| Trifludimoxazin Example 2 | 25 | 2.64 | PRE | **4** | **bc** |
| Trifludimoxazin Example 1 | 25 | 2.64 | PRE | **3** | **bc** |
| | | | | | |
| Trifludimoxazin SC | 50 | 1.37 | PRE | **13** | **bc** |
| Trifludimoxazin Example 3 | 50 | 5.27 | PRE | **6** | **bc** |
| Trifludimoxazin Example 2 | 50 | 5.27 | PRE | **9** | **bc** |
| Trifludimoxazin Example 1 | 50 | 5.27 | PRE | **13** | **bc** |
| | | | | | |
| Trifludimoxazin SC | 100 | 2.74 | PRE | **66** | **a** |
| Trifludimoxazin Example 3 | 100 | 10.54 | PRE | **8** | **bc** |
| Trifludimoxazin Example 2 | 100 | 10.54 | PRE | **12** | **bc** |
| Trifludimoxazin Example 1 | 100 | 10.54 | PRE | **28** | **b** |

| | | | | | |
|---|---|---|---|---|---|
| * Means followed by the same letter do not differ significantly (P = 0.05). | | | | | |

As seen from the data in table 1, the use of encapsulated trifludimoxazin resulted in a reduction in the level of injury of ZEAMD as the plants emerged through the herbicide treated soil. At the highest trifludimoxazin rate, 100 g ai/ha, the encapsulated trifludimoxazin formulations produced significantly less phytotoxicity to ZEAMD than the SC formulation thus demonstrating increased crop safety.

### Example 5

### Corn Post emergence Crop Safety Comparison of Trifludimoxazin SC versus CS Formulations (Greenhouse)

Seedlings of corn (*Zea mays,* ZEAMD) were treated with post-emergence applications of either trifludimoxazin SC (Vulcarus) or one of three trifludimoxazin CS formulation obtained in examples 1 to 3 at 12.5, 25 or 50 g ai/ha when they were at the V2 (2 leaf collar) stage. All trifludimoxazin SC treatments included 1% (v/v) methylated seed oil ("MSO", MES-100TM, Drexel Chemical) surfactant and all trifludimoxazin CS treatments included 0.25% (v/v) nonionic surfactant ("NIS") (Induce^{®}, Helena^{®}). Plants were placed in a completely randomized design with four replications per treatment within a greenhouse. Percent injury data was collected 7 days after treatment (DAT). The results are summarized in table 2.

**(Table 2) Demonstration of enhanced corn crop safety to post emergence trifludimoxazin applications with encapsulated trifludimoxazin (Greenhouse).**

| **Corn Tolerance to Tirexor CS POST (greenhouse trial)** | | | | | |
|---|---|---|---|---|---|
| | | | | **ZEAMD** | |
| | | | | **PHYTOX** | |
| **Product Name** | **Rate g a/ha** | **Rate fl oz/A** | **Growth Stage** | **7 DAT** | ***** |
| CHECK | | | V2 | **0** | **c** |
| Trifludimoxazin SC + MSO | 12.5 | 0.343 | V2 | **65** | **a** |
| Trifludimoxazin Example 3 + NIS | 12.5 | 1.32 | V2 | **1** | **bc** |
| Trifludimoxazin Example 2 + NIS | 12.5 | 1.32 | V2 | **5** | **bc** |
| Trifludimoxazin Example 1 + NIS | 12.5 | 1.32 | V2 | **3** | **bc** |
| | | | | | |
| Trifludimoxazin SC + MSO | 25 | 0.685 | V2 | **65** | **a** |
| Trifludimoxazin Example 3 + NIS | 25 | 2.64 | V2 | **3** | **bc** |
| Trifludimoxazin Example 2 + NIS | 25 | 2.64 | V2 | **4** | **bc** |
| Trifludimoxazin Example 1 + NIS | 25 | 2.64 | V2 | **9** | **b** |
| | | | | | |
| Trifludimoxazin SC + MSO | 50 | 1.37 | V2 | **66** | **a** |
| Trifludimoxazin Example 3 + NIS | 50 | 5.27 | V2 | **3** | **bc** |
| Trifludimoxazin Example 2 + NIS | 50 | 5.27 | V2 | **6** | **bc** |
| Trifludimoxazin Example 1 + NIS | 50 | 5.27 | V2 | **9** | **b** |

| | | | | | |
|---|---|---|---|---|---|
| * Means followed by the same letter do not differ significantly (P = 0.05). | | | | | |

As seen from the data in table 2, the use of encapsulated trifludimoxazin resulted in a significant decrease in the level of injury of ZEAMD compared to the SC trifludimoxazin formulation allowing for the potential application after ZEAMD has emerged. The level of injury remains low as the herbicide rate increases from 12.5 to 50 g ai/ha thus allowing for higher application rates to take advantage of the residual properties of trifludimoxazin.

### Example 6

### Corn Pre emergence Crop Safety Comparison of Trifludimoxazin SC versus CS Formulations (Field)

A field consisting of silty loam soil (2.4% organic matter; pH 6.8; cation exchange capacity (CEC) 16.7) and used for conventional cultivation near Beaver Crossing, Nebraska, was field cultivated twice prior to planting corn (*Zea mays,* ZEAMD). After planting the field was treated with pre emergence applications of either trifludimoxazin SC (Vulcarus^{®}) or one of three trifludimoxazin CS obtained in examples 1 to 3 at 12.5, 25, 50 or 100 g ai/ha. After application a total of 1.22 cm of water from irrigation and natural rainfall occurred to activate/incorporate the herbicide into the plots. Plots were 1.9 m x 11.2 m and located in a completely randomized design with three replications per treatment. Percent injury data was collected 22 days after treatment (DAT) which corresponds to 7 days after ZEAMD emergence. The results are summarized in table 3.

**(Table 3) Demonstration of enhanced corn crop safety to pre emergence trifludimoxazin applications with encapsulated trifludimoxazin (Field).**

| **Corn Tolerance to Tirexor CS PRE (field trial)** | | | | |
|---|---|---|---|---|
| | | | **ZEAMD** | |
| | | | **PHYTOX** | |
| Treatment | Rate g ai/ha | Rate fl oz/A | **22 DAT** | ***** |
| CHECK | | | **0** | **b** |
| Trifludimoxazin SC | 12.5 | 0.343 | **0** | **b** |
| Trifludimoxazin Example 3 | 12.5 | 1.32 | **0** | **b** |
| Trifludimoxazin Example 2 | 12.5 | 1.32 | **0** | **b** |
| Trifludimoxazin Example 1 | 12.5 | 1.32 | **0** | **b** |
| | | | | |
| Trifludimoxazin SC | 25 | 0.685 | **2** | **b** |
| Trifludimoxazin Example 3 | 25 | 2.64 | **0** | **b** |
| Trifludimoxazin Example 2 | 25 | 2.64 | **0** | **b** |
| Trifludimoxazin Example 1 | 25 | 2.64 | **0** | **b** |
| | | | | |
| Trifludimoxazin SC | 50 | 1.37 | **5** | **b** |
| Trifludimoxazin Ex-ample 3 | 50 | 5.27 | **0** | **b** |
| Trifludimoxazin Example 2 | 50 | 5.27 | **0** | **b** |
| Trifludimoxazin Example 1 | 50 | 5.27 | **0** | **b** |
| | | | | |
| Trifludimoxazin SC | 100 | 2.74 | **18** | **a** |
| Trifludimoxazin Example 3 | 100 | 10.54 | **0** | **b** |
| Trifludimoxazin Example 2 | 100 | 10.54 | **3** | **b** |
| Trifludimoxazin Example 1 | 100 | 10.54 | **5** | **b** |

| | | | | |
|---|---|---|---|---|
| * Means followed by the same letter do not differ significantly (P = 0.05). | | | | |

As seen from the data in table 3, the three encapsulated trifludimoxazin formulations reduced the ZEAMD injury compared to the standard trifludimoxazin SC formulation. At the highest application rate of 100 g ai/ha there was a significant reduction in ZEAMD injury from the encapsulated trifludimoxazin formulations demonstrating improved crop safety with elevated application rates.

### Example 7

### Weed Control Comparison of Trifludimoxazin SC versus CS Formulations (Field)

A field with a natural population of velvetleaf (*Abutilon theophrasti;* ABUTH), common waterhemp (*Amaranthus tameriscinus;* AMATA), common purslane (*Portulaca oleracea;* POROL) and redroot pigweed (*Amaranthus retroflexus;* AMARE) near Beaver Crossing, NE was field cultivated twice to remove/control emerged weeds. The field was treated with pre emergence applications of either trifludimoxazin SC (Vulcarus) or one of three trifludimoxazin CS obtained in examples 1 to 3 at 12.5, 25, 50 or 100 g ai/ha. After application a total of 1.22 cm of water from irrigation and natural rainfall occurred to activate/incorporate the herbicide into the plots. Plots were 1.9 m x 11.2 m and located in a completely randomized design with three replications per treatment. Percent control data was collected 44 days after treatment (DAT). The results are summarized in table 4.

**(Table 4) Weed control comparison of SC versus CS trifludimoxazin formulations for the control of summer weeds in the field.**

| | | | **ABUTH** | | **AMATA** | | **POROL** | | **AMARE** | |
|---|---|---|---|---|---|---|---|---|---|---|
| | | | **CONTROL** | | **CONTROL** | | **CONTROL** | | **CONTROL** | |
| Treatment | Rate g ai/ha | Rate fl oz/A | **44 DAT** | ***** | **44 DAT** | ***** | **44 DAT** | ***** | **44 DAT** | ***** |
| CHECK | | | **0** | **f** | **0** | **d** | **0** | **h** | **0** | **d** |
| Trifludomoxazin SC | 12.5 | 0.343 | **77** | **a-d** | **87** | **ab** | **73** | **b-e** | **87** | **a** |
| Trifludimoxazin Example 3 | 12.5 | 1.32 | **37** | **e** | **40** | **c** | **30** | **9** | **40** | **c** |
| Trifludimoxazin Example 2 | 12.5 | 1.32 | **50** | **cde** | **50** | **c** | **57** | **ef** | **50** | **c** |
| Trifludimoxazin Example 1 | 12.5 | 1.32 | **55** | **b-e** | **62** | **bc** | **62** | **def** | **60** | **bc** |
| | | | | | | | | | | |
| Trifludomoxazin SC | 25 | 0.685 | **83** | **abc** | **98** | **a** | **88** | **abc** | **99** | **a** |
| Trifludimoxazin Example 3 | 25 | 2.64 | **42** | **de** | **43** | **c** | **43** | **fg** | **43** | **c** |
| Trifludimoxazin Example 2 | 25 | 2.64 | **75** | **a-d** | **82** | **ab** | **73** | **b-e** | **82** | **ab** |
| Trifludimoxazin Example 1 | 25 | 2.64 | **75** | **a-d** | **85** | **ab** | **82** | **a-d** | **85** | **ab** |
| | | | | | | | | | | |
| Trifludomoxazin SC | 50 | 1.37 | **93** | **a** | **100** | **a** | **98** | **a** | **100** | **a** |
| Trifludimoxazin Example 3 | 50 | 5.27 | **67** | **a-e** | **78** | **ab** | **75** | **b-e** | **80** | **ab** |
| Trifludimoxazin Example 2 | 50 | 5.27 | **83** | **abc** | **87** | **ab** | **89** | **abc** | **90** | **a** |
| Trifludimoxazin Example 1 | 50 | 5.27 | **85** | **abc** | **90** | **a** | **92** | **ab** | **90** | **a** |
| | | | | | | | | | | |
| Trifludomoxazin SC | 100 | 2.74 | **95** | **a** | **100** | **a** | **100** | **a** | **100** | **a** |
| Trifludimoxazin Example 3 | 100 | 10.54 | **82** | **abc** | **85** | **ab** | **85** | **abc** | **85** | **ab** |
| Trifludimoxazin Example 2 | 100 | 10.54 | **90** | **ab** | **93** | **a** | **97** | **a** | **95** | **a** |
| Trifludimoxazin Example 1 | 100 | 10.54 | **92** | **a** | **97** | **a** | **100** | **a** | **97** | **a** |

| | | | | | | | | | | |
|---|---|---|---|---|---|---|---|---|---|---|
| * Means followed by the same letter do not differ significantly (P = 0.05). | | | | | | | | | | |

As seen from the data in table 4, the three encapsulated trifludimoxazin provided varying degrees of broadleaf weed control compared to the standard trifludimoxazin SC formulation. At the lowest application rates of 12.5 and 25 g ai/ha Trifludimoxazin Example 3 had significantly lower weed control compared to the standard SC formulation, however at 50 and 100 g ai/ha this Example 3 formulation was similar to the standard SC formulation. Trifludimoxazin Example 2 and Example 1 provided statistically similar weed control to the standard trifludimoxazin SC formulation 44 DAT for ABUTH, AMATA and POROL at all tested rates. The encapsulated trifludimoxazin formulations were able to maintain similar weed control to the trifludimoxazin SC formula particularly at higher application rates where the residual properties of trifludimoxazin would benefit growers. These results demonstrate that optimization of the invention's formulation can significantly improve crop safety and maintain efficacy.

### Example 8

### Corn Post emergence Crop Safety Comparison of Trifludimoxazin SC versus CS Formulations (Field)

Field grown corn plants (*Zea mays,* ZEAMD) were treated with post emergence applications of either trifludimoxazin SC (Vulcarus) or one of three trifludimoxazin CS obtained in examples 1 to 3 at 12.5, 25 or 50 g ai/ha when they were at the V2-3 (2-3 leaf collar) stage. All trifludimoxazin SC treatments included 1% (v/v) methylated seed oil surfactant / MES-100TM, Drexel Chemical) and all trifludimoxazin CS treatments included 0.25% (v/v) nonionic surfactant (Induce^{®}, Helena^{®}). Plots were 2.0 m x 9.1 m and located in a completely randomized design with three replications per treatment. Percent injury data was collected 9 days after treatment (DAT). The results are summarized in table 8.

**(Table 5) Demonstration of enhanced corn crop safety to post emergence trifludimoxazin applications with encapsulated trifludimoxazin (Field).**

| **Corn Tolerance to Tirexor CS POST (field trial)** | | | | |
|---|---|---|---|---|
| | | | **ZEAMD** | |
| | | | **PHYTOX** | |
| Treatment | Rate g ai/ha | Rate fl oz/A | **9 DAT** | ***** |
| CHECK | | | **0** | **f** |
| Trifludimoxazin SC + MSO | 12.5 | 0.343 | **33** | **b** |
| Trifludimoxazin Example 3 + NIS | 12.5 | 1.32 | **5** | **ef** |
| Trifludimoxazin Example 2 + NIS | 12.5 | 1.32 | **7** | **def** |
| Trifludimoxazin Example 1 + NIS | 12.5 | 1.32 | **17** | **c** |
| | | | | |
| Trifludimoxazin SC + MSO | 25 | 0.685 | **37** | **b** |
| Trifludimoxazin Example 3 + NIS | 25 | 2.64 | **5** | **ef** |
| Trifludimoxazin Example 2 + | 25 | 2.64 | **12** | **cde** |
| NIS | | | | |
| Trifludimoxazin Example 1 + NIS | 25 | 2.64 | **20** | **c** |
| | | | | |
| Trifludimoxazin SC + MSO | 50 | 1.37 | **50** | **a** |
| Trifludimoxazin Example 3 + NIS | 50 | 5.27 | **15** | **cd** |
| Trifludimoxazin Example 2 + NIS | 50 | 5.27 | **12** | **cde** |
| Trifludimoxazin Example 1 + NIS | 50 | 5.27 | **30** | **b** |

| | | | | |
|---|---|---|---|---|
| * Means followed by the same letter do not differ significantly (P = 0.05). | | | | |

As seen from the data in table 5, the use of encapsulated trifludimoxazin resulted in a significant decrease in the level of injury of ZEAMD compared to the SC trifludimoxazin formulation allowing for the potential application after ZEAMD has emerged. The level of ZEAMD injury remains low between the 12.5 and 25 g ai/ha application rate and slightly higher at the 50 g ai/ha rate, but still lower than the standard SC treatment. This decrease in crop injury with post emergence trifludimoxazin CS applications and the potential for higher application rates could be used to take advantage of the residual properties of trifludimoxazin.

### Example 9

### Soybean Post emergence Crop Safety Comparison of Trifludimoxazin SC versus CS Formulations (Greenhouse)

Seedlings of soybean (*Glycine max,* GLXMA) were treated with post emergence applications of either trifludimoxazin SC (Vulcarus) or one of three trifludimoxazin CS obtained in examples 1 to 3 at 12.5, 25 or 50 g ai/ha when they were at the V2 (2 trifoliate) stage. All trifludimoxazin SC treatments included 1% (v/v) methylated seed oil surfactant (MES-100TM, Drexel Chemical) and all trifludimoxazin CS treatments included 0.25% (v/v) nonionic surfactant (Induce^{®}, Helena^{®}). Plants were placed in a completely randomized design with four replications per treatment within a greenhouse. Percent injury data was collected 7 days after treatment (DAT). The results are summarized in table 5.

**(Table 6) Demonstration of enhanced soybean crop safety to post emergence trifludimoxazin applications with encapsulated trifludimoxazin (Greenhouse).**

| * Means followed by the same letter do no | | | | | |
|---|---|---|---|---|---|
| **Soybean Tolerance to Tirexor CS POST (greenhouse trial)** | | | | | |
| | | | | **GLXMA** | |
| | | | | **PHYTOX** | |
| **Product Name** | **Rate g a/ha** | **Rate fl oz/A** | **Growth Stage** | **7 DAT** | ***** |
| CHECK | | | V2 | **0** | **g** |
| Trifludimoxazin SC + MSO | 12.5 | 0.343 | V2 | **86** | **a** |
| Trifludimoxazin Example 3 + NIS | 12.5 | 1.32 | V2 | **4** | **fg** |
| Trifludimoxazin Example 2 + NIS | 12.5 | 1.32 | V2 | **6** | **efg** |
| Trifludimoxazin Example 1 + NIS | 12.5 | 1.32 | V2 | **7** | **efg** |
| | | | | | |
| Trifludimoxazin SC + MSO | 25 | 0.685 | V2 | **85** | **a** |
| Trifludimoxazin Example 3 + NIS | 25 | 2.64 | V2 | **8** | **d-g** |
| Trifludimoxazin Example 2 + NIS | 25 | 2.64 | V2 | **11** | **c-f** |
| Trifludimoxazin Example 1 + NIS | 25 | 2.64 | V2 | **14** | **cde** |
| | | | | | |
| Trifludimoxazin SC + MSO | 50 | 1.37 | V2 | **88** | **a** |
| Trifludimoxazin Example 3 + NIS | 50 | 5.27 | V2 | **17** | **cd** |
| Trifludimoxazin Example 2 + NIS | 50 | 5.27 | V2 | **19** | **bc** |
| Trifludimoxazin Example 1 + NIS | 50 | 5.27 | V2 | **28** | **b** |

| | | | | | |
|---|---|---|---|---|---|
| Means followed by the same letter do not differ significantly (P = 0.05). | | | | | |

As seen from the data in table 6, the use of encapsulated trifludimoxazin resulted in a significant decrease in the level of injury of GLXMA compared to the SC trifludimoxazin formulation allowing for the potential application after GLXMA has emerged. The level of injury remains low across the CS application rates thus allowing for higher application rates to take advantage of the residual properties of trifludimoxazin.

### Example 10

### Soybean Pre emergence Crop Safety Comparison of Trifludimoxazin SC versus CS Formulations (Field)

A field consisting of silty loam soil (1.4% organic matter; pH 6.6; CEC 12.6) and used for conventional cultivation near Dyersburg, TN was planted with two soybean (Glycine max) varieties (CZ 4770X and CZ LLGT27 4539). After planting the field was treated with pre emergence applications of either trifludimoxazin SC (Vulcarus) or one of three trifludimoxazin CS obtained in examples 1 to 3 at 12.5, 25, 50 or 100 g ai/ha. After application a total of 2.54 cm of water from natural rainfall occurred to activate/incorporate the herbicide into the plots. Plots were 1.8 m x 7.6 m and located in a completely randomized design with three replications per treatment. Percent injury data was collected 14 days after treatment (DAT). The results are summarized in table 6.

**(Table 7) Demonstration of enhanced soybean crop safety to pre-emergence trifludimoxazin applications with encapsulated trifludimoxazin (Field).**

| **Soybean Tolerance to Tirexor CS PRE (field trial)** | | | | | | | |
|---|---|---|---|---|---|---|---|
| | | | **GLXMA variety 1** | | | **GLXMA variety 2** | |
| | | | **PHYTOX** | | | **PHYTOX** | |
| Treatment | Rate g ai/ha | Rate fl oz/A | **14 DAT** | ***** | | **14 DAT** | ***** |
| CHECK | | | **0** | **c** | | **0** | **c** |
| Trifludimoxazin SC | 12.5 | 0.343 | **0** | **c** | | **2** | **bc** |
| Trifludimoxazin Example 3 | 12.5 | 1.32 | **0** | **c** | | **2** | **bc** |
| Trifludimoxazin Example 2 | 12.5 | 1.32 | **0** | **c** | | **0** | **c** |
| Trifludimoxazin Example 1 | 12.5 | 1.32 | **1** | **c** | | **0** | **c** |
| | | | | | | | |
| Trifludimoxazin SC | 25 | 0.685 | **1** | **c** | | **1** | **c** |
| Trifludimoxazin Example 3 | 25 | 2.64 | **0** | **c** | | **0** | **c** |
| Trifludimoxazin Example 2 | 25 | 2.64 | **0** | **c** | | **0** | **c** |
| Trifludimoxazin Example 1 | 25 | 2.64 | **1** | **c** | | **1** | **c** |
| | | | | | | | |
| Trifludimoxazin SC | 50 | 1.37 | **46** | **ab** | | **68** | **a** |
| Trifludimoxazin Example 3 | 50 | 5.27 | **0** | **c** | | **0** | **c** |
| Trifludimoxazin Example 2 | 50 | 5.27 | **0** | **c** | | **0** | **c** |
| Trifludimoxazin Example 1 | 50 | 5.27 | **0** | **c** | | **15** | **ab** |
| | | | | | | | |
| Trifludimoxazin SC | 100 | 2.74 | **95** | **a** | | **92** | **a** |
| Trifludimoxazin Example 3 | 100 | 10.54 | **3** | **c** | | **0** | **c** |
| Trifludimoxazin Example 2 | 100 | 10.54 | **0** | **c** | | **0** | **c** |
| Trifludimoxazin Example 1 | 100 | 10.54 | **14** | **b** | | **42** | **a** |

| | | | | | | | |
|---|---|---|---|---|---|---|---|
| * Means followed by the same letter do not differ significantly (P = 0.05). | | | | | | | |

As seen from the data in table 7, the three encapsulated trifludimoxazin formulations reduced the GLXMA injury compared to the standard trifludimoxazin SC formulation. At the 50 and 100 g ai/ha application rates there was a significant reduction in GLXMA injury from two of the encapsulated trifludimoxazin formulations demonstrating improved crop safety with elevated application rates.

### Example 11

### Soybean Post emergence Crop Safety Comparison of Trifludimoxazin SC versus CS Formulations (Field)

Field grown soybean plants (*Glycine max,* GLXMA) were treated with post emergence applications of either trifludimoxazin SC (Vulcarus) or one of three trifludimoxazin CS obtained in examples 1 to 3 at 12.5, 25 or 50 g ai/ha when they were at the V4-5 (4-5 trifoliate) stage. All trifludimoxazin SC treatments included 1% (v/v) methylated seed oil surfactant (MES-100TM, Drexel Chemical) and all trifludimoxazin CS treatments included 0.25% (v/v) nonionic surfactant (Induce^{®}, Helena^{®}). Plots were 1.8 m x 13.1 m and located in a completely randomized design with three replications per treatment. Percent injury data was collected 9 days after treatment (DAT). The results are summarized in table 8.

**(Table 8) Demonstration of enhanced soybean crop safety to post emergence trifludimoxazin applications with encapsulated trifludimoxazin (Field).**

| **Soybean Tolerance to Tirexor CS POST (field trial)** | | | | |
|---|---|---|---|---|
| | | | **GLXMA** | |
| | | | **PHYTOX** | |
| Treatment | Rate g ai/ha | Rate fl oz/A | **8 DAT** | ***** |
| CHECK | | | **0** | **c** |
| Trifludimoxazin SC + MSO | 12.5 | 0.343 | **47** | **a** |
| Trifludimoxazin Example 3 + NIS | 12.5 | 1.32 | **5** | **bc** |
| Trifludimoxazin Example 2 + NIS | 12.5 | 1.32 | **0** | **c** |
| Trifludimoxazin Example 1 + NIS | 12.5 | 1.32 | **2** | **bc** |
| | | | | |
| Trifludimoxazin SC + MSO | 25 | 0.685 | **50** | **a** |
| Trifludimoxazin Example 3 + NIS | 25 | 2.64 | **2** | **bc** |
| Trifludimoxazin Example 2 + | 25 | 2.64 | **3** | **bc** |
| NIS | | | | |
| Trifludimoxazin Example 1 + NIS | 25 | 2.64 | **7** | **bc** |
| | | | | |
| Trifludimoxazin SC + MSO | 50 | 1.37 | **58** | **a** |
| Trifludimoxazin Example 3 + NIS | 50 | 5.27 | **5** | **bc** |
| Trifludimoxazin Example 2 + NIS | 50 | 5.27 | **5** | **bc** |
| Trifludimoxazin Example 1 + NIS | 50 | 5.27 | **13** | **b** |

| | | | | |
|---|---|---|---|---|
| * Means followed by the same letter do not differ significantly (P = 0.05). | | | | |

As seen from the data in table 8, the use of encapsulated trifludimoxazin resulted in a significant decrease in the level of injury of GLXMA compared to the SC trifludimoxazin formulation allowing for the potential application after GLXMA has emerged. The level of injury remains low across the CS herbicide application rates thus allowing for higher application rates to take advantage of the residual properties of trifludimoxazin.

## Claims

1. A microparticle composition comprising trifludimoxazin, wherein trifludimoxazin is present in the form of microparticles, which comprise solid trifludimoxazin, which is surrounded or embedded by an aminoplast polymer, which is a polycondensation product of one or more amino compounds and one or more aldehydes.

2. The composition of claim 1, wherein the aminoplast polymer is selected from the groups consisting of melamine formaldehyde resins and urea formaldehyde resins.

3. The composition of any one of claims 1 or 2, wherein the amount of aminoplast polymer in the microparticle composition is from 0.5 to 40% by weight, in particular from 1 to 35% by weight and especially from 5 to 25%by weight, based on the total weight of aminoplast polymer and trifludimoxazin.

4. The composition of any one of claims 1 to 3, wherein the microparticles have a weight average particle diameter d50 in the range from 1 to 25 µm, as determined by dynamic light scattering of an aqueous dispersion of the microcapsules.

5. The composition of any one of claims 1 to 4, wherein the microparticles comprise less than 10% by weight of particles having a particle diameter of more than 50 µm, as determined by dynamic light scattering of an aqueous dispersion of the microcapsules.

6. The composition of any one of claims 1 to 5, which contain at least one anionic polymeric surfactant having a plurality of sulfate or sulfonate groups.

7. The composition of claim 6, where the polymeric surfactant is a homo- or copolymer of a (meth)acrylate monomer or a (meth)acrylamide monomer having a sulfonic acid group.

8. The composition of any one of claims 6 to 7, comprising at least one lignin based sulfonic acid, such as lignosulfonic acid, ethoxylated lignosulfonic acid or oxidized lignins, wherein said lignosulfonic acid has an average molar weight MW of at least 10,000 Da.

9. The composition of any one of claims 1 to 8, further containing at alkyl sulfate like lauryl sulfate.

10. The composition of any one of claims 1 to 9, which is an aqueous suspension of the microparticles.

11. The composition of any one of claims 1 to 10, which is solid composition of the microparticles.

12. A method for producing the composition of any one of claims 1 to 11 which comprises the following steps:
i) providing an aqueous suspension or dispersion of solid trifludimoxazin particles;
ii) adding an aminoplast pre-condensate to the aqueous suspension;
iii) effecting the polycondensation of the aminoplast pre-condensate.

13. The method of any one of claims 12, wherein the amount of aminoplast pre-condensate added in step ii) is in the range 0.5 to 40% by weight, in particular from 1 to 35% by weight and especially from 5 to 25% by weight, based on the total amount of trifludimoxazin and aminoplast pre-condensate and calculated as solid organic matter.

14. The method of any one of claims 12 to 13, where the polycondensation of the aminoplast pre-condensate is initiated in the presence of at least one anionic polymeric surfactant having a plurality of sulfate or sulfonate groups, in particular homo- or copolymer of a (meth)acrylate monomer or (meth)acrylamide monomer having a sulfonic acid group, prior to the addition of the aminoplast precondensate in step ii).

15. The use of a microparticle composition of any one of claims 1 to 11 or of compositions prepared according to any of claims 12 to 14 for controlling undesired vegetation.

16. A method of controlling undesired vegetation, wherein a microparticle composition of any one of claims 1 to 11 or of compositions prepared according to any of claims 12 to 14 is allowed to act on plants, their environment
and/or on seeds.
